(19) **Europäisches Patentamt / European Patent Office / Office européen des brevets**

(11) **EP 3 788 832 B1**

(12) # FASCICULE DE BREVET EUROPEEN

(45) Date de publication et mention de la délivrance du brevet:
**07.06.2023 Bulletin 2023/23**

(21) Numéro de dépôt: **19720636.0**

(22) Date de dépôt: **02.05.2019**

(51) Classification Internationale des Brevets (IPC):
**H04W 74/08** *(2009.01)* **H04W 84/06** *(2009.01)*
**H04B 7/185** *(2006.01)*

(52) Classification Coopérative des Brevets (CPC):
**H04W 74/0841; H04B 7/18517;** H04B 7/18582;
H04W 84/06

(86) Numéro de dépôt international:
**PCT/EP2019/061181**

(87) Numéro de publication internationale:
**WO 2019/211351 (07.11.2019 Gazette 2019/45)**

(54) **PROCÉDÉ ET SYSTÈME DE TRANSMISSION DE PAQUETS DE DONNÉES À TRAVERS UN CANAL DE TRANSMISSION (RA) A ACCÈS ALÉATOIRE**

VERFAHREN UND SYSTEM ZUR ÜBERTRAGUNG VON DATENPAKETEN ÜBER EINEN ÜBERTRAGUNGSKANAL MIT WAHLFREIEM ZUGRIFF (RA)

METHOD AND SYSTEM FOR TRANSMITTING DATA PACKETS VIA A RANDOM ACCESS (RA) TRANSMISSION CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2018 FR 1800424**

(43) Date de publication de la demande:
**10.03.2021 Bulletin 2021/10**

(73) Titulaires:
- **THALES**
  **92400 Courbevoie (FR)**
- **Institut Supérieur de l'Aéronautique et de l'Espace**
  **31055 Toulouse Cedex (FR)**
- **Institut National Polytechnique de Toulouse**
  **31029 Toulouse Cedex 4 (FR)**
- **Centre National de la Recherche Scientifique**
  **75016 Paris (FR)**

(72) Inventeurs:
- **ZAMOUM, Selma**
  **31500 Toulouse (FR)**
- **GINESTE, Mathieu**
  **31100 Toulouse (FR)**
- **LACAN, Jérôme**
  **31055 Toulouse Cedex 4 (FR)**

- **BOUCHERET, Marie-Laure**
  **31071 Toulouse Cedex 7 (FR)**
- **DUPE, Jean-Baptiste**
  **31400 Toulouse (FR)**

(74) Mandataire: **Atout PI Laplace**
**Immeuble "Visium"**
**22, avenue Aristide Briand**
**94117 Arcueil Cedex (FR)**

(56) Documents cités:
- **BUI HUYEN-CHI ET AL: "A Multi-Replica Decoding Technique for Contention Resolution Diversity Slotted Aloha", 2015 IEEE 82ND VEHICULAR TECHNOLOGY CONFERENCE (VTC2015-FALL), IEEE, 6 septembre 2015 (2015-09-06), pages 1-5, XP032856979, DOI: 10.1109/VTCFALL.2015.7390798**
- **ZIDANE KARINE ET AL: "Enhancement of MARSALA random access with coding schemes, power distributions and maximum ratio combining", 2016 8TH ADVANCED SATELLITE MULTIMEDIA SYSTEMS CONFERENCE AND THE 14TH SIGNAL PROCESSING FOR SPACE COMMUNICATIONS WORKSHOP (ASMS/SPSC), IEEE, 5 septembre 2016 (2016-09-05), pages 1-8, XP032983786, DOI: 10.1109/ASMS-SPSC.2016.7601533**

**(Cont. page suivante)**

- **BOYD CHRISTOPHER ET AL: "Combinatorial code designs for ultra-reliable IoT random access", 2017 IEEE 28TH ANNUAL INTERNATIONAL SYMPOSIUM ON PERSONAL, INDOOR, AND MOBILE RADIO COMMUNICATIONS (PIMRC), IEEE, 8 octobre 2017 (2017-10-08), pages 1-5, XP033321679, DOI: 10.1109/PIMRC.2017.8292784 ISBN: 978-1-5386-3529-2 [extrait le 2018-02-14]**
- **CASINI E ET AL: "Contention Resolution Diversity Slotted ALOHA (CRDSA): An Enhanced Random Access Schemefor Satellite Access Packet Networks", IEEE TRANSACTIONS ON WIRELESS COMMUNICATIONS, IEEE SERVICE CENTER, PISCATAWAY, NJ, US, vol. 6, no. 4, 1 avril 2007 (2007-04-01), pages 1408-1419, XP011383389, ISSN: 1536-1276, DOI: 10.1109/TWC.2007.348337**
- **ZAMOUM SELMA ET AL: "Shared Position Technique for Interfered Random Transmissions in Satellite Communications", 2018 9TH ADVANCED SATELLITE MULTIMEDIA SYSTEMS CONFERENCE AND THE 15TH SIGNAL PROCESSING FOR SPACE COMMUNICATIONS WORKSHOP (ASMS/SPSC), IEEE, 10 septembre 2018 (2018-09-10), pages 1-8, XP033430991, DOI: 10.1109/ASMS-SPSC.2018.8510732**

**Description**

La présente invention concerne un procédé et un système de transmission de paquets de données à travers un canal de transmission aléatoire RA (en anglais Random Access), partagé par une pluralité d'utilisateurs et utilisant un protocole de type ALOHA ou ses dérivés.

En particulier, l'invention vise à résoudre en large partie les conflits d'accès qui se vérifient lorsque deux terminaux utilisateurs ou plus cherchent à transmettre simultanément à travers ledit canal aléatoire RA.

L'invention s'inscrit par exemple dans le contexte d'une voie retour par satellite d'un système à accès multiple, i.e. multiutilisateurs, défini dans le standard DVB-RCS2 (en anglais Digital Video Broadcasting - Return Chanel via Satellite). La bande de fréquence utilisé sur cette voie retour est divisée en deux parties, une première partie pour un accès dédié et une deuxième partie pour un accès aléatoire. De manière générale, il peut être supposé qu'à chaque passerelle d'une pluralité de passerelles ou plateformes d'accès GW (en anglais GateWays), formant l'interface entre le réseau terrestre et le réseau satellitaire, sont rattachés un nombre $N_U$ d'abonnés ou de terminaux utilisateurs qui émettent sur une même fréquence. Ce nombre $N_U$ dépend de la capacité allouée à chaque passerelle GW et de la capacité de terminaux utilisateurs en service dans le système de communication qui est distribuée sur les passerelles GW, et ce nombre $N_U$ varie selon l'application utilisée.

Par la suite, les traitements du procédé décrits ci-dessous se rapportent à un seul canal de transmission à accès aléatoire (RA) sur une seule fréquence et peuvent s'adresser à deux modes d'accès aléatoires différents, un premier mode d'accès synchrone ou un deuxième mode d'accès asynchrone.

Dans le premier mode d'accès synchrone qui est le mode d'accès préféré, les transmissions effectuées par les terminaux utilisateurs rattachés à une même passerelle sont faites sur des trames divisées chacune en $N_S$ tranches temporelles, également désignées par segments temporels ou « time slots » en anglais. Chaque terminal utilisateur va envoyer dans le système de transmission un nombre prédéterminé $N_R$, supérieur ou égal à 2, de fois le même paquet sur une même trame ayant un nombre $N_S$ prédéterminé de tranches temporelles sous la forme de $N_R$ répliques contenues dans $N_R$ tranches temporelles différentes, et doit attendre la prochaine trame pour transmettre un autre paquet. Les terminaux utilisateurs sont synchronisés entre eux et reçoivent au fur et à mesure des tables de synchronisation.

De manière différente, dans le deuxième mode d'accès asynchrone, à chaque terminal utilisateur lui est allouée une trame virtuelle sur laquelle ledit terminal transmet les $N_R$ répliques du même paquet à la station de réception sans aucune synchronisation entre les différentes trames virtuelles.

Dans les deux modes d'accès synchrone et asynchrone, la station de réception qui peut être le satellite ou la passerelle d'accès GW au réseau terrestre met en oeuvre un processus de suppression successive des interférences SIC (en anglais « Successive Interference Cancellation ») qui permet de supprimer toutes les répliques du paquet de la trame une fois qu'au moins une des $N_R$ répliques a été démodulée et décodée correctement.

Un des problèmes à résoudre dans l'utilisation d'un procédé de transmission de paquets de données à travers un canal de transmission aléatoire RA, partagé par une pluralité d'utilisateurs et utilisant un protocole de type « ALOHA » ou ses dérivés, est de pouvoir, au niveau d'un récepteur, recevoir une pluralité de signaux arrivant simultanément et provenant de plusieurs sources différentes. En effet, cette pluralité de signaux arrivant simultanément est, du point de vue de chaque signal, source d'interférences qui peuvent entraîner la perte de certaines ou de toutes les données transportées. Ces pertes de données sont les principales causes de la réduction des débits qui peut être observée dans ce type de canal de transmission.

Pour résoudre ce problème, un protocole d'accès aléatoire sur un canal de type ALOHA à segmentation temporelle avec diversité et résolution des confits d'accès CRDSA (en anglais Contention Resolution Diversity Slotted ALOHA), a été proposé et décrit dans le brevet EP 1 686 746 B1.

Ce protocole CRDSA qui utilise un mode d'accès synchrone intègre l'envoi de plusieurs répliques d'un même paquet de données avec la suppression successive des interférences SIC afin que chaque paquet ait une plus grande probabilité d'être décodé dans le mode synchrone.

Plus précisément, le protocole CRDSA consiste à transmettre dans différentes tranches temporelles, plusieurs répliques d'un même paquet de données de façon aléatoire sur le canal de transmission aléatoire. Chacune des répliques contient une information de signalisation indiquant la position respective de la ou des autres répliques du même paquet. A la réception du signal correspondant, un décodeur parcourt toute la trame pour essayer de décoder une ou plusieurs répliques d'un paquet donné. Une réplique est décodable selon le protocole CRDSA si et seulement si elle n'est pas en collision avec d'autres répliques dans une même tranche temporelle. Dès qu'une réplique est décodée, le signal correspondant est généré. Puis, grâce à l'utilisation de l'information de signalisation contenue dans le signal généré, il est possible de déterminer la position des autres répliques du même paquet dans la trame.

Ensuite, la réplique décodée permet de régénérer un signal qui peut être soustrait du signal reçu dans les tranches temporelles des répliques interférées correspondant au même paquet de manière à libérer le signal global des effets des interférences correspondant aux répliques interférées. Ce processus est itératif jusqu'à ce que le récepteur arrive à décoder un paquet en cours de traitement, ou bien arrive à une situation de blocage dans laquelle plus aucun autre décodage n'est possible, auquel cas le processus s'arrête sur un échec.

Indépendamment du codage et de la modulation utilisés, cette situation de blocage met en évidence la faiblesse de ce procédé CRDSA classique ou d'un protocole en mode asynchrone ACRDA classique correspondant vis-à-vis du processus de décodage mis en oeuvre. Cette faiblesse réside dans le fait que le décodage n'est possible que si et seulement si une réplique d'un paquet n'est pas en collision avec d'autres répliques dans une tranche temporelle. Or, il peut arriver des situations où l'ensemble des tranches temporelles de la trame comporte une ou plusieurs collisions rendant ainsi inopérant le procédé de décodage de ce protocole CRDSA classique.

Afin de pallier cette faiblesse, un procédé de réception et de décodage améliorant le procédé de décodage du protocole CRDSA a été proposé et décrit dans le brevet EP 3 028 396 B1 et dans l'article "A Multi-Replica Decoding Technique for Contention Resolution Diversity Slotted Aloha" de Bui Huyen-Chi et al. dans les actes de la 82ème Vehicular Technology Conférence de l'IEEE 2015. Ce protocole de réception et de décodage utilise un algorithme connu sous l'acronyme MARSALA (en anglais « Multi-replicA decoding using corRelation baSed locALizAtion »). Suivant le brevet EP 3 028 396 B1 et de manière connue, le procédé de réception et de décodage qui utilise l'algorithme MARSALA vient débloquer le procédé de réception et de décodage classique du protocole CRDSA lorsqu'aucun décodage n'est possible. Cette étape de réception et de décodage de type MARSALA comporte une étape de localisation des répliques dans les tranches temporelles d'une même trame en calculant des corrélations entre les signaux respectifs en bande de base contenus dans des tranches temporelles différentes sur toute la trame. Puis, une fois les répliques localisées, les paramètres du canal de transmission tels que le décalage en temps, en fréquence ou en phase, sont corrigés pour ensuite combiner les répliques du paquet entre elles d'une façon cohérente. C'est cette combinaison qui permet d'avoir un rapport signal sur bruit plus élevé que celui observé dans le cas d'une utilisation limitée au procédé de réception et de décodage suivant le seul protocole CRDSA et obtenir ainsi une plus grande probabilité de décodage. Par exemple, la combinaison ou sommation des répliques permet de quadrupler la puissance du paquet d'intérêt dans le cas d'un protocole CRDSA à deux répliques pour une plus haute probabilité de décodage.

Il est ainsi possible en utilisant l'algorithme MARSALA de diminuer le taux de perte de paquets qui transitent sur un canal de transmission aléatoire RA à segmentation temporelle, ce qui permet d'augmenter la performance en termes de débit du système de communication.

Toutefois, cet algorithme requiert un nombre considérable de corrélations inter-tranches en bande de base de localisation des répliques, et en conséquence un ajout de complexité de traitement, lié au calcul de ce grand nombre de corrélations qui servent à localiser les répliques de ces paquets et corriger les paramètres du canal afin de les combiner avant de tenter le décodage.

Un premier problème technique que résout l'invention est de proposer un procédé et un système de transmission de paquets de données à plusieurs répliques sur un canal de transmission aléatoire RA dans lesquels un procédé de traitement et de décodage du signal reçu, consécutif à un blocage du procédé classique de décodage du protocole CRDSA, permet le décodage d'un ou plusieurs paquets de données collisionnés, par une combinaison pertinente de certaines répliques d'un même paquet et la suppression de ces répliques du signal reçu dans les tranches temporelles correspondantes, et permet une diminution de la complexité dudit traitement en termes du nombre de corrélations de localisation en bande de base des répliques entre le signal contenu dans une tranche temporelle de référence et les signaux contenus dans des tranches temporelles différentes de la même trame.

Le deuxième problème technique que résout l'invention est de proposer un procédé et un système de transmission qui résout le premier problème technique, et qui augmente l'efficacité de résolution des conflits de répliques entre des paquets différents, i.e. diminue également le taux de perte de paquets dans le canal de transmission RA.

A cet effet, l'invention a pour objet un procédé de transmission de paquets de données à travers un canal de transmission (RA) à accès aléatoire, partagé par une pluralité de terminaux utilisateurs, le procédé de transmission étant mis en oeuvre par un système de communications comprenant : une station de réception ; et une pluralité d'au moins deux terminaux utilisateurs activement connectés à la station de réception, et un canal de transmission à accès aléatoire (RA) depuis la pluralité des terminaux utilisateurs jusqu'à la station de réception, utilisant un protocole d'accès aléatoire à diversité temporelle avec résolution de conflit inter-paquets. Le procédé de transmission est caractérisé en ce qu'il comprend les étapes consistant en ce que :

.- dans une première étape préalable, une fonction F d'attribution et de distribution de ressources de transmission F(u) partagées par la pluralité (8) des terminaux utilisateurs $\underline{u}$ connectés à la station de réception, définie par un graphe {(u, F(u)} dans lequel $\underline{u}$ désigne un indice d'identification et de parcours des terminaux utilisateurs de la pluralité et la ressource de transmission F(u) associé à un terminal utilisateur $\underline{u}$ inclut des positions d'un nombre entier $N_R$, supérieur ou égal à 2, de répliques d'un paquet à émettre par le terminal u, prise parmi des rangs de tranches temporelles d'une trame temporelle d'émission, et une séquence d'acquisition à insérer dans chacune des $N_R$ répliques, prise dans une famille de séquences binaire pseudo-aléatoires quasi-orthogonales, est déterminée ; puis à chaque terminal utilisateur u connecté de la pluralité est fournie la composante associée du graphe {(u, F(u)} tandis que la totalité du graphe est rendu disponible à bord de la station de réception ; puis

.- dans une deuxième étape, chaque terminal utilisateur u de la pluralité génère de manière aléatoire $N_R$ répliques d'un paquet à transmettre dans les tranches temporelles de la trame émission ayant les positions temporelles attribuées par la composante de graphe dudit terminal et dans lesquelles est insérée la séquence binaire d'acquisition attribuée par la composante de graphe dudit terminal ; et

.- dans une troisième étape de décodage des paquets reçus, le graphe {(u, F(u)} de la fonction d'attribution et de distribution est exploité par la station de réception pour combiner les signaux ayant un même signal d'acquisition dans les $N_R$ positions possibles de répliques d'un même paquet, et pour minimiser, voire annuler, le nombre de corrélations de localisation de répliques, requises entre des signaux complexes bande de base de données de tranches temporelles différentes, lors de la résolution de conflits d'interférences entre paquets non résolubles par le processus de décodage classique du protocole d'accès aléatoire diversité temporelle avec résolution de conflit inter-paquets.

Suivant des modes particuliers de réalisation, le procédé de transmission comprend l'une ou plusieurs des caractéristiques suivantes, prises isolément ou en combinaison :

.- la famille de séquences binaires pseudo-aléatoires quasi-orthogonales est choisie parmi les codes utilisés par les systèmes à accès multiples par répartition de code, tels que les codes de Gold et les codes de Gold étendus en longueur ; et/ou la séquence binaire d'acquisition est située en tête comme préambule ou à l'intérieur ou en queue de chaque réplique ; et/ou chaque réplique transmise comporte un ou plusieurs symboles de garde définissant un intervalle de garde ;

.- la deuxième étape comporte une sous-étape de codage de la réplique par un contrôle de redondance et/ou un codage de corrections des erreurs FEC, ladite sous-étape de codage étant effectuée avant l'insertion d'une séquence binaire d'acquisition ;

.- la deuxième étape comporte une sous-étape d'insertion d'information de signalisation, exécutée avant la sous-étape de codage de la réplique ;

.- le canal de transmission aléatoire, partagé par les terminaux utilisateurs, est un canal de transmission de voie retour sans fil et la station de réception est un satellite ou une passerelle de connexion à un réseau terrestre de communications ou une station d'un réseau terrestre de communications ;

.- la troisième étape de décodage comprend : une quatrième étape de récupération et de décodage de paquets utilisant un protocole de décodage classique CRDSA ou une cinquième étape de récupération et décodage de paquets utilisant un protocole ACRDA, la quatrième ou la cinquième étape étant exécutée après les première et deuxième étapes respectivement sur une trame physique actuelle de réception ou sur une fenêtre glissante englobant un certain nombre de trames virtuelles propres aux terminaux utilisateurs; et une sixième étape d'analyse et de traitement complémentaires pour décoder des paquets interférés non résolus par la quatrième ou la cinquième étape, la sixième étape étant déclenchée lorsqu'il existe au moins un paquet interféré de la trame non résolu lors de l'exécution de la quatrième ou cinquième étape ;

.- la quatrième étape de récupération et de décodage utilisant un protocole de décodage classique CRDSA comprend un deuxième ensemble de sous-étapes consistant à : identifier à l'intérieur d'un signal reçu, des répliques qui ne sont pas affectées par des collisions destructives avec des répliques d'autres paquets ; puis extraire de l'information contenue dans les répliques identifiées ; localiser temporellement la ou les autres répliques du même paquet en utilisant les informations des positions temporels des répliques fournis par les composantes du graphe {(u, R(u)} et/ou une information de signalisation extraite des répliques décodées et identifiées ; effacer en bande de base complexe ladite ou desdites autres répliques par un algorithme d'effacement d'interférence, lorsqu'elle ou elles sont affectées par des collisions destructives avec des répliques d'autres paquets ; et identifier d'autres paquets qui, après ladite sous-étape d'effacement, ne sont plus affectés par des collisions destructives et extraire de l'information qui y est contenue ;

.- la fonction F, désignée par $F_{PSR}$ suivant un premier mode de réalisation, est une fonction d'attribution et de distribution déterministe pseudo-aléatoire des vecteurs de positions des $N_R$ répliques des paquets au sein de la trame temporelle et des séquences d'acquisition associées aux paquets et chacune de leurs répliques qui dépendent des terminaux utilisateurs de la pluralité (8) via une graine d'entrée de la fonction $F_{PSR}$ qui dépend de manière représentative de l'identifiant de chaque terminal, la distribution des vecteurs des positions des $N_R$ répliques et des séquences d'acquisition de la fonction de distribution $F_{PSR}$ ayant un profil de distribution sensiblement uniforme sur l'ensemble de tous les vecteurs possibles de positions de $N_R$ répliques et de toutes les séquences d'acquisition possibles lorsque le nombre de terminaux utilisateur est suffisamment grand ;

.- pour chaque terminal utilisateur u, la graine x(u) associée au terminal utilisateur u est fixe temporellement et représente l'identifiant HID(u) du terminal u ; ou pour chaque terminal u, la graine x(u) associée au terminal utilisateur u est dynamique et varie à chaque trame, en utilisant notamment un algorithme représentatif des variations du produit de l'identifiant HID du terminal u et un identifiant FID de la trame représentatif de son rang temporel dans un ordre séquentiel de défilement de trames ;

.- la fonction $F_{PSR}$ de distribution déterministe pseudo-aléatoire est paramétrée par le nombre total $N_S$ de tranches temporelles par trame et le nombre total $N_P$ de séquences d'acquisition ;

.- la sixième étape comprend un troisième ensemble de sous-étapes consistant à : sélectionner de manière arbitraire ou suivant un critère prédéterminé une tranche temporelle de référence dans la trame en cours de traitement parmi les tranches temporelles pour lesquelles un conflit non résolu de paquets a été détecté ; puis choisir de manière arbitraire ou suivant un critère prédéterminé dans la tranche temporelle de référence sélectionnée une séquence d'acquisition détectée et choisie parmi une ou plusieurs séquences d'acquisition détectées dans ladite tranche temporelle de référence ; puis déterminer les positions dans la trame en cours de traitement des répliques possibles d'un même paquet associée à la séquence d'acquisition détectée et choisie à partir de toutes les positions des tranches temporelles de la trame dans lesquelles la séquence d'acquisition détectée et choisie a été détecté par corrélation courte et à partir du graphe $\{u ; F_{PSR}(u)\}$ ; puis calculer les corrélations de localisation de répliques possibles entre le signal bande base reçu dans la tranche temporelle de référence et les signaux bande des tranches temporelles ayant les positions déterminées dans la sous-étape de détermination des positions des répliques possibles ; puis déterminer les tranches temporelles des répliques du paquet de la tranche temporelle associée à la séquence d'acquisition détectée et choisie comme les tranches temporelles ayant une valeur de corrélation de localisation supérieur à une valeur de corrélation de localisation prédéterminée ; puis dans une sous-étape de combinaison, calculer la somme des signaux en bande de base des répliques localisées du paquet de la tranche temporelle associée à la séquence d'acquisition détectée et choisie ; puis démoduler et décoder la somme calculée lorsque la somme comprend un niveau de bruit situé au-dessous d'un seuil de bruit déterminé ; puis soustraire en bande de base du signal en cours de traitement le signal démodulé et décodé des répliques localisées du paquet de la tranche temporelle associée à la séquence d'acquisition détectée et choisie ;

.- la ou les séquences d'acquisition détectées sont déterminées en calculant des valeurs de pics de corrélations courtes en bande base entre les motifs de référence des séquences d'acquisition possibles attendues et le signal contenu dans la tranche temporelle de référence sélectionnée, et en sélectionnant comme séquences d'acquisition détectées les séquences d'acquisitions pour chacune desquelles un pic de corrélation présente une valeur, supérieure ou égale à un premier seuil de corrélation courte prédéterminé, ou la ou les séquences d'acquisition détectées sont déterminées en calculant une pluralité de valeurs de corrélations courtes en bande de base entre les motifs de référence des séquences d'acquisition possibles attendues dans la tranche temporelle de référence et les signaux contenus dans les tranches temporelles pour lesquelles l'utilisation des motifs de référence, attendus dans la tranche temporelle de référence, est possible en vertu du graphe $\{u ; F_{PSR}(u)\}$, et en sélectionnant comme séquences d'acquisition détectées les séquences d'acquisition pour chacune desquelles la somme des carrés des modules des valeurs de corrélation correspondant à un même motif de référence présente une valeur, supérieure ou égale à un deuxième seuil de corrélation courte prédéterminé ;

.- la détection par corrélation courte de la ou des séquences d'acquisition dans la tranche temporelle de référence est effectuée au cours du processus de décodage classique du protocole CRDSA peu avant son blocage et sa suspension ou dans une sous-étape intermédiaire de détection par corrélation courte, interposée entre les sous-étapes de la sélection d'une tranche temporelle de référence et de choix d'une séquence d'acquisition détectée et choisie ; et la détection par corrélation courte de la séquence détectée et choisie dans les tranches temporelles restantes de la trame temporelle en cours de traitement est effectuée au cours du processus de décodage classique du protocole CRDSA peu avant son blocage et sa suspension ou dans une sous-étape intermédiaire de détection par corrélation courte, interposée entre les sous-étapes entre les sous-étapes de la sélection d'une tranche temporelle de référence et de choix d'une séquence d'acquisition détecté et choisie ;

.- le procédé de transmission comprend en outre une sous-étape d'estimation des paramètres de fréquence, de temporisation, de phase et d'amplitude de chaque réplique localisée servant à calculer le signal somme en bande de base, la sous-étape d'estimation étant exécutée après la sous-étape de localisation des répliques ;

.- la fonction F d'attribution et de distribution de ressources, désignée par $F_{SMART}$ suivant un deuxième mode de réalisation, est une fonction d'attribution et de distribution déterministe « intelligente » des vecteurs de positions des $N_R$ répliques au sein de chaque trame parmi l'ensemble de tous les vecteurs possibles de positions de $N_R$ répliques dans l'ensemble des tranches temporelles de la trame et des séquences d'acquisition associées aux différentes répliques émises parmi toutes les séquences d'acquisition possibles, déterminée de sorte à minimiser, voire annuler, le nombre de boucles de données possibles dans lesquelles les terminaux utilisateurs connectés de la pluralité utilisent les mêmes positions de répliques ;

.- le graphe $\{(u, F_{SMART}(u)\}$ étant déterminé de sorte à faire correspondre à chaque séquence d'acquisition gj utilisée de l'ensemble des séquences d'acquisition $\{gj\}$, un ensemble Tj de terminaux utilisateurs Ujk et une pluralité de vecteurs Vjk(Pgj(1),...,Pgj($N_R$)) de positions de $N_R$ répliques différents entre eux par au moins une position ;

.- le nombre de répliques $N_R$ transmises par paquet est égal à deux, et le nombre de tranches temporelles par trame est un nombre pair, et le nombre $N_P$ de séquences d'acquisition gj de l'ensemble des séquences d'acquisitions {gj} est égal à la moitié du nombre $N_S$ de tranches temporelles par trame, j désignant un indice d'identification de la séquence d'acquisition variant de 0 à $N_P$ - 1 ; et le cardinal $N_U$ de la pluralité (8) des terminaux utilisateurs est égal au nombre maximum de terminaux utilisateurs n'utilisant que des détections basés wsur les séquences d'acquisition suivant la relation :

$$N_U = N_S * N_S/4$$

.- le nombre de répliques $N_R$ transmises par paquet est égal à deux, et le nombre de tranches temporelle $N_S$ pour chaque trame est une puissance de 2 qui s'écrit : $N_S = 2^{NL}$, $N_L$ désignant le nombre de niveaux pour des décalages circulaires, et le nombre $N_P$ de séquences d'acquisition gj de l'ensemble des séquences d'acquisitions {gj] est égal à la moitié du nombre $N_S$ de tranches temporelles par trame, j désignant un indice d'identification de la séquence d'acquisition variant de 0 à $N_P$ - 1 ; et le cardinal $N_U$ de la pluralité (8) des terminaux utilisateurs est égal au nombre maximum de terminaux utilisateurs n'utilisant que des détections basés sur les séquences d'acquisition suivant la relation :

$$N_U = N_S * (N_S - 1)/2$$

.- la sixième étape comprend un quatrième ensemble de sous-étapes consistant à : sélectionner de manière arbitraire ou suivant un critère prédéterminé une tranche temporelle de référence dans la trame en cours de traitement parmi les tranches temporelles pour lesquelles un conflit non résolu de paquets a été détecté ; puis choisir de manière arbitraire ou suivant un critère prédéterminé dans la tranche temporelle de référence sélectionnée une séquence d'acquisition détectée et choisie parmi une ou plusieurs séquences d'acquisition détectées dans ladite tranche temporelle de référence ; puis déterminer les positions dans la trame en cours de traitement des répliques possibles d'un même paquet associée à la séquence d'acquisition détectée et choisie à partir de toutes les positions des tranches temporelles de la trame dans lesquelles la séquence d'acquisition détectée et choisie a été détecté par corrélation courte et à partir du graphe {u ; $F_{SMART}$ (u)} ; puis parmi les tranches temporelles des répliques possibles d'un même paquet ayant la même séquence d'acquisition détectée et choisie, identifier une tranche temporelle n'ayant qu'une seule réplique associée à la séquence d'acquisition choisie, le terminal associé et les autres répliques associé correspondant au même paquet à l'aide du graphe{u ; $F_{SMART}$ (u)} ; puis dans une sous-étape de combinaison, calculer la somme des signaux en bande de base des répliques du terminal utilisateur identifié dont le paquet à décoder utilise la séquence d'acquisition détectée et choisie ; puis démoduler et décoder la somme calculée lorsque la somme comprend un niveau de bruit situé au-dessous d'un seuil de bruit déterminé ; puis soustraire en bande de base le signal démodulé et décodé des répliques de la somme du signal en cours de traitement dans les tranches temporelles associées respectivement aux répliques de la somme ;

.- la ou les séquences d'acquisition détectées sont déterminées en calculant des valeurs de pics de corrélations courtes en bande base entre les motifs de référence des séquences d'acquisition possibles attendues et le signal contenu dans la tranche temporelle de référence sélectionnée, et en sélectionnant comme séquences d'acquisition détectées les séquences d'acquisitions pour chacune desquelles un pic de corrélation présente une valeur, supérieure ou égale à un premier seuil de corrélation courte prédéterminé, ou la ou les séquences d'acquisition détectées sont déterminées en calculant une pluralité de valeurs de pics de corrélations courtes en bande de base entre les motifs de référence des séquences d'acquisition possibles attendues dans la tranche temporelle de référence et les signaux contenus dans les tranches temporelles pour lesquelles l'utilisation des motifs de référence, attendus dans la tranche temporelle de référence, est possible en vertu du graphe {u ; $F_{SMART}$ (u)}, et en sélectionnant comme séquences d'acquisition détectées les séquences d'acquisition pour chacune desquelles la somme des carrés des modules des valeurs de corrélation correspondant à un même motif de référence présente une valeur, supérieure ou égale à un deuxième seuil de corrélation courte prédéterminé ;

.- la détection par corrélation courte de la ou des séquences d'acquisition dans la tranche temporelle de référence est effectuée au cours du processus de décodage classique du protocole CRDSA peu avant son blocage et sa suspension ou dans une sous-étape intermédiaire de détection par corrélation courte, interposée entre les sous-étapes de sélection d'une tranche temporelle de référence et de choix d'une séquence d'acquisition détectée et choisie dans la tranche temporelle de référence sélectionnée ; et la détection par corrélation courte de la séquence détecté et choisie dans les tranches temporelles restantes de la trame temporelle en cours de traitement est effectuée au cours du processus de décodage classique du protocole CRDSA peu avant son blocage et sa suspension ou dans une sous-étape intermédiaire de détection par corrélation courte, interposée entre les sous-étapes de sélection d'une tranche temporelle de référence et de choix d'une séquence d'acquisition détectée et choisie dans la tranche temporelle de référence sélectionnée ;

.- la sixième étape comprend en outre une sous-étape d'estimation des paramètres de fréquence, de temporisation, de phase et d'amplitude de chaque réplique localisée servant à calculer le signal somme en bande de base, la sous-étape d'estimation étant exécutée après la sous-étape d'identification d'une tranche temporelle n'ayant qu'une seule réplique associée à la séquence d'acquisition choisie.

L'invention a également pour objet un système de communications pour transmettre des paquets de données à travers un canal de transmission (RA) à accès aléatoire, partagé par une pluralité de terminaux utilisateurs, tre des paquets de données à travers un canal de transmission (RA) à accès aléatoire, partagé par une pluralité de terminaux, comprenant : une station de réception ; et une pluralité d'au moins deux terminaux utilisateurs activement connectés à la station de réception, et un canal de transmission à accès aléatoire (RA) depuis la pluralité des terminaux utilisateurs jusqu'à la station de réception, utilisant un protocole d'accès aléatoire à diversité temporelle avec résolution de conflit inter-paquets. Le système de communication étant caractérisé en ce que :

.- la station de réception est configurée pour déterminer et/ou enregistrer, dans une première étape préalable, une fonction F d'attribution et de distribution de ressources de transmission F(u) partagées par la pluralité de terminaux utilisateurs $\underline{u}$ , connectés à la station de réception), définie par un graphe {(u, F(u)} dans lequel $\underline{u}$ délsigne un indice d'identification et de parcours des terminaux utilisateurs de la pluralité et la ressource de transmission F(u) associé à un terminal utilisateur u inclut des positions temporelles d'un nombre entier $N_R$, supérieur ou égal à 2, de répliques d'un paquet à émettre par le terminal u, prise parmi des rangs de tranches temporelles d'une trame temporelle d'émission, et une séquence d'acquisition à insérer dans chacune des $N_R$ répliques, prise dans une famille de séquences pseudo-aléatoires quasi-orthogonales ; et

.- chaque terminal utilisateur u connecté est configuré pour, dans une première étape, recevoir ou générer, la composante associée du graphe {(u, F(u)} ; puis dans une deuxième étape, générer de manière aléatoire $N_R$ répliques d'un paquet à transmettre dans les tranches temporelles de la trame émission ayant les positions temporelles attribuées par la composante de graphe dudit terminal et dans lesquelles est insérée la séquence binaire d'acquisition attribuée par la composante de graphe dudit terminal ; et

.- la station de réception est configurée pour, dans une troisième étape de décodage des paquets reçus, exploiter le graphe {(u, F(u)} de la fonction d'attribution et de distribution pour combiner les signaux ayant un même signal d'acquisition dans les $N_R$ positions possibles de répliques d'un même paquet , et pour minimiser, voire annuler, le nombre de corrélations de localisation de répliques, requises entre des signaux complexes bande de base de données de tranches temporelles différentes, lors de la résolution de conflits d'interférences entre paquets non résolubles par le processus de décodage classique du protocole d'accès aléatoire à diversité temporelle avec résolution de conflit inter-paquets.

Suivant des modes particuliers de réalisation, le système de communications comprend l'une ou plusieurs des caractéristiques suivantes, prises isolément ou en combinaison :

.- la fonction F, désignée par $F_{PSR}$ suivant un premier mode de réalisation, est une fonction d'attribution et de distribution déterministe pseudo-aléatoire des vecteurs de positions des $N_R$ répliques des paquets au sein de la trame temporelle et des séquences d'acquisition associées aux paquets et chacune de leurs répliques qui dépendent des terminaux utilisateurs de la pluralité (8) via une graine d'entrée de la fonction $F_{PSR}$ qui dépend de manière représentative de l'identifiant de chaque terminal, la distribution des vecteurs des positions des $N_R$ répliques et des séquences d'acquisition de la fonction de distribution $F_{PSR}$ ayant un profil de distribution sensiblement uniforme sur l'ensemble de tous les vecteurs possibles de positions de $N_R$ répliques et de toutes les séquences d'acquisition possibles lorsque le nombre de terminaux utilisateur est suffisamment grand ;

.- la fonction F d'attribution et de distribution de ressources, désignée par $F_{SMART}$ suivant un deuxième mode de réalisation, est une fonction d'attribution et de distribution déterministe « intelligente » des vecteurs de positions des $N_R$ répliques au sein de chaque trame parmi l'ensemble de tous les vecteurs possibles de positions de $N_R$ répliques dans l'ensemble des tranches temporelles de la trame et des séquences d'acquisition associées aux différentes répliques émises parmi toutes les séquences d'acquisition possibles, déterminée de sorte à minimiser, voire annuler, le nombre de boucles de données possibles dans lesquelles les terminaux utilisateurs connectés de la pluralité utilisent les mêmes positions de répliques.

L'invention sera mieux comprise à la lecture de la description de plusieurs formes de réalisation qui va suivre, donnée uniquement à titre d'exemple et faite en se référant aux dessins sur lesquels :

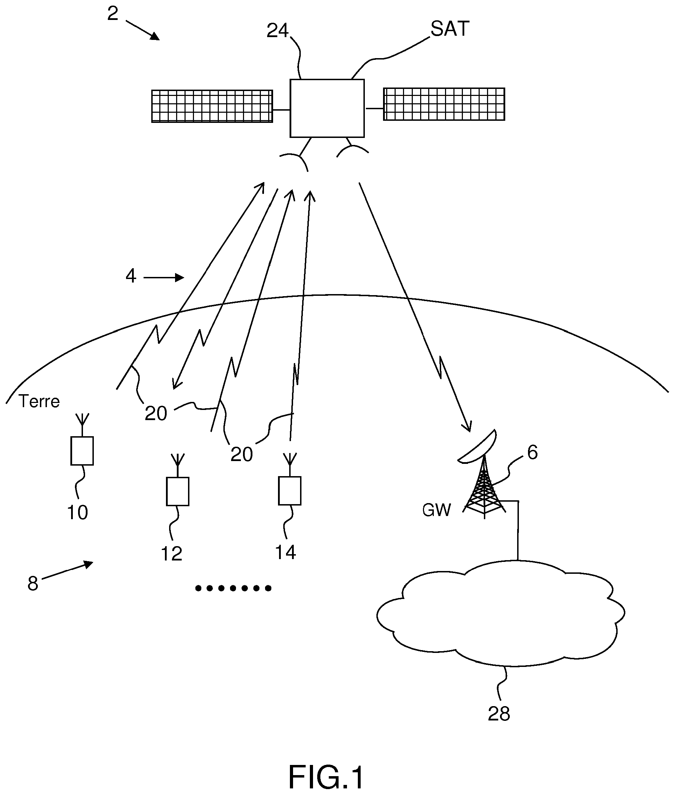

.- la Figure 1 est une vue d'un exemple selon l'invention de système de transmission de paquets de données à travers un canal de transmission (RA) à accès aléatoire, partagé par une pluralité de terminaux, ici un système spatial avec un canal de transmission aléatoire de voie retour ;

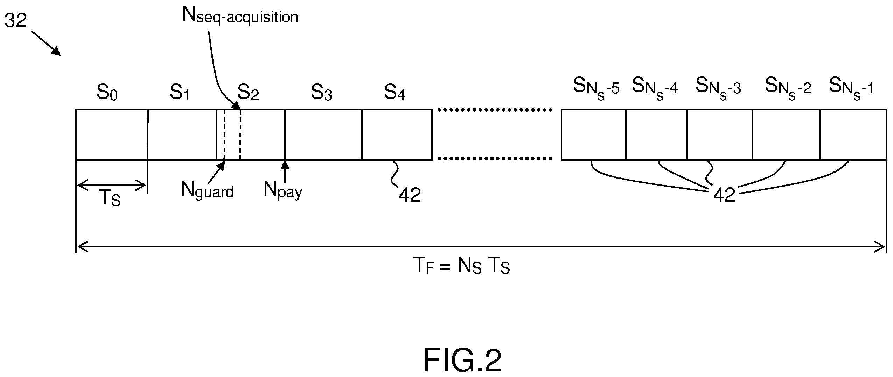

.- la Figure 2 est une vue de la structure générale d'une trame temporelle CRDSA utilisée par le protocole de transmission CRDSA classique ainsi par des système et procédé de transmission selon l'invention ;

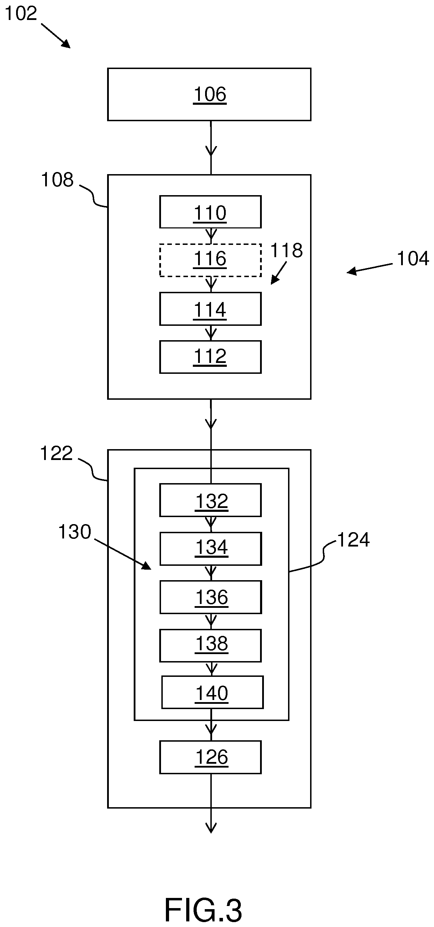

.- la Figure 3 est un ordinogramme général d'un procédé selon l'invention de transmission de paquets de données à travers un canal de transmission de voie retour à accès aléatoire (RA) , partagé par une pluralité de terminaux utilisateurs mis en oeuvre notamment par le système de communications de la Figure 1 ;

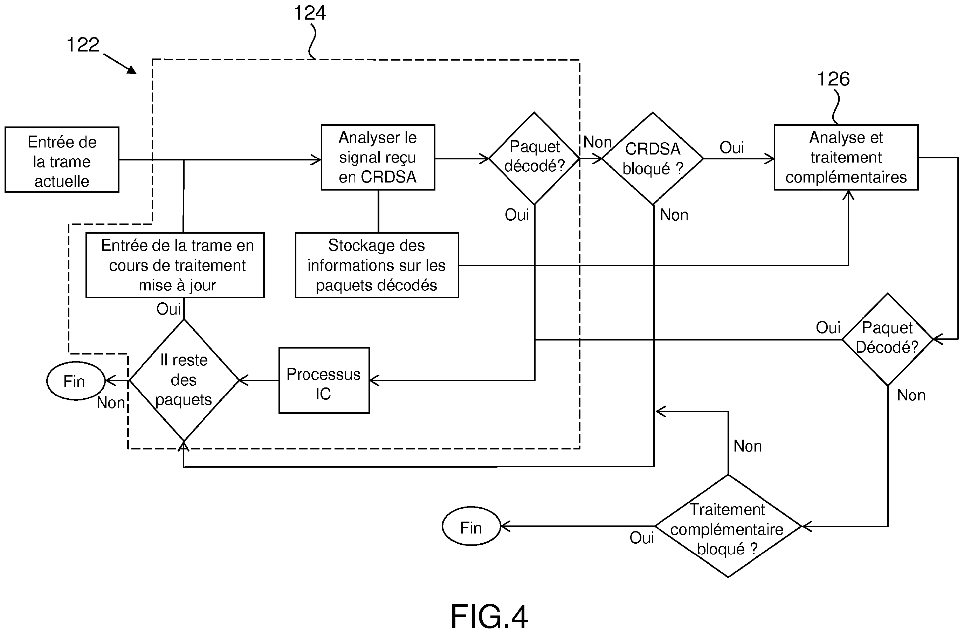

.- la Figure 4 est un ordinogramme détaillée de l'étape de réception et de décodage du procédé général de transmission selon l'invention décrit à la Figure 3 ;

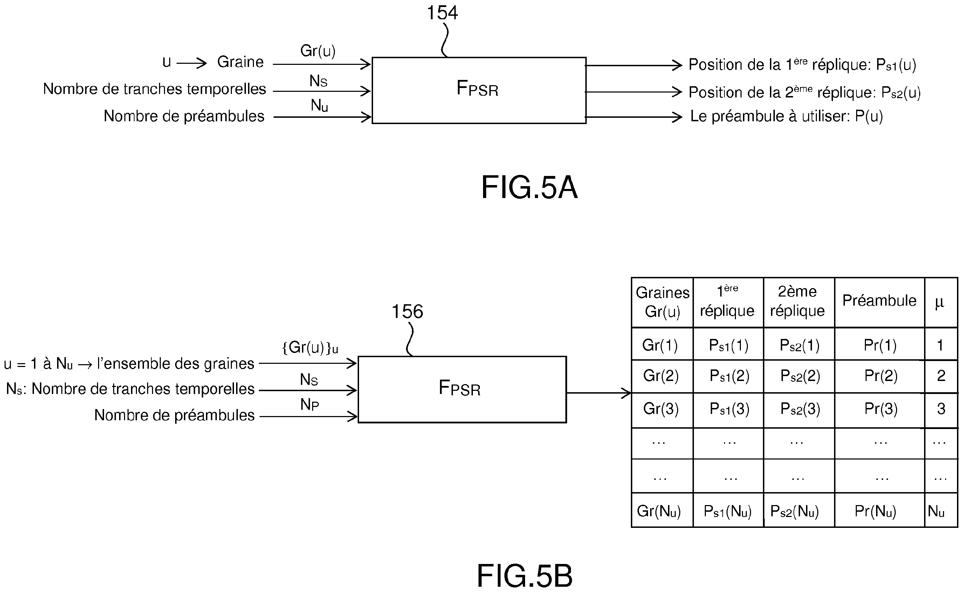

.- les Figures 5A et 5B sont les vues respectives au niveau émission et au niveau réception des moyens de mise en oeuvre du partage de la connaissance du graphe {u, $F_{PSR}$(u)} d'un premier mode de réalisation de la fonction de distribution des ressources, notée $F_{PSR}$ d'un premier mode de réalisation particulier du procédé de transmission selon l'invention de la Figure 2 ;

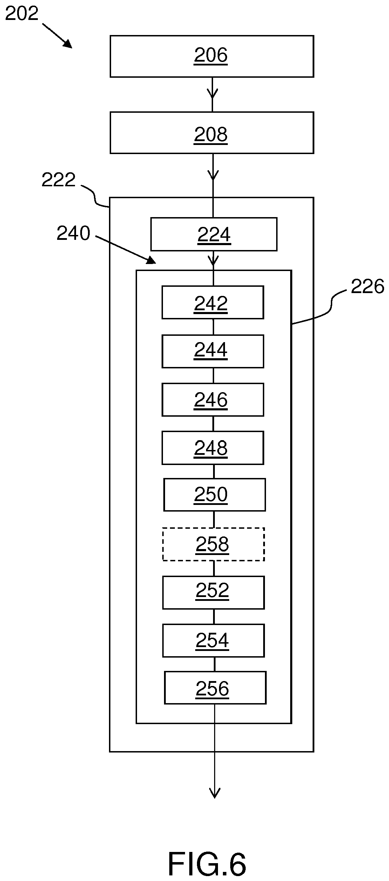

.- la Figure 6 est un ordinogramme de l'étape de traitement et de décodage de paquets collisionnés d'une trame temporelle, ladite étape de traitement succédant à un échec ou blocage de l'algorithme de décodage suivant le protocole CRDSA classique et correspondant à la première forme de réalisation de la fonction de distribution $F_{PSR}$ dont un exemple est décrit dans les Figures 5A et 5B ;

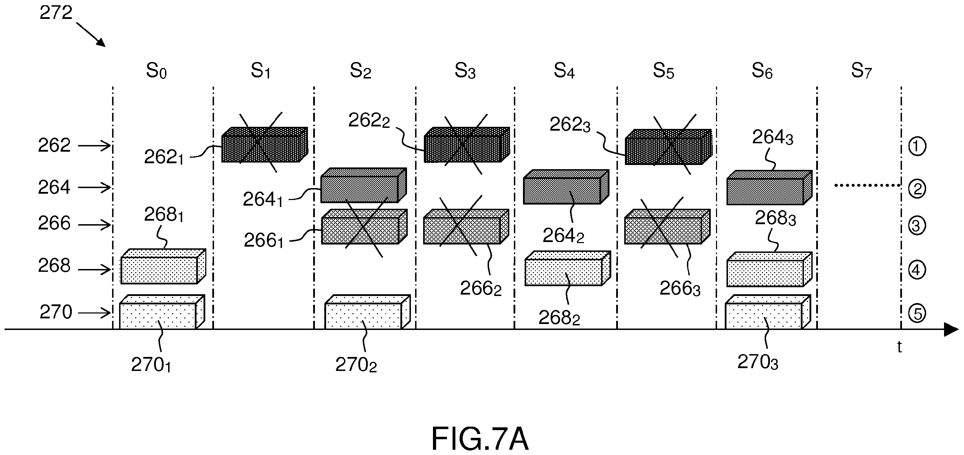

.- la Figure 7A est un exemple illustrant la mise en oeuvre de l'étape préalable de réception et décodage de paquets de données par l'algorithme classique de décodage suivant le protocole CRDSA classique jusqu'au blocage dudit algorithme CRDSA;

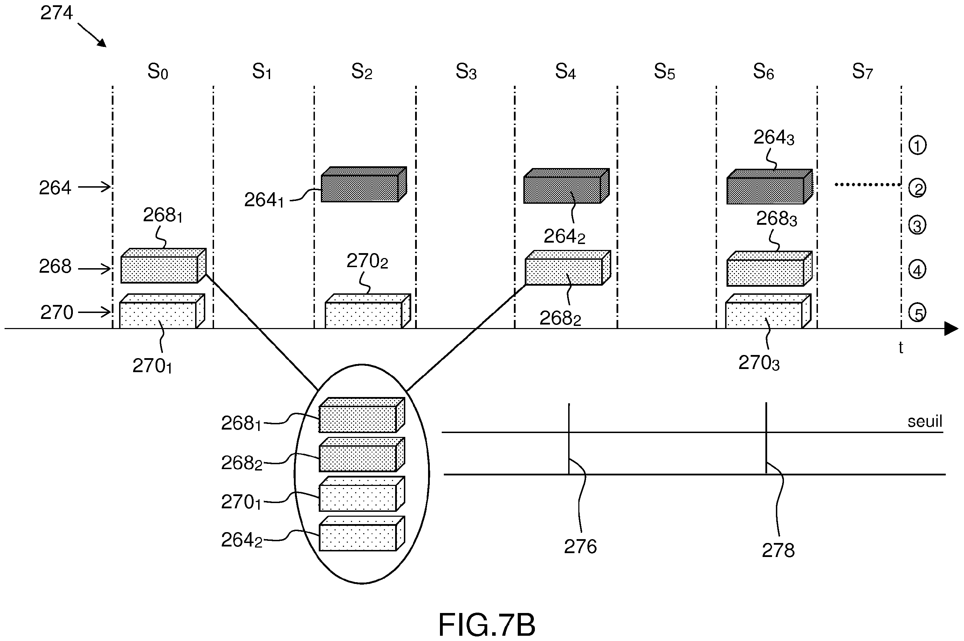

.- la Figure 7B est un exemple illustrant la mise en oeuvre de l'étape de traitement de la Figure 6 correspondant au procédé SPoTIT « aléatoire », mettant en oeuvre un nombre réduit, ici deux, de corrélations de localisation, et succédant au blocage de l'étape préalable de décodage classique CRDSA illustrée dans la Figure 7A ;

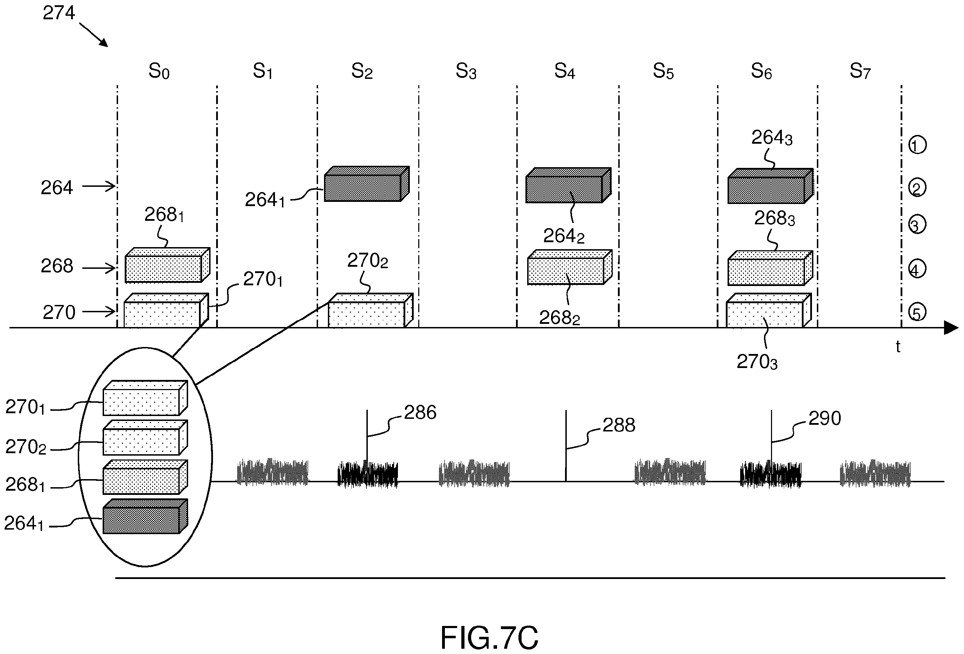

.- la Figure 7C est l'illustration de l'application de l'algorithme de décodage du protocole classique MARSALA à la suite de l'étape préalable de décodage classique CRDSA de la Figure 7A, mettant en oeuvre un nombre $N_S$-1, ici sept, de corrélations de localisation, et fournie à titre de comparaison de l'application de l'algorithme de décodage du protocole SPoTIT « aléatoire » décrite à la Figure 7B ;

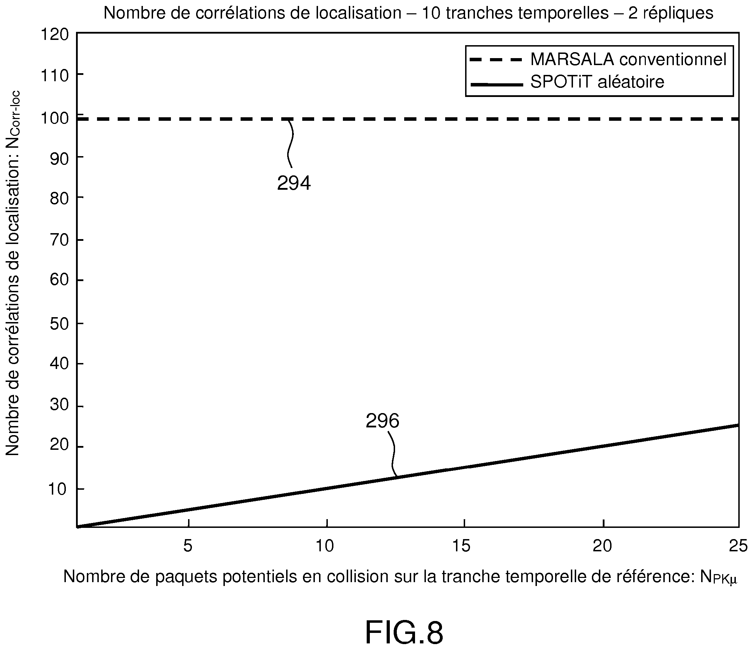

.- la Figure 8 est une vue comparative de l'évolution du nombre de corrélations de localisation en fonction du nombre de paquets potentiels en collision sur la trame temporelle entre le cas de l'utilisation d'un algorithme de décodage MARSALA et le cas d'un algorithme de décodage SPoTIT « aléatoire » correspondant au premier mode de réalisation du procédé de transmission selon l'invention ;

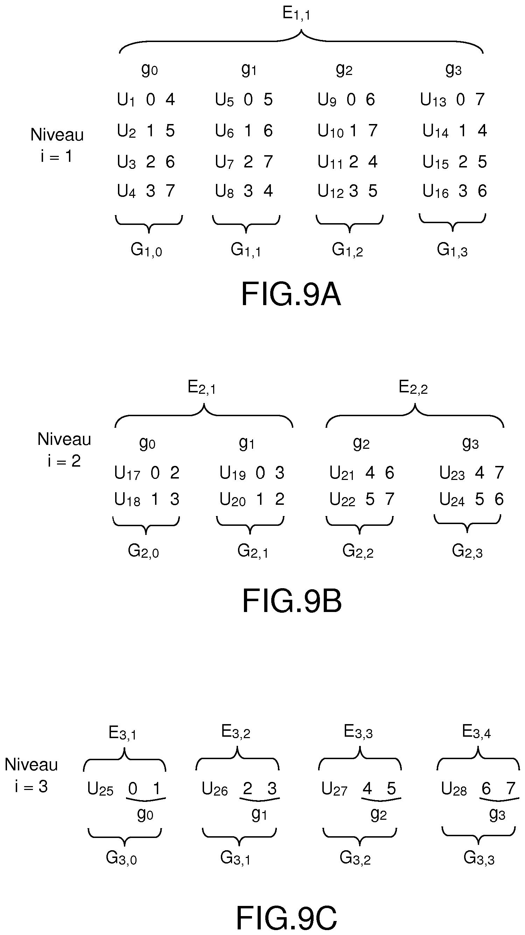

.- les Figure 9A, 9B et 9C sont les illustrations d'un exemple de construction de groupes respectifs de terminaux utilisateurs suivant un premier, un deuxième, et un troisième niveau de décalage cyclique, et de la correspondance auxdits terminaux utilisateurs de ressources de transmission en termes de séquences d'acquisition, de positions des première et deuxième répliques des paquets associés attribués suivant des règles de construction d'un graphe d'un deuxième mode de réalisation d'une fonction de d'attribution $F_{SMART}$ qui évitent les boucles de données entre les terminaux utilisateurs, dans lesquelles deux terminaux ou plus utilisent les mêmes positions de répliques ;

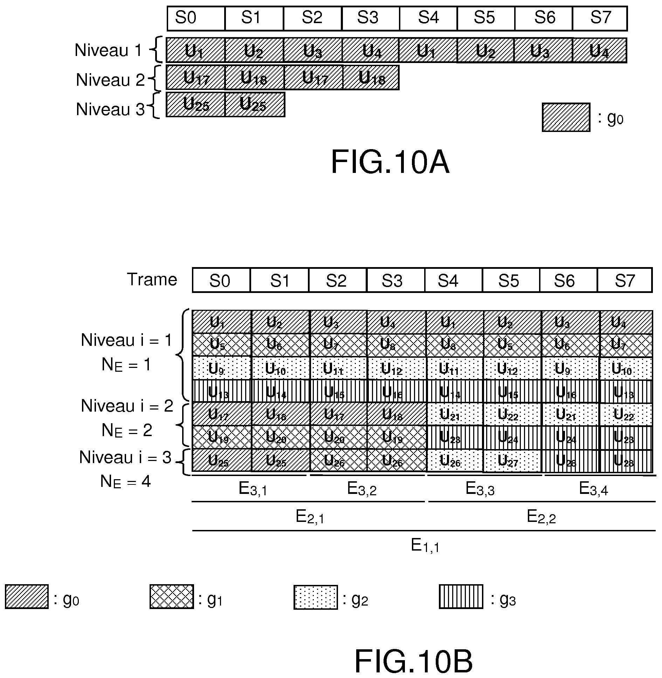

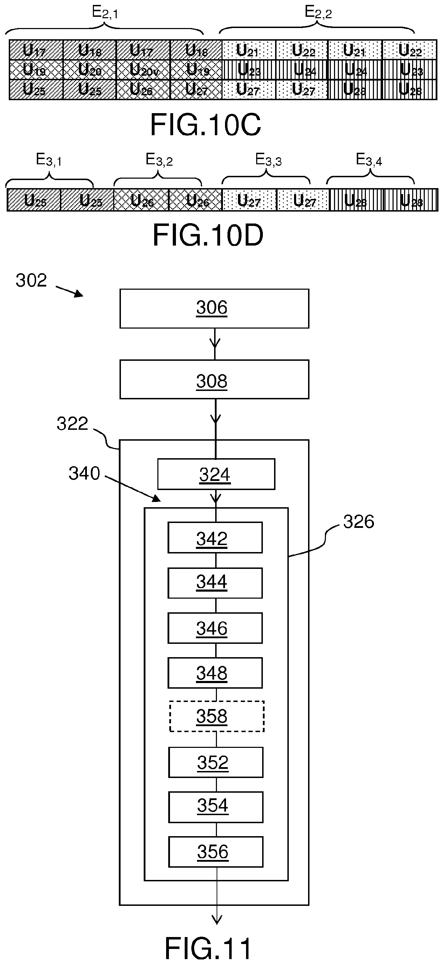

.- les Figures 10A, 10B, 10C sont les illustrations mettant en évidence la capacité de décodage sans boucle des paquets de données transmis par les terminaux utilisateurs, regroupés suivant les groupes $G_{i,j}$ décrits dans les Figures 9A, 9B et 9C et la fonction de distribution des ressources $F_{SMART}$ correspondante ;

.- la Figure 11 est un ordinogramme de l'étape de traitement et de décodage de paquets collisionnés d'une trame temporelle, ladite étape de traitement succédant à un échec ou blocage de l'algorithme de décodage suivant le protocole CRDSA classique et correspondant à la deuxième forme de réalisation de la fonction de distribution $F_{SMART}$ dont un exemple est décrit dans les Figures 9A, 9B et 9C ;

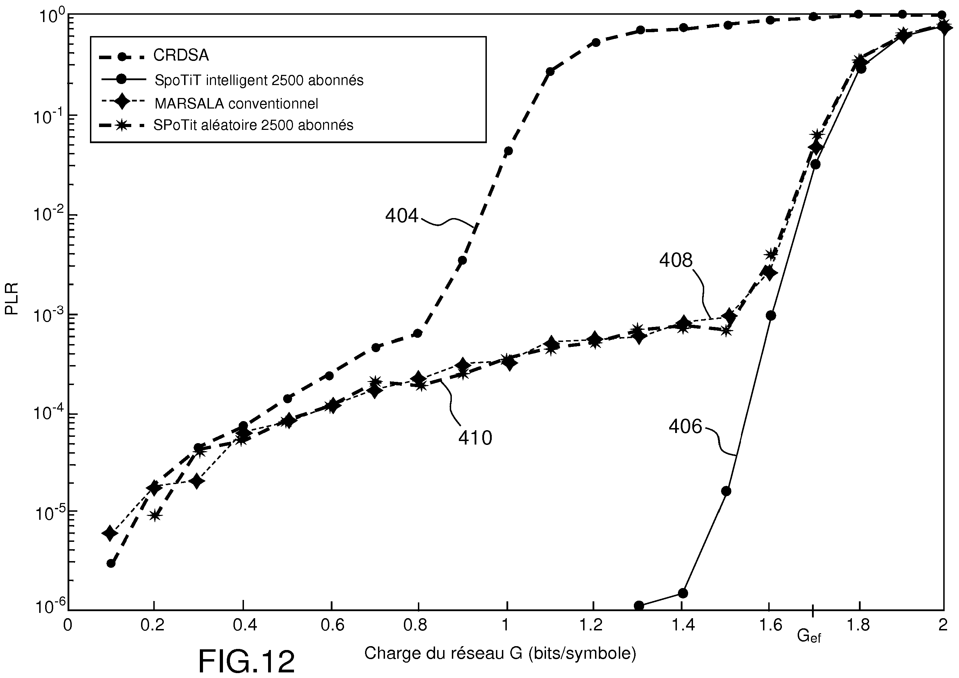

.- la Figure 12 est une vue comparative de quatre courbes d'évolution du taux de perte en paquets PLR (en anglais Packet loss rate) en fonction de la charge du réseau G, exprimée en bits/symbole, dans les cas d'utilisation des procédés de transmission classique CRDSA et MARSALA, et dans les cas d'utilisation des deux variantes du procédé de transmission selon l'invention, SPoTIT « aléatoire » et SPoTIT « intelligent » ;

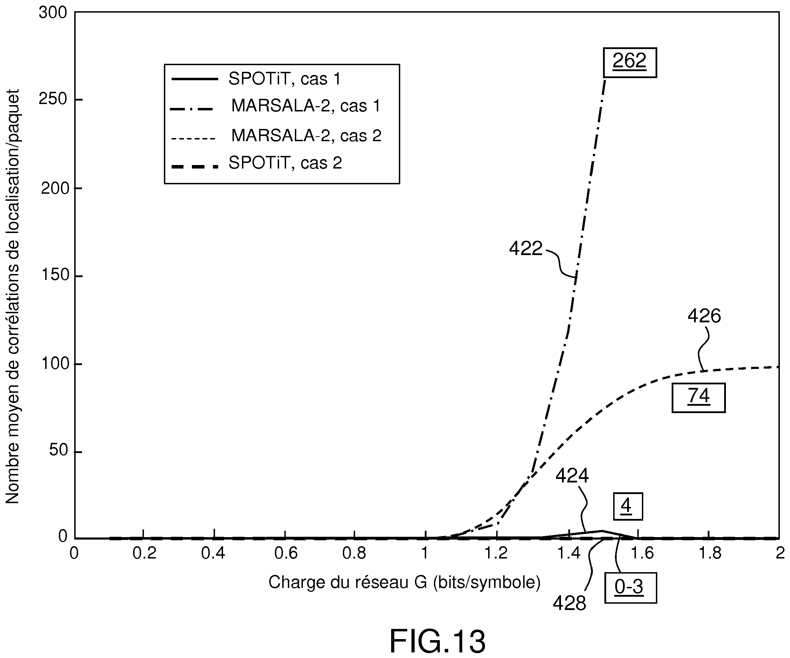

.- la Figure 13 est une vue comparative de quatre courbes d'évolution du nombre moyen de corrélations de localisation par paquet en fonction de la charge du réseau G, exprimée en bits/symbole, une première paire desdites courbes correspondant à un procédé de transmission utilisant un protocole MARSALA classique et une deuxième paire desdites courbes utilisant un protocole SPoTIT « aléatoire » selon l'invention.

De manière générale, le principe de l'invention est fondé sur le partage préalable par les terminaux utilisateurs connectés et par la station de réception de la connaissance concernant, pour chaque paquet potentiellement transmis dans la trame temporelle reçue, les positions des répliques du paquet dans la trame et de la séquence d'acquisition insérée dans les répliques dudit paquet, et fondé sur la manière par laquelle les répliques et les séquences d'acquisition des paquets potentiellement transmis par les terminaux utilisateurs connectés sont réparties, de sorte que la localisation desdites répliques requiert une complexité de traitement à la réception réduite en termes de diminution, voire d'annulation du nombre de corrélations inter-tranches de localisation des répliques nécessaires, lorsque des conflits de collisions entre paquets, non résolubles par l'utilisation du protocole CRDSA classique ont lieu.

Suivant la Figure 1, de manière schématique et selon l'invention, un système de communications 2 pour transmettre des paquets de données à travers un canal de transmission (RA) à accès aléatoire, partagé par une pluralité de terminaux, comprend une station de réception 6, une pluralité 8 d'un nombre entier $N_U$, supérieur ou égal à 2, de terminaux utilisateurs 10, 12, 14, activement connectés à la station de réception 6, et un canal de transmission 4 depuis la pluralité 8 des terminaux utilisateurs 10, 12, 14 jusqu'à la station de réception 6, à accès aléatoire (RA).

Ici de manière préférée, le canal de transmission 4 à accès aléatoire utilise un protocole ALOHA synchrone à segmentation et diversité temporelle avec résolution de conflits inter-paquets, dénommé CRDSA.

En variante, le canal de transmission aléatoire RA pourrait utiliser un protocole d'accès aléatoire asynchrone à diversité temporelle avec résolution de conflits inter-paquets, dénommée ACRDA.

Ici, pour simplifier la lecture de la Figure 1, seuls trois terminaux 10, 12 et 14 sont illustrés. Chaque terminal utilisateur connecté 10, 12 et 14 de la pluralité 8 peut établir une liaison bidirectionnelle sans fil avec la station de réception 6, telle qu'une passerelle GW (en anglais « GateWay »), par l'intermédiaire d'un satellite 24 SAT, ladite passerelle 6 GW étant reliée à un réseau terrestre 28, par exemple l'Internet. Les terminaux utilisateurs 10, 12, 14 sont par exemple des terminaux « domestiques » qui ne desservent chacun qu'un seul utilisateur. Par exemple, il peut d'agir de terminaux de petite taille, chacun équipant une habitation particulière, et utilisé pour assurer une connexion à l'Internet 28 et/ou à un service de télévision numérique avec canal de voie retour.

Ici, les terminaux utilisateurs 10, 12, 14 utilisent la liaison ascendante 20 comme canal de communication de voie retour à accès aléatoire 4 (RA), supposé ici unique, pour transmettre des paquets de données de petites dimensions suivant un profil de trafic sporadique.

Le mode d'accès aléatoire des terminaux rattachés à une même station d'accès est supposé ici synchrone et utilise un procédé d'accès aléatoire de type CRDSA. Dans le mode d'accès synchrone, les transmissions effectuées par les abonnés d'une même passerelle sont faites sur des trames divisées en $N_S$ tranches temporelles ou « time slots ». Chaque utilisateur va envoyer un nombre entier $N_R$, supérieur ou égal à 2, de fois le même paquet sur une trame sous forme de $N_R$ répliques sur $N_R$ tranches temporelles différentes et doit attendre la prochaine trame pour transmettre un autre paquet. Les utilisateurs sont synchronisés entre eux et reçoivent au fur et à mesure des tables de synchronisation.

De manière générale, la station de réception 6 est configurée pour déterminer et/ou enregistrer, dans une première étape préalable, une fonction F d'attribution et de distribution de ressources de transmission F(u) partagées par la pluralité 8 de terminaux u connectés à la station de réception dans le système de communications 2.

La fonction d'attribution et de distribution F est caractérisée par un graphe {(u, F(u)}, u parcourant l'ensemble des terminaux connectés 10, 12, 14 de la pluralité 8, le graphe étant déterminé directement à l'aide par exemple d'un tableau ou indirectement à l'aide d'un algorithme. A chaque terminal utilisateur u connecté de la pluralité 8 est attribuée une ressource de transmission F(u) déterminée incluant des positions temporelles respectives des $N_R$ répliques d'un paquet à émettre par le terminal 10, 12, 14, parmi des rangs de tranches temporelles d'une même trame temporelle, et un identifiant d'une séquence binaire d'acquisition à insérer dans les $N_R$ répliques du paquet, prise dans une famille de séquences pseudo-aléatoires quasi-orthogonales.

Chaque terminal utilisateur u connecté, 10, 12, 14 de la pluralité 8 est configuré pour, dans la même première étape préalable, recevoir ou générer, lorsqu'il s'est connecté à la station de réception 6, la composante associée du graphe {(u, F(u)} , puis dans une deuxième étape générer et émettre $N_R$ répliques d'un paquet à transmettre dans les tranches temporelles d'une trame émission ayant les positions temporelles attribuées par la composante de graphe dudit terminal et dans lesquelles est insérée la séquence d'acquisition dudit terminal, la trame temporelle reçue correspondant à un mode de réception synchrone.

La station de réception 6 est configurée pour exploiter le graphe {(u, F(u)} de la fonction F lors du décodage des paquets pour combiner les signaux ayant un même signal d'acquisition dans les $N_R$ positions possibles de répliques d'un même paquet, et pour minimiser le nombre de corrélations requises entre des signaux complexes en bande de base de données de tranches temporelles différentes lors de la résolution de conflits d'interférences entre paquets non résolubles par le décodage classique du protocole CRDSA.

En variante, la station de réception est configurée pour exploiter le graphe {(u, F(u)} de la fonction F lors du décodage des paquets pour combiner les signaux ayant un même signal d'acquisition dans les $N_R$ positions possibles de répliques d'un même paquet, et pour minimiser le nombre de corrélations requises entre des signaux complexes en bande de base de données de tranches temporelles différentes lors de la résolution de conflits d'interférences entre paquets non résolubles par le décodage classique du protocole ACRDA.

Suivant la Figure 2, une trame CRDSA 32, désignée par Fr, est typiquement composée de $N_S$ tranches temporelles 42 ou segments temporels successifs d'une durée $T_S$ , identifiées par un indice entier de position dans la trame variant séquentiellement de 0 à $N_S - 1$.

Chacune de ces tranches temporelles 42 ou « Time Slots » comporte un nombre entier fixe $N_{sym}$ de symboles décomposé comme suite :

.- $N_{guard}$ symboles de garde destinées à éviter la perte d'information en cas de synchronisation imparfaite entre les différents utilisateurs,

.- $N_{pay}$ symbole de « données utiles » (« payload » en langue anglaise),,

.- $N_{seq\text{-}acquisition}$ symboles de séquence d'acquisition (ou simplement « préambule » lorsque la séquence d'acquisition est située avant les données utiles.

Chaque symbole a une durée $T_{sym}$ .

Il s'ensuit que $T_S = N_{sym}*T_{sym}$

Un contrôle de redondance de code CRC (en anglais Code Redundancy Check) ou un code de correction d'erreur FEC (en anglais Forward Error Correction) permet de vérifier que les données utiles ont été effectivement décodées sans erreurs.

De manière préférée, la séquence d'acquisition est un préambule d'acquisition situé avant les données utiles des répliques d'un paquet.

Le préambule d'acquisition qui est le même pour les $N_R$ répliques de chaque paquet, est constitué par une séquence binaire pseudo-aléatoire de longueur Mpre-a, choisie d'une manière aléatoire à l'intérieur d'une famille SPR de séquences dont la taille (nombre de séquences) est de l'ordre de Mpre-a. La famille SPR doit présenter des bonnes propriétés d'auto corrélation croisée, c'est-à-dire que les séquences doivent être presque orthogonales entre elles et présenter un pic d'auto corrélation étroit. Des familles appropriées sont par exemple constituées par les codes de Gold et les codes de Gold étendus en longueur.

Un même préambule d'acquisition ou des préambules d'acquisition différents peuvent être utilisés pour les paquets émis.

Un préambule d'acquisition permet d'une manière classique d'identifier le début de chaque paquet et éventuellement d'effectuer une estimation de la phase, de la temporisation et du décalage en fréquence de la porteuse (« estimation du canal »), qui est utilisée pour la démodulation des données utiles.

Suivant la Figure 3, un procédé 102 selon l'invention de transmission de paquets de données à travers un canal de transmission (RA) de voie retour à accès aléatoire, partagé par une pluralité de terminaux est mis en oeuvre par exemple par le système de communications 2 de la Figure 1.

Le procédé de transmission 102 comprend un premier ensemble 104 d'étapes.

Dans une première étape 106 préalable, une fonction F d'attribution et de distribution de ressources F(u) à la pluralité 8 de terminaux, identifiés chacun par un indice entier u, connectés à la station de réception 6, est déterminée par un ou plusieurs calculateur électroniques. La fonction d'attribution F est définie par un graphe {(u, F(u)}, u étant un indice d'identification parcourant l'ensemble des terminaux de la pluralité 8, et à chaque terminal utilisateur u est associée une ressource de transmission F(u) incluant des positions temporelles respectives d'un nombre entier $N_R$, supérieur ou égal à 2, de répliques d'un paquet à émettre par le terminal, parmi des rangs des tranches temporelles d'une même trame temporelle d'émission, et un identifiant d'une séquence binaire d'acquisition à insérer dans les $N_R$ répliques du paquet, prise dans une famille de séquences pseudo-aléatoires quasi-orthogonales.

Puis dans la même première étape 106, à chaque terminal de la pluralité 8, connecté à la station de réception 6, est fournie la composante associée du graphe {(u, F(u)} tandis que la totalité du graphe est rendue disponible et fournie à bord de la station de réception.

La fourniture de la totalité du graphe {(u, F(u)} à la station de réception peut être réalisée de différentes manières. Par exemple, un calculateur électronique faisant partie de la station de réception est configuré pour calculer et déterminer le graphe de la fonction F. En variante, le graphe de la fonction F peut être déterminé par calcul par un calculateur électronique distant de la station réception 6 et transmis à la station de réception 6 sous la forme d'une table, ladite table étant enregistrée à bord de la station de réception.

La fourniture à chaque terminal utilisateur u de sa composante de graphe F(u) peut être réalisée de différentes manières. Par exemple, un calculateur électronique faisant partie du terminal est configuré pour calculer et déterminer la composante de graphe F(u) à l'aide d'algorithme définissant l'image de u par la fonction F. En variante la composante F(u) de graphe associée respectivement à chaque terminal utilisateur peut être transmise à par la station de réception 6 qui dispose déjà de la connaissance de cette composante F(u).

Puis dans une deuxième étape 108, chaque terminal utilisateur u génère dans une première sous-étape 110 $N_R$ répliques d'un paquet à transmettre dans les tranches temporelles d'une trame émission ayant les positions temporelles attribuée par la composante F(u) de graphe dudit terminal, et dans une deuxième sous-étape 112 insère dans lesdites $N_R$ répliques la séquence binaire d'acquisition qui lui est attribuée par la composante F(u) de graphe dudit terminal, la trame émission étant de préférence synchrone mais pouvant être asynchrone en variante.

Le procédé de transmission 102 selon l'invention est caractérisé en ce que la fonction d'attribution et de répartition F, et par conséquent son graphe {(u, F(u)} , sont choisis de sorte à minimiser voire annuler le nombre de boucles entre des terminaux utilisateurs connectés de la pluralité dans chacune desquelles au moins deux terminaux connectés de la pluralité utilisent des mêmes $N_R$ positions de répliques indépendamment de leur ordre et une même séquence d'acquisition.

La famille de séquences binaires pseudo-aléatoires quasi-orthogonales est choisie parmi les codes utilisés par les systèmes à accès multiples par répartition de code, tels que les codes de Gold et les codes de Gold étendus en longueur. La séquence binaire d'acquisition insérée dans chaque réplique peut être un préambule, disposée avant les données utiles et chaque réplique transmise peut comporter un ou plusieurs symboles de garde définissant un intervalle de garde.

La deuxième étape 108 comporte également une troisième sous-étape de codage 114 des répliques par un contrôle de redondance CRC ou un codage de correction des erreurs FEC (en anglais Forward Error Correction), ladite troisième sous-étape de codage 114 étant effectuée avant l'insertion 112 d'une séquence binaire d'acquisition.

La deuxième étape 108 comporte une quatrième sous-étape 116 optionnelle d'insertion d'information de signalisation concernant le positionnement relatif des répliques d'un même paquet, exécutée avant la troisième sous-étape de codage des $N_R$ répliques.

Les première, deuxième, troisième et quatrième sous-étapes 110, 112, 114, 116 forment un premier ensemble 118 de sous-étapes.

Le procédé de transmission 102 selon l'invention est caractérisé en ce que la fonction d'attribution et de répartition F est choisie de sorte que l'exploitation de son graphe {(u, F(u)} par la station de réception 6 permette, lors d'une troisième étape 122 de décodage des répliques, de minimiser voire d'annuler le nombre nécessaire de corrélations inter-tranches de localisation de réplique d'un paquet, lorsque lesdites corrélations de localisation des répliques, effectuées en bande de base, sont requises pour combiner les répliques et décoder le paquet, lorsque le processus de décodage classique du protocole CRDSA a échoué.

Suivant les Figures 3 et 4, la troisième étape 122 de décodage du procédé de transmission 102 selon l'invention comprend en outre une quatrième étape 124 de récupération et de décodage de paquets utilisant un protocole de décodage CRDSA, ladite quatrième étape 124 étant exécutée pour chaque trame en réception, reçue après les première et deuxième étapes, 106, 108.

En variante, la troisième étape 122 comporte une cinquième étape de récupération et décodage de paquets utilisant un protocole de décodage ACRDA, ladite cinquième étape étant exécutée en réception après les première et deuxième étapes, 106, 108 sur une fenêtre glissante englobant un certain nombre de trames virtuelles propres aux utilisateurs.

Suivant les Figures 3 et 4, la troisième étape 122 de décodage du procédé de transmission selon l'invention comprend une sixième étape 126 d'analyse et de traitement complémentaires pour décoder des paquets interférés non résolus par la quatrième étape 124 ou la cinquième étape. La sixième étape 126 est déclenchée par conséquent lorsqu'il existe au moins un paquet interféré de la trame en cours de traitement non résolu lors de l'exécution de la quatrième étape 124 ou la cinquième étape.

Suivant la Figure 3, la quatrième étape 124 de récupération et de décodage utilisant un protocole de CRDSA comprend un deuxième ensemble 130 de sous-étapes consistant à :

.- dans une première sous-étape 132, identifier à l'intérieur d'un signal reçu, des répliques qui ne sont pas affectées par des collisions destructives avec des répliques d'autres paquets ; puis

.- dans une deuxième sous-étape 134, extraire de l'information contenue dans les répliques identifiées ; puis

.- dans une troisième sous-étape 136, localiser temporellement la ou les autres répliques du même paquet en utilisant les informations des positions temporels des répliques fournis par les composantes du graphe {(u, R(u)} et/ou une information de signalisation de positionnement relatif extraite des répliques identifiées lorsqu'elle existe ; puis

.- dans une quatrième étape 138, effacer en bande de base complexe ladite ou desdites autres répliques par un algorithme d'effacement d'interférence, lorsqu'elle ou elles sont affectées par des collisions destructives avec des répliques d'autres paquets ; puis

.- dans une cinquième sous-étape 140, identifier d'autres paquets qui, après ladite sous-étape d'effacement, ne sont plus affectés par des collisions destructives et extraire de l'information qui y est contenue.

Suivant les Figures 3 et 4, les première, deuxième, troisième, quatrième et cinquième sous-étapes 132, 134, 136, 138, 140 sont répétées jusqu'à ce que tous les paquets dans la trame traitée soient décodés ou le décodage utilisant le protocole CRDSA devienne bloqué.

Le procédé de transmission 102 des paquets de données selon l'invention, dénommé « Technique de positionnement partagé pour des émissions interférées de manière aléatoire » SPoTIT (en anglais « Shared Position Technique for Interfered random Transmissions ») est donc fondé sur le principe de partage d'une connaissance sur les positions des répliques et les préambules d'acquisition de chaque abonné ou terminal utilisateur connecté à la station de réception 6.

Suivant un premier mode de réalisation particulier du procédé de transmission 102 selon l'invention, désigné par SPoTIT « aléatoire », (« random » en anglais) et correspondant à un premier mode de réalisation de la fonction F, désignée par $F_{PSR}$, la fonction $F_{PSR}$ est une fonction de distribution déterministe pseudo-aléatoire des vecteurs possibles de positions de $N_R$ répliques en termes de rang des tranches temporelles ou « times slots » utilisées au sein de la trame et des séquences d'acquisition associées aux différentes répliques émises des paquets qui dépendent des terminaux utilisateurs de la pluralité via une graine Gr(u) d'entrée de la fonction $F_{PSR}$ qui à son tour dépend de manière représentative de l'identifiant u de chaque terminal, la distribution des vecteurs de positions de $N_R$ répliques et des séquences d'acquisition de la fonction de distribution $F_{PSR}$ ayant un profil de distribution sensiblement uniforme sur l'ensemble de tous les vecteurs possibles de positions de $N_R$ répliques et de toutes les séquences d'acquisition possibles lorsque le nombre de terminaux utilisateur est suffisamment grand.

Un vecteur de positions de $N_R$ répliques au sein des $N_S$ tranches temporelle est un vecteur booléen à $N_S$ composantes ordonnées correspondant aux tranches temporelles ordonnées suivant la séquence S0, S1, S2, ..., $S_N$, une composante étant mise à 1 lorsque la tranche temporelle est utilisée ou occupée par une des $N_R$ répliques d'un paquet et à 0 sinon. Les vecteurs possibles de $N_R$ répliques au sein des $N_S$ tranches temporelles sont tous les vecteurs à $N_S$ composantes ayant $N_R$ composantes mises à 1, les $N_S$-$N_R$ composantes restantes mises à 0.

La fonction $F_{PSR}$ est réalisée par exemple à l'aide d'un ou plusieurs générateurs pseudo-aléatoires PSR (en en anglais PSeudo-Random) ayant comme graine des informations d'identification connues par l'émetteur et le récepteur.

Suivant les Figures 5A et 5B et un exemple de mise en oeuvre de la fonction $F_{PSR}$ à l'émission et à la réception dans le cas particulier où le nombre $N_R$ de répliques par paquet est égal à 2, un générateur 154, 156 déterministe de même conception et de même structure engendrant en sortie un vecteur $F_{PSR}$(u), formé par des première et deuxième positions Ps1(u), Ps2(u) dans la trame, et un préambule d'acquisition P(u), dépendant de l'indice d'identification u associé au terminal, utilise un unique générateur pseudo aléatoire (non représenté), alimenté par une graine Gr(u) représentative de l'indice u du terminal utilisateur.

Suivant la Figure 5A, chaque terminal utilisateur au niveau émission peut limiter l'utilisation de son générateur 154 de vecteurs de sortie à la fourniture du vecteur de sortie $F_{PSR}$ (u) associé à son indice d'identification u, i.e. à une seule composante du graphe {u, $F_{PSR}$(u)}.

Suivant la Figure 5B, la station de réception au niveau réception exploite l'ensemble du graphe {u, $F_{PSR}$(u)} généré par son générateur 156 de vecteurs de sortie, représenté sous la forme d'un tableau 108 sur la Figure 5B.

Dans une première forme de réalisation, pour chaque terminal utilisateur u, connecté à la station de réception 6, la graine Gr(u) associée au terminal utilisateur u est fixe temporellement et représente l'identifiant HID (en anglais Hardware IDenitifier) au travers d'une fonction u(HID), avec GR(u)=Gr(u(HID)).

Certains cas de blocage existent dans lesquels plusieurs terminaux utilisateurs génèrent les mêmes positions de répliques dans la même trame, transmettent leurs paquets dans les mêmes tranches temporelles, et créent une boucle de collisions non résoluble. Aucun paquet de donné ne pourra être décodé provoquant ainsi un échec continu et permanent.

Pour remédier à ce blocage le système de communication est configuré pour introduire au niveau de l'émission des paquets un choix dynamique des tranches temporelles en faisant varier dynamiquement la graine Gr(u) du générateur pseudo-aléatoire pour chaque terminal à chaque trame.

Dans une deuxième forme de réalisation, pour chaque terminal u, connecté u, connecté à la station de réception 6, la graine Gr(u) associée au terminal utilisateur u est dynamique et varie à chaque trame, en utilisant notamment un algorithme Gr(u(HID*FID), représentatif des variations du produit HID*FID de l'identifiant HID du terminal u et un identifiant FID de la trame représentatif de son rang temporel dans un ordre séquentiel de défilement de trames.

Un autre identifiant connu au préalable ou toute autre combinaison dynamique peut être envisagée.

Cela permet de changer la graine Gr(u) à chaque transmission pour chaque terminal et d'éviter ainsi une boucle continue de collisions en cas d'émissions successives.

Suivant les Figures 5A et 5B, la fonction de distribution déterministe pseudo-aléatoire $F_{PSR}$ est paramétré par le nombre total de tranches temporelles $N_S$ d'une trame et le nombre total de séquence d'acquisition $N_P$.

Suivant la Figure 6, le procédé de transmission « SPoTIT aléatoire », ici désigné par 202, comprend une première étape 206 et une deuxième étape 208 comme mode particulier de réalisation des première et deuxième étapes 106, 108 de la Figure 3, dans le cas particulier où la fonction de distribution F est égale à une fonction $F_{PSR}$ de distribution déterministe pseudo-aléatoire.

Le procédé de transmission 202 « SPoTIT aléatoire » comporte ici à l'instar du procédé de transmission 102 de la Figure 3, une première forme de réalisation 222 de la troisième étape 122 de la Figure 3 comportant une quatrième étape 224 de récupération et de décodage de paquets utilisant un protocole de décodage CRDSA et identique à la quatrième étape 124 de la Figure 1, et une première forme de réalisation 226 de la sixième étape 126 de la Figure 1, comportant un troisième ensemble 240 de sous-étapes.

La sixième étape 226 d'analyse et de traitement complémentaires est configurée pour décoder des paquets interférés non résolus par la quatrième étape 224, et déclenchée lorsqu'il existe au moins un paquet interféré de la trame non résolu lors de l'exécution de la quatrième étape 224.

Les sous-étapes du troisième sous-ensemble 240 consiste à :

.- dans une première sous-étape 242, sélectionner de manière arbitraire ou suivant un critère prédéterminé une tranche temporelle de référence dans la trame en cours de traitement parmi les tranches temporelles pour lesquelles un conflit non résolu de paquets a été détecté ; puis

.- dans une deuxième sous-étape 244, choisir de manière arbitraire ou suivant un critère prédéterminé dans la tranche temporelle de référence sélectionnée une séquence d'acquisition détectée et choisie parmi une ou plusieurs séquences d'acquisition détectées dans ladite tranche temporelle de référence ; puis

.- dans une troisième sous-étape 246, déterminer les positions dans la trame en cours de traitement des répliques possibles d'un même paquet associé à la séquence d'acquisition détectée et choisie à partir de toutes les positions des tranches temporelles de la trame dans lesquelles la séquence d'acquisition détectée et choisie a été détecté par corrélation courte et à partir du graphe $\{u ; F_{PSR} (u)\}$ ; puis

.- dans une quatrième sous-étape 248, calculer les corrélations de localisation des répliques du paquet entre le signal bande base reçu dans la tranche temporelle de référence et les signaux en bande de base des tranches temporelles ayant les positions déterminées dans la troisième sous-étape 246 ; puis

.- dans une cinquième sous-étape 250, sélectionner les tranches temporelles des répliques du paquet de la tranche temporelle de référence dont la séquence d'acquisition a été détectée et choisie comme les tranches temporelles présentant des valeurs de corrélation de localisation supérieures à une valeur de corrélation de localisation prédéterminée ; puis

.- dans une sixième sous-étape 252 de combinaison, calculer la somme des signaux en bande de base des répliques localisées et sélectionnées dans la cinquième étape du paquet de la tranche temporelle de référence dont la séquence d'acquisition a été détectée et choisie ; puis

.- dans une septième sous-étape 254, démoduler et décoder la somme calculée lorsque la somme comprend un niveau de bruit situé au-dessous d'un seuil de bruit déterminé ; puis

.- dans une huitième sous-étape 256, soustraire en bande de base du signal en cours de traitement le signal démodulé et décodé des répliques localisées du paquet de la tranche temporelle associée à la séquence d'acquisition détectée et choisie.

Par exemple, un critère de choix de la séquence d'acquisition détecté peut être fondé sur un critère d'ordonnancement des rapports signal à bruit des séquences d'acquisition détectées.

La ou les séquences d'acquisition détectées sont déterminées en calculant des valeurs de pics de corrélations courtes en bande base entre les motifs de référence des séquences d'acquisition possibles attendues et le signal contenu dans la tranche temporelle de référence sélectionnée, et en sélectionnant comme séquences d'acquisition détectées les séquences d'acquisitions pour chacune desquelles un pic d'acquisition présente une valeur, supérieure ou égale à un premier seuil de corrélation courte prédéterminé.

La ou les séquences d'acquisition détectées sont déterminées en calculant une pluralité de valeurs de corrélations courtes en bande de base entre les motifs de référence des séquences d'acquisition possibles attendues dans la tranche temporelle de référence et les signaux contenus dans les tranches temporelles pour lesquelles l'utilisation des motifs de référence, attendus dans la tranche temporelle de référence, est possible en vertu du graphe $\{u ; F_{PSR} (u)\}$, et en sélectionnant comme séquences d'acquisition détectées les séquences d'acquisition pour chacune desquelles la somme des carrés des modules des valeurs de corrélation correspondant à un même motif de référence présente une valeur, supérieure ou égale à un deuxième seuil de corrélation courte prédéterminé.

La détection par corrélation courte de la ou des séquences d'acquisition dans la tranche temporelle de référence est effectuée au cours du processus de décodage classique du protocole CRDSA peu avant son blocage et sa suspension ou dans une sous-étape intermédiaire de détection par corrélation courte, interposée entre la première sous-étape 242 et la deuxième sous-étape 244 de la sixième étape 226.

La détection par corrélation courte de la séquence détectée et choisie dans les tranches temporelles restantes de la trame temporelle en cours de traitement est effectuée au cours du processus de décodage classique du protocole CRDSA peu avant son blocage et sa suspension ou dans une sous-étape intermédiaire de détection par corrélation courte, interposée entre la deuxième sous-étape 244 et la troisième sous-étape 246 de la sixième étape 226.

Il est à remarquer que la sixième étape peut comprendre également une neuvième sous-étape d'estimation 258 des paramètres de fréquence, de temporisation, de phase et d'amplitude du canal à partir des corrélations de localisation des répliques du paquet, la neuvième sous-étape étant interposée entre la cinquième sous-étape 250 et la sixième sous-étape 252 de combinaison.

Ainsi, la station de réception 6 ayant la connaissance des positions dans lesquelles se trouvent les répliques du paquet à décoder d'une tranche temporelle de référence, la station de réception n'a pas besoin d'effectuer les corrélations de localisation sur la totalité de la trame temporelle. En conséquence, le nombre de corrélations de localisation sera réduit et limité au nombre de paquets potentiellement en collision ayant le même préambule sur la tranche temporelle de référence en cours de traitement.

Suivant les Figures 7A et 7B, un exemple de traitement d'une trame particulière pour le décodage des paquets est illustrée dans le cas où un protocole SPoTIT « aléatoire » est utilisé.

Suivant la Figure 7A, cinq paquets différents 262, 264, 266, 268, 270 sont transmis et reçus, ici de manière synchrone, sur une trame de réception 272, comportant ici huit tranches temporelles ($N_S$ =8) qui se suivent désignées respectivement par S0, S1, S2, S3, S4, S5, S6, S7.

Chaque paquet est illustré sur une ligne différente, numérotée de 1 à 5 en partant du haut sur chaque Figure 7A et 7B et par un motif de hachurage différent pour aider à les distinguer, comporte un nombre $N_R$ de répliques égal à 3 et comporte un préambule différent.

Suivant la Figure 7A, le premier paquet 262 comporte trois répliques $262_1$, $262_2$, $262_3$, disposées respectivement dans les tranches temporelles S1, S3, S5, et utilisant un même premier préambule d'acquisition.

Le deuxième paquet 264 comporte trois répliques $264_1$, $264_2$, $264_3$ disposées respectivement dans les tranches temporelles S2, S4 et S6, et utilisant un même deuxième préambule d'acquisition.

Le troisième paquet 266 comporte trois répliques $266_1$, $266_2$, $266_3$ disposées respectivement dans les tranches temporelles S2, S3 et S5, et utilisant un même troisième préambule d'acquisition.

Le quatrième paquet 268 comporte trois répliques $268_1$, $268_2$, $268_3$, disposées respectivement dans les tranches temporelles S0, S4 et S6, et utilisant un même quatrième préambule d'acquisition.

Le cinquième paquet 270 comporte trois répliques $270_1$, $270_2$, $270_3$, disposées respectivement dans les tranches temporelles S0, S2 et S6, et utilisant un même cinquième préambule d'acquisition.

Les premier, deuxième, troisième, quatrième, cinquième diffèrent entre eux pris deux à deux.

Suivant l'étape 224 de décodage du protocole CRDSA la tranche temporelle S1 est choisie comme tranche temporelle de référence et la première réplique $262_1$ du premier paquet 262 qu'elle contient est identifiée comme une réplique propre. Le premier paquet 262 est alors décodé à l'aide de cette première réplique et les positions des deuxième et troisième répliques du premier paquet sont déterminées. Puis le signal complexe en bande base du premier paquet est supprimé par SIC du signal reçu dans les tranches temporelles S1, S3 et S5 et un signal reçu mis à jour est obtenu.

Le décodage CRDSA est réitéré en choisissant comme nouvelle tranche temporelle de référence la tranche temporelle S3. La deuxième réplique $266_2$ du troisième paquet 266 qui est contenue dans la nouvelle tranche temporelle de référence S3 est identifiée comme une réplique propre. Le troisième paquet 266 est alors décodé à l'aide de cette deuxième réplique et les positions des première et troisième répliques du troisième paquet sont déterminées. Puis le signal complexe en bande base du troisième paquet est supprimé par SIC du signal reçu dans les tranches temporelles S2, S3 et S5 et un nouveau signal reçu mis à jour 274 est obtenu.

Ce nouveau signal reçu mis à jour 274 va servir de signal d'entrée dans la Figure 7B pour les traitements de l'étape 226 concernant la résolution des conflits inter-paquet non résoluble par le protocole CRDSA et associé au protocole « SPoTIT aléatoire ».

En effet, on peut constater que le nouveau signal reçu mis à jour rend inopérant le décodage classique du protocole CRDSA.

Suivant la Figure 7B, la première-sous étape 242 de la sixième étape 226 étant mise en oeuvre, la tranche temporelle S0 est choisie comme tranche temporelle de référence. Les quatrième et cinquième préambules sont détectés dans la tranche temporelle de référence S0 par corrélation avec les préambules possibles, et le quatrième préambule est choisi de manière arbitraire.

Puis, à l'aide de la connaissance du graphe {u, $F_{PSR}(u)$}, deux corrélations inter-tranche de localisation sont effectuées, l'une entre le signal complexe en bande de base contenu dans la tranche temporelle de référence S0 et le signal complexe en bande de base contenu dans la tranche temporelle S4, l'autre entre le signal en bande de base contenu dans la tranche temporelle de référence S0 et le signal complexe en bande de base contenu dans la tranche temporelle S6, conduisant à un premier pic de corrélation de localisation 276 et un deuxième pic de corrélation de localisation 278.

Les premier et deuxième pics de corrélation de localisation 276 et 278 permettent de valider les positions et la qualité de réception des deuxième et troisième répliques $268_2$ et $268_3$ du quatrième paquet 278, lorsqu'ils dépassent chacun une valeur de seuil prédéterminée.

Les premier et deuxième pics de corrélation de localisation 276 et 278 permettent alors d'estimer des paramètres de fréquence, de temporisation, de phase et d'amplitude de chaque réplique localisée servant à calculer le signal somme en bande de base.

La combinaison des signaux complexes en bande de base contenus dans les tranches temporelles S0, S4 et S6 est effectuée et la somme calculée des première, deuxième, troisième répliques $268_1$, $268_2$, $268_3$, du quatrième paquet 268 est extraite, démodulée et décodé. Puis le signal complexe en bande base du quatrième paquet 268 décodé est supprimé par SIC du signal reçu 274 dans les tranches temporelles S0, S4 et S6 et un nouveau signal reçu mis à jour est obtenu.

Le nouveau signal reçu mis à jour permet alors d'utiliser à nouveau un décodage classique du protocole CRDSA et de décoder successivement le cinquième paquet 270 et le deuxième paquet 264.

Il est à remarquer qu'en variante, le cinquième préambule aurait pu être choisi dans la tranche temporelle de référence S0, ce qui aurait conduit alors au calcul de deux corrélations inter-tranches de localisation des deuxième et troisième répliques $270_2$, $270_3$ du cinquième paquet 270, l'une entre le signal contenu dans la tranche temporelle de référence S0 et le signal contenu dans la tranche temporelle S2, l'autre entre le signal contenu dans la tranche temporelle de référence S0 et le signal contenu dans la tanche temporelle S6.

Suivant la Figure 7C et à titre de comparaison avec les traitements du protocole « SPoTIT aléatoire » selon l'invention de la Figure 7B utilisés après le blocage du décodage classique CRDSA, les traitements de décodage du protocole MARSALA sont utilisés après le blocage du décodage classique CRDSA.

Suivant la première-sous étape 142 de la sixième étape 126, la tranche temporelle S0 est choisie comme tranche temporelle de référence. Les quatrième et cinquième préambules sont détectés dans la tranche temporelle S0 par corrélation avec tous les préambules possibles, et le quatrième préambule est choisi de manière arbitraire à l'instar de ce qui a été fait pour le procédé SPoTIT « aléatoire » de la Figure 7B.

Dans le traitement MARSALA, la station de réception n'ayant aucune connaissance au préalable des positions possibles des répliques d'un ou plusieurs paquets ayant le même préambule, $N_S$ - 1 corrélations inter-tranches temporelles de localisation devront toujours être effectuées.

Ici, la tranche temporelle de référence considérée étant S0, sept corrélations de localisation de réplique sont calculées entre le signal complexe en bande de base contenu dans la tranche temporelle en bande de base contenu dans la tranche temporelle de référence S0 et chacun des signaux respectifs contenus dans le tranches temporelle S1, S2, S3, S4, S5, S6 et S7.

Une première corrélation de localisation de réplique est calculée entre le signal complexe en bande de base contenu dans la tranche temporelle de référence S0 et le signal complexe en bande de base contenu dans la tranche temporelle S2, une deuxième corrélation de localisation de réplique est calculée entre le signal complexe en bande de base contenu dans la tranche temporelle de référence S0 et le signal complexe en bande de base contenu dans la tranche temporelle S4, et une troisième corrélation de localisation de réplique est calculée entre le signal en bande de base contenu dans la tranche temporelle de référence S0 et le signal complexe en bande de base contenu dans la tranche temporelle S6, conduisant à un premier pic de corrélation de localisation 286, un deuxième pic de corrélation de localisation 288, et un troisième pic de corrélation 290.

S'agissant des autres corrélations effectuées, elles conduisent à des signaux de type bruit d'amplitudes nettement inférieures à celles des pics de corrélation de localisation 286, 288, 290.

Les caractéristiques des premier, deuxième et troisième pics de corrélation sont exploitées pour déterminer la ou les répliques du quatrième paquet 268 les plus propres à être combinées. Ici, le deuxième pic de corrélation 288 est préférée comme présentant le rapport signal à bruit plus interférence par rapport aux rapports signal à bruit plus interférence des premier et troisième pics de corrélation 286, 290.

Le deuxième pic de corrélation de localisation 288 permet alors d'estimer des paramètres de fréquence, de temporisation, de phase et d'amplitude de la réplique localisée servant à calculer le signal somme en bande de base.

La combinaison des signaux complexes en bande de base, contenus dans les tranches temporelles S0 et S4 et S6 est effectuée ensuite, à l'instar du procédé de décodage « SPoTIT aléatoire » de la Figure 7B, et la somme calculée des première et deuxième répliques $268_1$, $268_2$, du quatrième paquet 268 est extraite, démodulée et décodé. En outre, les données de signalisation du quatrième paquet 268 démodulée permet de déterminer la position de le deuxième réplique 2683 du quatrième paquet 268.

Puis, à l'instar du traitement décrit de la Figure 7B, le signal complexe en bande base du quatrième paquet 268 décodé est supprimé par SIC du signal reçu 274 dans les tranches temporelles S0, S4 et S6 et un nouveau signal reçu mis à jour est obtenu. Le nouveau signal reçu mis à jour permet alors d'utiliser à nouveau un décodage classique du protocole CRDSA et de décoder successivement le cinquième paquet 270 et le deuxième paquet 264.

Les corrélations de localisation au niveau de la réception se réduiront au nombre de paquets avec le même préambule qui sont potentiellement présents dans la tranche temporelle analysée. Ces corrélations de localisation servent à savoir lesquelles parmi les paquets potentiels ont transmis dans la trame reçue.

Cela permet de garder exactement les mêmes performances que celles obtenu avec le procédé classique MARSALA mais réduit considérablement la complexité du procédé utilisé selon l'invention en termes de corrélations en réduisant le nombre de corrélations de localisation des répliques requises au décodage d'un paquet lorsque le décodage du protocole CRDSA est bloqué.

Suivant le protocole SPoTIT « aléatoire », à la réception des trames, la station de réception calcule toutes les positions potentielles des paquets de chaque abonné connecté grâce à la connaissance de la graine Gr(u) statique ou dynamique de l'abonné u et l'algorithme de la fonction de distribution $F_{PSR}$. De manière générale, pour chaque tranche temporelle des trames synchrones reçues ou des trames virtuelles asynchrones reçues, la station de réception connaît tous les terminaux utilisateurs potentiels qui ont pu envoyer des paquets. Lorsque la présence d'un préambule est détectée dans une tranche temporelle analysée de référence grâce à un pic de corrélation, il est seulement nécessaire dans le protocole SPoTIT « aléatoire » d'effectuer des corrélations de localisation sur les tranches temporelles pouvant contenir une réplique dont le préambule est celui détecté dans la tranche temporelle de référence en cours d'analyse.

Par exemple, dans le cas d'un procédé et système de transmission « SPoTIT aléatoire » à deux répliques ($N_R$=2), si quatre paquets potentiels d'un même préambule se trouvent sur une même tranche temporelle de référence, seulement quatre corrélations de localisation de répliques seront effectuées, les corrélations de localisation de répliques correspondant aux quatre tranches temporelles contenant les deuxièmes répliques des quatre paquets potentiellement en collision, à la place d'un nombre de corrélations de corrélations de localisation de répliques égal au nombre total de slots moins un, i.e. $N_S$ - 1 , dans le cas d'un procédé et système de transmission utilisant le protocole MARSALA. Par exemple, pour un nombre de tranches temporelles par trame $N_S$ égal à 100, le nombre de corrélations de localisation de répliques sera égal à 99.

De manière générale, lorsque le processus de décodage suivant le protocole CRDSA est bloqué et qu'aucun paquet ne peut être décodé, le processus de décodage MARSALA va choisir une tranche temporelle de référence afin d'effectuer des corrélations inter-tranche temporelles de localisation nécessaires à la localisation des répliques des paquets en collision sur ce slot. Ce nombre de corrélations de localisation $N_{corr\_loc}$ dans le cas d'un décodage de protocole MARSALA à deux répliques ($N_R$=2) dépend du nombre de tranches temporelles $N_S$ suivant la relation :

$$\mathrm{Nb_{corr\_loc}} = (N_s - 1) \, .$$

A l'inverse, lorsque le processus de décodage SPoTIT aléatoire est utilisée après un blocage du protocole CRDSA, le nombre corrélations de localisation des répliques dépend du nombre potentiel de paquets en collision$N_{PKU}$ se trouvant dans la tranche temporelle de référence en cours d'analyse suivant la relation :

$$\mathrm{Nb_{corr\_loc}} = N_{PKU}$$

Suivant la Figure 8, la comparaison de l'évolution du nombre de corrélations de localisation de répliques $Nb_{corr\_loc}$ en fonction du nombre de paquets potentiels en collisions sur la tranche temporelle $N_{PKU}$ entre un décodage du protocole MARSALA et un décodage du protocole SPoTIT aléatoire est illustrée à l'aide d'une première courbe d'évolution 294 et d'une deuxième courbe d'évolution 296, correspondant respectivement au protocole MARSALA et au protocole SPoTIT « aléatoire ». Dans cette comparaison, le nombre de répliques d'un paquet $N_R$ et le nombre de tranches temporelles par trame $N_S$ sont supposés respectivement égaux à 2 et 100, indépendamment du protocole utilisé.

Il est à remarquer que le nombre de corrélations de localisation de répliques peut être diminué dans le décodage du protocole SPoTIT « aléatoire » en augmentant le nombre de préambules d'acquisition $N_P$ , ce qui a pour effet de diminuer le nombre de paquets potentiels utilisant le même préambule en collision sur la tranche temporelle de référence $P_{PKU}$.

Suivant un deuxième mode de réalisation particulier 302 du procédé de transmission 102 selon l'invention, désigné par SPoTIT « intelligent », (« smart » en anglais) et correspondant à un deuxième mode de réalisation de la fonction F, désignée par $F_{SMART}$ , la fonction $F_{SMART}$ est une fonction d'attribution et de distribution déterministe « intelligente » des vecteurs de positions des $N_R$ répliques au sein de chaque trame parmi l'ensemble de tous les vecteurs possibles de positions de $N_R$ répliques dans l'ensemble des tranches temporelles de la trame et des séquences d'acquisition associées aux différentes répliques émises parmi toutes les séquences d'acquisition possibles, le graphe {(u, $F_{SMART}$(u)} étant déterminé de sorte à faire correspondre à chaque séquence d'acquisition gj utilisée de l'ensemble des séquences d'acquisition {gj} un ensemble Tj de terminaux utilisateurs Ujk et un pluralité de vecteurs Vjk(Pgj(1),...,Pgj(R)) de positions de $N_R$ répliques, différents entre eux par au moins une position.

Le contrôle direct des positions des répliques et des préambules, associés sur la trame aux terminaux utilisateurs, évite l'utilisation du même préambule sur la même tranche et élimine les boucles de données entre utilisateurs à un certain degré, une boucle survenant lorsque deux terminaux utilisateurs ou plus utilisent $N_R$ mêmes tranches temporelles. Ce contrôle permet, en plus de la réduction de complexité de traitement, d'améliorer les performances en termes de taux de pertes de paquet PLR grâce à l'élimination de l'utilisation de corrélations de localisation de répliques. Cela est dû à la disparition du plancher d'erreurs qui est créé par les boucles dans les charges faibles du réseau.

De manière particulière, le nombre de répliques par paquet $N_R$ est supposé égal à 2 dans tout ce qui suit.

La fonction d'attribution $F_{SMART}$ est configurée de sorte à éviter toute possibilité de boucle et ainsi éviter tout recours à une corrélation de localisation de répliques.

On sait que le nombre C1 de combinaisons de $N_R$ positions de répliques parmi $N_S$ tranches temporelle d'une trame temporelle est égal à :

$$C1 = \frac{N_S!}{(N_S - N_R)!}$$

En utilisant un procédé de transmission 302 selon l'invention qui évite ou élimine les boucles potentielles pour lesquelles (p1=k, p2=m) =(p2=k, p1=m), p1, p2 désignant les positions respectives des première et deuxième répliques d'un paquet, étant différent de j, le nombre C2 de combinaisons admissibles de $N_R$ positions de répliques parmi $N_S$ tranches temporelle d'une trame temporelle sans boucle es alors égal à :

$$C2 = \frac{\check{N}_S!}{N_R * (N_S - N_R)!}$$

Par exemple, lorsque le nombre de tranches temporelles par trame est égal à 100, le nombre C2 est égal à 100*99/2, le nombre $N_R$ de répliques d'un paquet étant supposé égal à 2.

Il est à remarquer que jusqu'à présent, seules les boucles concernant le choix des tranches temporelles sont évitées.

Afin d'éliminer les corrélations liées à la localisation des répliques d'un paquet, les préambules d'acquisition qui forment des signaux pseudo-orthogonaux entre eux sont également exploités. Cela a pour effet de réduire le nombre de combinaisons de couples de positions des répliques possibles, c'est-à-dire aussi le nombre possible de terminaux utilisateurs ou abonnés rattachés à une même réception possible.

La fonction d'attribution des ressources $F_{SMART}$ est définie de sorte que toutes les collisions potentielles de paquets sur une tranche temporelle donnée soient discernables en utilisant uniquement la caractéristique pseudo-orthogonale des préambules d'acquisition à cette fin. Comme cela est connu, les codes de Gold permettent de conférer une telle propriété de pseudo-orthogonalité aux séquences ou préambules d'acquisition utilisés par le procédé de transmission 302.

Etant remarqué le fait que c'est la détection d'un code d'une séquence d'acquisition qui est unique dans une tranche temporelle qui permet d'éviter l'utilisation de corrélations en bande base de localisation sur les données des répliques, afin de pouvoir être identifié, un code d'une séquence d'acquisition devra être utilisé par un ensemble de combinaisons de couples uniques qui ne présentent aucune boucle entre eux et aucune répétition de préambule.

Plusieurs méthodes ou techniques permettant de construire une fonction d'attribution intelligente $F_{SMART}$ peuvent être utilisées dans laquelle les couples de tranches temporelles sont choisies de manière unique pour un même préambule d'acquisition.

Ici et à titre d'exemple, une technique, basée sur des décalages circulaires concernant le choix de la position de la deuxième réplique pour un même groupe de couples de positions de répliques utilisant un même préambule en cas de transmission, est décrite. Suivant cette technique, seules des corrélations de préambules d'acquisitions seront exploitées lors du décodage.

Il est supposé ici que le nombre de tranches temporelles par trame $N_S$ est un nombre pair et que le nombre de préambules d'acquisition $N_P$ est égal à $N_S/2$.

Un ensemble de groupes $G_{1j}$ de premier niveau de terminaux utilisateurs, j variant de 0 à $N_P$-1 , est défini de la manière suivante.

Chaque utilisateur Ujk au sein d'un même groupe $G_{1j}$,k variant de 0 à $\frac{N_S}{2} - 1$ , utilise le même préambule gj, caractérisé par l'indice j, l'indice j désignant également l'ordre du décalage circulaire effectué sur la position de la deuxième réplique. Chaque utilisateur 'Ujk', k envoie donc ses deux répliques de paquet, la première réplique et la deuxième réplique, sur les tranches temporelles ayant les positions respectives P1gj(k) et P2gj(k), tous les couples étant différents pris deux à deux sur chacune de leur composante, ici au nombre de deux.

Chaque groupe $G_{1j}$ d'utilisateurs Ujk de premier niveau, j étant un indice entier compris dans l'intervalle :

$[0, \frac{N_S}{2} - 1 ]$ est caractérisée par la donnée d'un ensemble de triplets R(1,j,k) de ressources formés chacun pour k variant de 0 à $\frac{N_S}{2} - 1$ :

.- le préambule d'acquisition gj d'indice j,
.- une première position de réplique P1gj(k),
.- une deuxième position de réplique P2gj(k),

les première et deuxième positions étant définies par les relations :

$$P1gj(\text{k}) = \text{k} \ \text{ et } P2gj(k) = \frac{N_S}{2} + ([j+k](mod \ N_p))$$

, l'opérateur mod $N_P$ désignant l'opérateur arithmétique « modulo $N_P$ ».

{P1gj(k)}, k variant de 0 à $\frac{N_S}{2} - 1$ , représente l'ensemble associé au préambule d'acquisition gj et au décalage j, des choix de la position de la première réplique pour chaque abonné Ujk.

[P2gj(k}, k variant de 0 à $\frac{N_S}{2} - 1$ , représente de manière correspondante l'ensemble associé au préambule d'acquisition gj et au décalage j, des choix de la position de la deuxième réplique pour chaque abonné Ujk.

Comme il y a $N_P$ décalages possibles, il y a donc $N_P$ groupes $G_{1,j}$ de $N_P$ différents préambules d'acquisition, chaque groupe $G_{1,j}$ ayant $\frac{N_S}{2}$ terminaux utilisateurs, connectés à la station de réception. Au total, l'ensemble des $N_P$ groupes de premier de niveau $G_{1,j}$ possède $\frac{N_S}{2} * N_P$ terminaux utilisateurs abonnés.

Il est à remarquer que certains triplets supplémentaires pourraient être utilisés, comme par exemple le triplet $(g_0, 0, 1)$ qui peut être utilisé en complément du groupe $G_{1,0}$ associé au préambule g0 et qui peut être décodé sans avoir recours à des corrélations de localisation de réplique.

Afin d'exploiter toutes les combinaisons possibles de préambule d'acquisition, de première et deuxième positions, et d'enrichir les combinaisons offertes par les groupes de premier niveau, des groupes $G_{i,j}$ de niveau i supérieur au premier niveau (i=1) peuvent être crées, le cardinal d'un groupe $G_{i+1,j}$ de niveau supérieur i+1 associé à un préambule d'acquisition gj étant égal à la moitié du cardinal $G_{i,j}$ du groupe de niveau inférieur i correspondant. Cela permet d'obtenir un ensemble de groupes de terminaux utilisateurs abonnés formant une pluralité d'abonnés qui se partagent à nombre égal les $N_P$ préambules d'acquisition et ne nécessitent aucune corrélation de localisation de réplique pour décoder les paquets reçus. En outre le nombre total C3 des terminaux utilisateurs de cette pluralité est maximal et égal à :

$$\frac{N_S*(N_S-1)}{2}$$

Ce nombre C3 est égal et correspond au coefficient binomial $\binom{N_S}{N_R}$ .

Les abonnés d'un même groupe $G_{i,j}$ de niveau i et d'indice de décalage utilisent le même préambule gj d'indice j.

Dans ce qui suit, il est supposé que le nombre de tranches temporelles par trame $N_S$ est une puissance de 2 et que le nombre de préambules d'acquisition $N_P$ est égal au nombre de tranches temporelles par trame $N_S$ divisé par 2.

Par la suite le nombre entier $N_L$ désigne le nombre total de niveaux des groupes formant la pluralité des terminaux utilisateurs et est égal au logarithme en base 2 du nombre de tranches temporelle par trame NS suivant la relation : $N_L = log_2(N_S)$

A chaque niveau i, i variant de 1 à $N_L$, correspond un nombre $N_E(i)$, égal à $2^{i-1}$, d'ensembles $E_{i,s}$ d'indices de tranches temporelle, avec s variant de 1 à $N_E(i)$.

Chaque ensemble $E_{i,s}$, s étant compris entre 1 et $N_E(i)$, comprend un nombre $N_{SS}(i)$, égal à $\frac{N_S}{2^{i-1}}$ , d'indices de tranches temporelle ordonnés.

L'ensemble $E_{i,s}$ est défini par l'expression :

$$E_{i,s} = \{B_{inf}(i,s), \dots M(i,s) \dots, B_{sup}(i,s)\}$$

dans laquelle

$B_{inf}(i, s)$ est égal à (s-1)* $N_{SS}(i)$, et
$B_{sup}(i, s)$ est égal à s*$N_{SS}(i)$-1, et

$M(i, s)$ est égal à $B_{inf}(i,s) + \frac{B_{sup}(i,s)+1-B_{inf}(i,s)}{2}$ .

A chaque ensemble $E_{i,s}$ correspond $N_{SS}(i)$ préambules d'acquisition gj avec:

$$(s-1)*\left(\frac{N_S}{2^i}\right) \leq j \leq s*\left(\frac{N_S}{2^i}\right) - 1$$

et $\frac{N_S}{2^i}$ terminaux utilisateurs, Uijk.

Pour chaque niveau i, un ensemble de $N_P$ groupes $G_{i,j}$ de i-ième niveau de terminaux utilisateurs Uijk, j variant de 0 à $N_P$ - 1 , est défini de la manière suivante.

Pour chaque niveau i avec $1 \leq i \leq N_L$ correspond $2^{i-1}$, d'ensembles $E_{i,s}$ d'indices de tranches temporelle, avec s variant de 1 à $N_E(i)$ et $N_E(i)$ égal à $2^{i-1}$.

Pour chaque niveau i et chaque indice s(i) d'un ensembles $E_{i,s}$ , avec l'indice s vérifiant $1 \leq s \leq 2^{i-1}$ , correspond $N_{SS}(i)$ préambules d'acquisition gj avec l'indice j vérifiant :

$$(s-1)*\left(\frac{N_S}{2^i}\right) \leq j \leq s*\left(\frac{N_S}{2^i}\right) - 1$$

Chaque utilisateur Uijk appartenant à un même groupe $G_{i,j}$ , avec k variant de 0 à $\frac{N_S}{2^i} - 1$ , utilise un même préambule gj , caractérisé par son indice j avec $(s-1)*\left(\frac{N_S}{2^i}\right) \leq j \leq s*\left(\frac{N_S}{2^i}\right) - 1$

Cet indice j est également l'ordre d'un décalage circulaire à effectuer sur la position de la deuxième réplique au sein du groupe $G_{i,j}$ .

Chaque utilisateur Uijk du groupe $G_{i,j}$ envoie sa première réplique et sa deuxième réplique sur deux tranches temporelles ayant une première position et une deuxième position P1(Uijk) et P2(Uijk) définies en termes d'indices de tranche temporelle, tous les couples de position étant différents pris deux à deux sur chacune de leur composante au sein du groupe $G_{i,j}$.

Chaque groupe $G_{i,j}$ d'utilisateurs Uijk de niveau i et de décalage j , i variant de 1 à $N_L$ et j étant compris dans l'intervalle [0, $N_P$-1], est caractérisé par la donnée d'un ensemble Rij de triplets R(Uijk) de ressources formés chacun pour k variant de 0 à $\frac{N_S}{2^i} - 1$ ,

.- le préambule gj d'indice j,

.- une première position de réplique P1(Uijk),

.- une deuxième position de réplique P2(ijk),

Les indices i let j étant fixé, les première et deuxième positions d'un terminal Uijk sont définies par les deux relations :

$$P1(Uijk) = B_{inf}(i,s) + k \text{ , et}$$

$$P2(Uijk) = M(i,s) + \left[j\left(mod\ \frac{N_P}{2^{i-1}}\right) + k\right]\left[mod\ \frac{N_P}{2^{i-1}}\right]$$

.- l'indice $\underline{s}$ vérifiant la relation : $(s-1)*\left(\frac{N_S}{2^i}\right) \leq j \leq s*\left(\frac{N_S}{2^i}\right) - 1$ ; et

.- $B_{inf}(i, s)$ étant égal à (s-1)* Nss(i) avec Nss(i), égal à $\frac{N_S}{2^{i-1}}$ ; et.

.- $M(i, s)$ étant égal à $B_{inf}(i,s) + \frac{B_{sup}(i,s)+1-B_{inf}(i,s)}{2}$ et $B_{sup}(i,s)$ étant égal à s*$N_{SS}(i)$-1 ; et.

.- l'opérateur $mod\ \frac{N_P}{2^{i-1}}$ désignant l"opérateur arithmétique « modulo $\frac{N_P}{2^{i-1}}$ ». avec lm lm lm l ml lcm.

Il y a donc pour chaque niveau i, $N_P$ groupes $G_{i,j}$ j variant de 1 à $N_P$, contenant chacun $\dfrac{N_S}{2^i}$ terminaux utilisateurs Uijk et utilisant un préambule d'acquisition différent.

Suivant les Figures 9A, 9B et 9C un exemple est fourni pour la construction des groupes $G_{i,j}$ de terminaux utilisateur à partir d'ensembles $E_{i,s}$ d'indices de trame dans le cas particulier où le nombre $N_S$ de tranches temporelles par trame est égal à 8 pour un procédé de transmission à deux répliques, c'est-à-dire $N_R$ égal à 2.

Dans ce cas le nombre de préambules d'acquisitions $N_P$ est égal à 4, le nombre de niveaux $N_L$ est égal à 3 et le nombre $N_U$ de terminaux connectés de la pluralité est égal à 28.

La première et la deuxième colonne de chaque groupe $G_{i,j}$ présentent respectivement les positions P2, P2 des premières répliques et des deuxièmes répliques des abonnés dans ce groupe.

Suivant la Figure 9A, les quatre groupes $G_{1,0}$ , $G_{1,1}$ , $G_{1,2}$ , $G_{1,3}$ de premier niveau (i=1) sont représentés de gauche à droite, sont respectivement associés aux préambules d'acquisition g0, g1, g2 et g3, et ont chacun quatre terminaux utilisateurs abonnés.

Les quatre groupes $G_{1,0}$ , $G_{1,1}$ , $G_{1,2}$ , $G_{1,3}$ sont chacun construits à partir de l'ensemble d'indices $E_{1,1}$ = {0, 1, 2, 3, 4, 5, 6, 7} .

La première colonne de première position P1 de chaque groupe $G_{1,0}$ , $G_{1,1}$ , $G_{1,2}$ , $G_{1,3}$ est la première moitié de haut en bas de l'ensemble $E_{1,1}$. La deuxième colonne P2 de chaque groupe $G_{1,0}$ , $G_{1,1}$ , $G_{1,2}$ , $G_{1,3}$ est obtenue respectivement à partir de la première colonne P1 de chaque groupe $G_{1,0}$ , $G_{1,1}$ , $G_{1,2}$ , $G_{1,3}$ en utilisant un décalage circulaire correspondant de rang j effectué au sein de $E_{1,,1}$.

Suivant la Figure 9B, les quatre groupes $G_{2,0}$ , $G_{2,1}$ , $G_{2,2}$ , $G_{2,3}$ de deuxième niveau (i=2) sont représentés de gauche à droite, sont respectivement associés aux préambules d'acquisition g0, g1, g2 et g3 et ont chacun deux terminaux utilisateurs abonnés.

Les deux groupes $G_{2,0}$ , $G_{2,1}$ , sont chacun construits à partir de l'ensemble d'indices $E_{2,1}$ = {0, 1, 2, 3} .

Les deux groupes $G_{2,2}$ , $G_{2,3}$ sont chacun construits à partir de l'ensemble d'indices $E_{2,2}$ = {4, 5,6, 7} .

La première colonne de première position P1 de chaque groupe $G_{2,0}$ , $G_{2,1}$ est la première moitié de haut en bas de l'ensemble $E_{2,1}$.

La première colonne de première position P1 de chaque groupe $G_{2,2}$ , $G_{2,3}$ est la première moitié de haut en bas de l'ensemble $E_{2,2}$.

La deuxième colonne P2 de chaque groupe $G_{2,0}$ , $G_{2,1}$ est obtenue à partir de la première colonne P1 de chaque groupe $G_{2,0}$ , $G_{2,1}$ en utilisant un décalage circulaire correspondant de rang j effectué au sein de $E_{2,1}$.

La deuxième colonne P2 de chaque groupe $G_{2,2}$ , $G_{2,3}$ est obtenue à partir de la première colonne P1 de chaque groupe $G_{2,2}$ , $G_{2,3}$ en utilisant un décalage circulaire correspondant de rang j effectué au sein de $E_{2,2}$.

Suivant la Figure 9C, les quatre groupes $G_{3,0}$ , $G_{3,1}$ , $G_{3,2}$ , $G_{3,3}$ de troisième niveau (i=3) sont représentés de gauche à droite, sont respectivement associés aux préambules d'acquisition g0, g1, g2 et g3 et ont chacun un terminal utilisateur abonné.

Le groupe $G_{3,0}$ est construit à partir de l'ensemble d'indices $E_{3,1}$ = {0,1} . Le groupe $G_{3,1}$ est construit à partir de l'ensemble d'indices $E_{3,2}$ = {2,3} . Le groupe $G_{3,2}$ est construit à partir de l'ensemble d'indices $E_{3,2}$ = {4,5} . Le groupe $G_{3,3}$ est construit à partir de l'ensemble d'indices $E_{3,3}$ = {6,7} .

La première colonne de première position P1 et la deuxième colonne de deuxième position P2 du groupe $G_{3,0}$ sont respectivement égales à {0} et {1}. La première colonne de première position P1 et la deuxième colonne de deuxième position P2 du groupe $G_{3,1}$ sont respectivement égales à {2} et {3}. La première colonne de première position P1 et la deuxième colonne de deuxième position P2 du groupe $G_{3,2}$ sont respectivement égales à {4} et {5}. La première colonne de première position P1 et la deuxième colonne de deuxième position P2 du groupe $G_{3,3}$ sont respectivement égales à {6} et {7}.

De manière générale, il peut être démontré que la totalité de premières ou deuxièmes répliques d'un groupe $G_{1,j}$ de premier niveau associé à un préambule d'acquisition présente aucune interférence avec les paquets du groupe de deuxième niveau $G_{2,j}$ associé au même préambule d'acquisition.

Il peut être démontré également que chaque groupe $G_{i,j}$ d'un niveau i quelconque possède une des deux composantes de positionnement des répliques, P1 ou P2, qui n'est pas interférée par le groupe $G_{i+1,j}$ qui lui est associé au niveau supérieur i+1, c'est-à-dire celui qui utilise la même préambule gj.

De manière générale, lorsqu'un système de transmission selon l'invention satisfait les hypothèses suivantes :

.- le nombre de répliques $N_R$ est fixé à 2 ; et

.- il n'y a pas de restriction sur le nombre de préambules d'acquisition pouvant être détectés et décodés par tranche temporelle ; et

.- le système de transmission est synchrone et utilise la suppression d successive d'interférences ; et

.- deux terminaux ne peuvent pas utiliser deux mêmes tranches temporelles, i.e. n'engendrent pas de boucles, alors le nombre maximum d'utilisateurs $N_U$ dudit système n'utilisant que les détections basés sur les préambules d'acquisition est égal au coefficient binomial de Newton $\binom{N_S}{N_P}$, c'est-à-dire : $\frac{N_S*(N_S-1)}{2}$

Un algorithme, configuré pour commencer le décodage par les paquets du premier niveau, permet de débloquer les niveaux supérieurs un par un.

Suivant les Figures 10A, 10B, 10C, 10D, considérons un préambule d'acquisition donné, par exemple le préambule g0, et le pire scénario où tous les groupes de ce préambule d'acquisition appartenant aux différents niveaux ont transmis sur la trame qui comporte ici 8 tranches temporelles. Les paramètres $N_S$, $N_P$, $N_L$, considérés dans cet exemple de système de transmission, sont respectivement égaux à 8, 4 et 3.

Le premier niveau, désigné par « Niveau 1 », utilise l'ensemble d'indices $E_{1,1}$ = {0,1, 2, 3, 4, 5, 6, 7} , partagé par quatre groupes de terminaux utilisateurs, associés respectivement à des préambules d'acquisition différents g0, g1, g2, g3, et ayant chacun quatre terminaux utilisateurs.

Le deuxième niveau, désigné par « Niveau 2 », utilise un premier ensemble d'indices $E_{2,1}$ = {0, 1, 2, 3} et un deuxième ensemble d'indices $E_{2,2}$ = {4, 5,6, 7} . Le premier ensemble $E_{2,1}$ est partagé par deux premiers groupes $G_{2,0}$ , $G_{2,1}$ de terminaux de deuxième niveau, associés aux préambules d'acquisition g0, g1, et ayant chacun deux terminaux utilisateurs. Le deuxième ensemble $E_{2,2}$ est partagé par deux deuxièmes groupes $G_{2,2}$ , $G_{2,3}$ de terminaux de deuxième niveau, associés aux préambules d'acquisition g2, g3, et ayant chacun deux terminaux utilisateurs.

Le troisième niveau, désigné par « Niveau 3 », utilise quatre ensembles d'indices $E_{3,1}$ = {0,1} , $E_{3,2}$ = {0,1} , $E_{3,3}$ = {0,1} , $E_{3,4}$ = {0,1} , associés respectivement aux groupes d'utilisateurs $G_{3,0}$ , $G_{3,1}$ $G_{3,2}$ , $G_{3,3}$ de troisième niveau, eux-mêmes associés aux préambules g0, g1, g2, g3 , et ayant chacun abonné.

Suivant la Figure 10A, le préambule d'acquisition g0 pris comme exemple occupe au niveau 1 toute la trame correspondant à l'ensemble des indices de tranche $E_{1,1}$ = {0,1, 2, 3, 4, 5, 6, 7} et au niveau 2 les tranches temporelles correspondant à l'ensemble des indices de tranche $E_{2,1}$ i= {0, 1, 2, 3}, et au niveau 3 les tranches temporelles correspondant à l'ensemble des indices de tranche $E_{3,1}$ = {0,1}.

Il est à remarquer que les deuxièmes répliques du niveau 1 sont uniques sur la moitié des tranches temporelles de la trame. En supposant que tous les utilisateurs $U_1$, $U_2$, $U_3$, $U_4$ de ce niveau sont décodés en appliquant le SIC, les 2 paquets du niveau 2 $U_{17}$, $U_{18}$ auront aussi les deuxièmes répliques uniques sur la moitié de l'ensemble des slots {0...1...3}. Ainsi lorsque ces deux paquet sont décodés avec succès, le paquet $U_{25}$ du niveau 1 sera aussi décodable. Cela reste valable pour tout groupe de préambule.

Suivant la Figure 10B, les groupes des terminaux de premier niveau $G_{1,0}$ , $G_{1,1}$ associés aux premier et deuxième préambules d'acquisition g0, g1 sont configurés de sorte à utiliser de manière unique leur préambule dans les tranches temporelles de la moitié droite de la trame, i.e. les tranches temporelles dont les indices appartiennent à l'ensemble {4, 5, 6, 7}.

Les groupes des terminaux de premier niveau $G_{1,2}$ , $G_{1,3}$ associés aux deuxième et troisième préambules d'acquisition g2, g3 sont configurés de sorte à utiliser de manière unique leur préambule dans les tranches temporelles de la moitié gauche de la trame, i.e. les tranches temporelles dont les indices appartiennent à l'ensemble {0, 1, 2, 3}.

Il apparait que la suppression successive des interférences SIC des paquets de niveau 1 permet de rendre uniques les préambules d'acquisition des terminaux abonnés du niveau 2 et ainsi de suite. De manière récurrente, chaque niveau de niveau inférieur i débloque le niveau supérieur suivant i+1, jusqu'à épuisement des niveaux.

Ainsi tous les terminaux abonnés de « niveau 1 » à préambules d'acquisition uniques dans leurs tranches temporelles sur l'une des deux répliques, i.e. $U_1$, $U_2$, $U_3$, $U_4$, $U_5$,$U_6$, $U_7$, $U_8$, $U_9$, $U_{10}$, $U_{11}$, $U_{12}$,$U_{13}$, $U_{14}$, $U_{15}$ , $U_{16}$ , peuvent être détectés et décodés.

Suivant la Figure 10C, une fois tous les paquets de « niveau 1 » décodés et supprimés par l'annulation successive d'interférences successive SIC, le même processus est répété. Alors, les terminaux utilisateurs de « niveau 2 » à préambules d'acquisition uniques dans leurs tranches temporelles sur l'une des deux répliques, i.e. $U_{17}$, $U_{18}$, $U_{19}$, $U_{20}$, $U_{21}$, $U_{22}$, $U_{23}$, $U_{24}$, peuvent être détectés et décodés.

Suivant la Figure 10D, une fois tous les paquets de « niveau 2 » décodés et supprimés par l'annulation successive d'interférences successive SIC, le même processus est répété. Il ne reste plus que quatre terminaux utilisateurs de « niveau 3 » à préambules d'acquisition uniques dans leurs tranches temporelles. Ce sont les terminaux utilisateurs $U_{25}$, $U_{26}$, $U_{27}$, $U_{28}$.

Ainsi, la technique de construction des groupes $G_{i,j}$ , i variant de 1 à $N_L$ et j variant de 0 à $N_P$, permet de s'affranchir des corrélations inter-tranche de localisation de répliques. Seuls des corrélations de préambules d'acquisition sont à effectuer.

Suivant la Figure 11, le procédé de transmission SPoTIT « intelligent », ici désigné par 302, comprend une première étape 306 et une deuxième étape 308 comme mode particulier de réalisation des première et deuxième étapes 106, 108 de la Figure 3 dans le cas particulier où la fonction de distribution F est égale à une fonction $F_{SMART}$ de distribution intelligente de ressources en termes de préambules d'acquisition et de positions de $N_R$ répliques.

Le procédé de transmission 302 SPoTIT « intelligent » comporte ici à l'instar du procédé de transmission 102 de la Figure 3, une deuxième forme de réalisation 322 de la troisième étape 122 de la Figure 3 comportant une quatrième étape 324 de récupération et décodage de paquets utilisant un protocole de décodage CRDSA et identique à la quatrième étape 124 de la Figure 1, et une deuxième forme de réalisation 326 de la sixième étape 126 de la Figure 1, comportant un quatrième ensemble 340 de sous-étapes.

Les sous-étapes du quatrième sous-ensemble 340 consiste à :

.- dans une première sous-étape 342, sélectionner selon un ordre prédéterminé ou suivant un critère prédéterminé une tranche temporelle de référence dans la trame en cours de traitement parmi les tranches temporelles pour lesquelles un conflit non résolu de paquets a été détecté ; puis

.- dans une deuxième sous-étape 344, choisir de manière arbitraire ou suivant un critère prédéterminé dans la tranche temporelle de référence sélectionnée une séquence d'acquisition détectée et choisie parmi une ou plusieurs séquences d'acquisition détectées dans ladite tranche temporelle de référence ; puis

.- dans une troisième sous-étape 346, déterminer les positions dans la trame en cours de traitement des répliques possibles d'un même paquet associée à la séquence d'acquisition détectée et choisie à partir de toutes les positions des tranches temporelles de la trame dans lesquelles la séquence d'acquisition détectée et choisie a été détecté par corrélation courte et à partir du graphe {u ; $F_{SMART}$ (u)} ; puis

.- dans une quatrième sous-étape 348, identifier, parmi les tranches temporelles des répliques possibles d'un même paquet ayant la même séquence d'acquisition détectée et choisie, une tranche temporelle n'ayant qu'une seule réplique associée à la séquence d'acquisition choisie, le terminal associé et les autres répliques associées correspondant au même paquet, à l'aide du graphe{u ; $F_{SMART}$ (u)} ; puis

.- dans une cinquième sous-étape 352 de combinaison, calculer la somme des signaux en bande de base des répliques du terminal utilisateur identifié dont le paquet à décoder utilise la séquence d'acquisition détectée et choisie ; puis

.- dans une sixième sous-étape 354, démoduler et décoder la somme calculée lorsque la somme comprend un niveau de bruit situé au-dessous d'un seuil de bruit déterminé ; puis

.- dans une septième sous-étape 356, soustraire en bande de base du signal en cours de traitement le signal démodulé et décodé de la somme des répliques du paquet dans les tranches temporelles associées respectivement aux répliques de la somme.

Par exemple, un critère de choix de la séquence d'acquisition détecté peut être fondé sur un critère d'ordonnancement des rapports signal à bruit des séquences d'acquisition détectées.

La ou les séquences d'acquisition détectées sont déterminées en calculant des valeurs de pics de corrélations courtes en bande base entre les motifs de référence des séquences d'acquisition possibles attendues et le signal contenu dans la tranche temporelle de référence sélectionnée, et en sélectionnant comme séquences d'acquisition détectées les séquences d'acquisitions pour chacune desquelles un pic de corrélation présente une valeur, supérieure ou égale à un premier seuil de corrélation courte prédéterminé.

La ou les séquences d'acquisition détectés sont déterminées en calculant une pluralité de valeurs de corrélations courtes en bande de base entre les motifs de référence des séquences d'acquisition possibles attendues dans la tranche temporelle de référence et les signaux contenus dans les tranches temporelles pour lesquelles l'utilisation des motifs de référence, attendus dans la tranche temporelle de référence, est possible en vertu du graphe {u ; $F_{SMART}$ (u)}, et en sélectionnant comme séquences d'acquisition détectés les séquences d'acquisition pour chacune desquelles la somme des carrés des modules des valeurs de corrélation correspondant à un même motif de référence présente une valeur, supérieure ou égale à un deuxième seuil de corrélation courte prédéterminé.

La détection par corrélation courte de la ou des séquences d'acquisition dans la tranche temporelle de référence est effectuée au cours du processus de décodage classique du protocole CRDSA peu avant son blocage et sa suspension ou dans une sous-étape intermédiaire de détection par corrélation courte, interposée entre la première sous-étape 342 et la deuxième sous-étape 344 de la sixième étape 326.

La détection par corrélation courte de la séquence détectée et choisie dans les tranches temporelles restantes de la trame temporelle en cours de traitement est effectuée au cours du processus de décodage classique du protocole CRDSA peu avant son blocage et sa suspension ou dans une sous-étape intermédiaire de détection par corrélation courte, interposée entre la deuxième sous-étape 344 et la troisième sous-étape 346 de la sixième étape 326.

Il est à remarquer que la sixième étape peut comprendre également une huitième sous-étape 358 d'estimation des paramètres de fréquence, de temporisation, de phase et d'amplitude de chaque réplique localisée servant à calculer le signal somme en bande de base, la huitième sous-étape d'estimation 358 étant exécutée après la quatrième sous-étape 348 d'identification des répliques du paquet à décoder.

Les principaux tests de performances réalisés se font en fonction de la charge du réseau en bits/symbole nommée G. Elle dépend du nombre d'utilisateurs $N_U$, le nombre de slots par trame/trame virtuelle $N_S$, le taux de codage Rc et l'ordre de la modulation utilisé M, telle que :

$$G = \frac{N_u}{N_S} Rc * \log2(M) (bits/symbole)$$

Le taux de pertes en paquets PLR (en anglais Packet Loss Ratio) peut donc être mesuré pour une charge donnée et un rapport signal sur bruit SNR (Signal to Noise Ratio) donné en calculant la probabilité de pertes des paquets sur la trame. Le débit T en bits par symbole est quant à lui calculé de la manière suivante : T = G(1 - PLR(G))(bits/symbole)

Suivant la Figure 12, les évolutions du taux de pertes en paquets PLR en fonction de la charge du réseau G, exprimée en nombre de bits par symbole sont comparés pour quatre procédés de transmission utilisant un protocole différent.

Il est supposé ici qu'une modulation de phase de type QPSK (en anglais « Quadrature Phase Shift Keying ») et un codage du standard 3GPP, i.e. un turbo-code de taux 1/3 sont utilisés par les quatre procédés de transmission.

Une première courbe 404 représente en ordonnée l'évolution du taux de perte en paquets PLR en fonction de la charge du réseau G en abscisse pour un procédé de transmission utilisant un protocole CRDSA classique.

Une deuxième courbe 406 représente en ordonnée l'évolution du taux de perte en paquets PLR en fonction de la charge du réseau G en abscisse pour un procédé de transmission utilisant un protocole SPoTIT « intelligent » selon l'invention de 2500 abonnés limité au premier niveau avec 100 tranches temporelles et 50 préambules d'acquisition.

Une troisième courbe 408 représente en ordonnée l'évolution du taux de perte en paquets PLR en fonction de la charge du réseau G en abscisse pour un procédé de transmission utilisant un protocole MARSALA classique.

Une quatrième courbe 410 représente en ordonnée l'évolution du taux de perte en paquets PLR en fonction de la charge du réseau G en abscisse pour un procédé de transmission utilisant un protocole SPoTIT aléatoire selon l'invention de 2500 abonnés.

Il apparait clairement sur la deuxième courbe 406, que le protocole SPoTIT intelligent, basé sur une gestion optimale, effectuée au niveau de la station de réception, des positions des répliques et du choix des préambules d'acquisition, et sur la prévention des boucles par l'utilisation d'un unique ou bien un nombre minimum potentiel du même préambule d'acquisition sur chaque tranche temporelle, améliore et présente les meilleures performances en termes de PLR en réduisant ou en enlevant le plancher créé par les boucles.

En effet, le plancher d'erreurs est effectivement plus bas pour un nombre d'abonnés optimal sans boucles et sans corrélations de localisation (1500 abonnés par station de réception, 100 tranches temporelles par trame, deux répliques, ainsi que pour 2500 abonnés de zéro boucles et un minimum de corrélations de localisation. Le débit reste le même car l'effondrement se passe au niveau d'une charge de réseau $G_{ef}$ de 1.7 bits/symbole. A ce niveau $G_{ef}$, le taux de perte en paquets PLR est dégradé de la même manière que dans les troisième et quatrième courbes 408, 410, associées respectivement à l'utilisation du protocole MARSALA classique et SPoTIT aléatoire.

Il est à remarquer que les troisième et quatrième courbes 408, 410 présentent des performances d'amélioration identiques en termes de PLR par à la première courbe 404 représentant les performances d'un procédé de transmission, étant rappelé que le procédé de transmission utilisant le protocole SPoTIT « aléatoire » est moins complexe à mettre en oeuvre en cas de blocage que le procédé de transmission utilisant un protocole MARSALA classique.

Suivant la Figure 13, l'évolution du nombre moyen de corrélations de localisation nécessaires pour décoder un paquet, dans le cas d'un procédé de transmission utilisant le protocole MARSALA-2 et d'un procédé de transmission utilisant le protocole SPOTiT aléatoire pour 2000 abonnés. Comme les protocoles SPOTiT aléatoire et MARSALA peuvent tester et parcourir un paquet à chaque fois que CRDSA est bloqué, deux cas ont été considérés.

Un premier cas, désigné par « cas 1 » est le cas dans lequel, à chaque fois qu'un paquet est analysé avec SPOTiT aléatoire ou MARSALA, des corrélations de localisation sont effectuées ; en tenant compte du niveau du rapport signal sur bruit plus interférence SNIR qui est potentiellement plus élevé grâce au SIC de CRDSA et des fausses alarmes qui peuvent surgir quant aux pics de corrélation.

Un deuxième cas, désigné par « cas 2 », est le cas dans lequel les corrélations de localisation pour le décodage d'un paquet ne sont effectuées qu'une seule fois lors de la première analyse par SPOTiT « aléatoire » ou MARSALA, en supposant ainsi que toutes les positions des répliques sur la trame sont visibles dès la première analyse sans fausses alarmes.

Dans le premier cas, le nombre moyens de corrélations de localisation de réplique par paquet augmente considérablement avec l'augmentation de la charge du réseau G jusqu'à environ 262 pour une charge de 1,5 bits / symbole et pour le protocole MARSALA-2, comme le montre la première courbe 422 associée. Cela est dû un processus alternatif de va et vient entre le décodage MARSALA en cas de blocage et le décodage CRDSA en cas de déblocage jusqu'à ce que les deux soient bloqués. En comparaison, le décodage SPOTiT « aléatoire » atteint un maximum moyen de quatre corrélations de localisation de réplique pour une même charge de 1,5 bits / symbole comme le montre la deuxième courbe 424.

Dans le deuxième cas, la complexité de MARSALA augmente progressivement lorsque le décodage classique du protocole CRDSA n'est plus efficace et le nombre moyens de corrélations de localisation de réplique par paquet augmente avec l'augmentation de la charge G jusqu'à environ 98, ce qui correspond à NS-1, pour G égal à 2 bits / symbole comme le montre la troisième courbe 426. En comparaison le décodage du protocole SPoTIT « aléatoire » atteint un maximum de 0,3 corrélation de réplique comme le montre la quatrième courbe 428.

De manière générale, le procédé de transmission selon l'invention peut s'appliquer à différents systèmes de communication utilisant, par exemple, des satellites régénérateurs et/ou des connections sans fil terrestres, voir même des connections par câble.

L'invention s'inscrit dans le cadre des communications par satellite, qui peut aussi être exploitée dans le domaine terrestre. Cela implique l'accès aléatoire qui s'avère être pratique dans le cas de l'internet des objets ou du Machine to Machine lorsque les méthodes d'accès classiques d'allocation de ressources se trouvent être insuffisantes en termes de ressources face au nombre important de terminaux à supporter. C'est d'autant plus vrai que dans ce type d'applications par satellite, il est important de minimiser les informations de signalisation où le RTT (Round Trip Time) est considérable.

**Revendications**

1. Procédé de transmission de paquets de données à travers un canal de transmission à accès aléatoire, partagé par une pluralité de terminaux,

   le procédé de transmission étant mis en oeuvre par un système de communications comprenant

   .- une station de réception (6) ; et
   .- une pluralité (8) d'au moins deux terminaux utilisateurs (10, 12, 14) activement connectés à la station de réception (6), et
   .- un canal de transmission (4) à accès aléatoire depuis la pluralité (8) des terminaux utilisateurs jusqu'à la station de réception (6), utilisant un protocole d'accès aléatoire à diversité temporelle avec résolution de conflit inter-paquets ;

   le procédé de transmission étant **caractérisé en ce qu'**il comprend les étapes consistant **en ce que**

   .- dans une première étape (106, 206 ; 306) préalable,
   .* une fonction F d'attribution et de distribution de ressources de transmission F(u) partagées par la pluralité (8) des terminaux utilisateurs u connectés à la station de réception (6), définie par un graphe {(u, F(u)} dans lequel u̲ désigne un indice d'identification et de parcours des terminaux utilisateurs de la pluralité (8) et la ressource de transmission F(u) associé à un terminal utilisateur u̲ inclut des positions d'un nombre entier $N_R$, supérieur ou égal à 2, de répliques d'un paquet à émettre par le terminal u, prise parmi des rangs de tranches temporelles d'une trame temporelle d'émission, et une séquence d'acquisition à insérer dans chacune des $N_R$ répliques, prise dans une famille de séquences binaire pseudo-aléatoires quasi-orthogonales, est déterminée ; puis
   * à chaque terminal utilisateur u connecté de la pluralité est fournie la composante associée du graphe {(u, F(u)} tandis que la totalité du graphe est rendu disponible à bord de la station de réception (6); puis
   .- dans une deuxième étape (108; 208 ; 308), chaque terminal utilisateur u̲ de la pluralité génère de manière aléatoire $N_R$ répliques d'un paquet à transmettre dans les tranches temporelles de la trame émission ayant les positions temporelles attribuées par la composante de graphe dudit terminal et dans lesquelles est insérée la séquence binaire d'acquisition attribuée par la composante de graphe dudit terminal et
   .- dans une troisième étape (122 ; 222 ; 322) de décodage des paquets reçus, le graphe {(u, F(u)} de la fonction d'attribution et de distribution est exploité par la station de réception (6) pour combiner les signaux ayant un même signal d'acquisition dans les $N_R$ positions possibles de répliques d'un même paquet.

2. Procédé de transmission selon la revendication 1, dans lequel

   .- la famille de séquences binaires pseudo-aléatoires quasi-orthogonales est choisie parmi les codes utilisés par les systèmes à accès multiples par répartition de code, tels que les codes de Gold et les codes de Gold étendus en longueur ; et/ou
   .- la séquence binaire d'acquisition est située en tête comme préambule ou à l'intérieur ou en queue de chaque réplique ; et/ou.

.- chaque réplique transmise comporte un ou plusieurs symboles de garde définissant un intervalle de garde.

3. Procédé de transmission selon l'une quelconque des revendications 1 à 2, dans lequel la deuxième étape (108 ; 208 ; 308) comporte une sous-étape de codage de la réplique par un contrôle de redondance et/ou un codage de corrections des erreurs FEC, ladite sous-étape de codage étant effectuée avant l'insertion d'une séquence binaire d'acquisition.

4. Procédé de transmission selon l'une quelconque des revendications 1 à 3, dans laquelle la deuxième étape (108 ; 208 ; 308) comporte une sous-étape d'insertion d'information de signalisation, exécutée avant la sous-étape de codage de la réplique.

5. Procédé de transmission selon l'une quelconque des revendications 1 à 4, dans lequel le canal de transmission aléatoire (4), partagé par les terminaux utilisateurs, est un canal de transmission de voie retour sans fil et la station de réception (6) est un satellite ou une passerelle de connexion à un réseau terrestre (28) de communications ou une station d'un réseau terrestre de communications.

6. Procédé de transmission selon l'une quelconque des revendications 1 à 5, dans laquelle la troisième étape de décodage (122) comprend :

.- une quatrième étape (124 ; 224 ; 324) de récupération et de décodage de paquets utilisant un protocole de décodage classique CRDSA ou une cinquième étape de récupération et décodage de paquets utilisant un protocole ACRDA, la quatrième ou la cinquième étape étant exécutée après les première et deuxième étapes (106, 108 ; 206 ; 208 ; 306, 308) respectivement sur une trame physique actuelle de réception ou sur une fenêtre glissante englobant un certain nombre de trames virtuelles propres aux terminaux utilisateurs; et
.- une sixième étape (126 ; 226 ; 326) d'analyse et de traitement complémentaires pour décoder des paquets interférés non résolus par la quatrième (124 ; 224 ; 324) ou la cinquième étape, la sixième étape (126 ; 226 ; 326) étant déclenchée lorsqu'il existe au moins un paquet interféré de la trame non résolu lors de l'exécution de la quatrième ou cinquième étape.

7. Procédé de transmission selon la revendication 6, dans lequel la quatrième étape 124 ; 224, 324) de récupération et de décodage utilisant un protocole de décodage classique CRDSA comprend un deuxième ensemble de sous-étapes consistant à

.- identifier (132) à l'intérieur d'un signal reçu, des répliques qui ne sont pas affectées par des collisions destructives avec des répliques d'autres paquets ; puis
.- extraire (134) de l'information contenue dans les répliques identifiées ;
.- localiser temporellement (136) la ou les autres répliques du même paquet en utilisant les informations des positions temporels des répliques fournis par les composantes du graphe {(u, R(u)} et/ou une information de signalisation extraite des répliques décodées et identifiés ;
.- effacer en bande de base complexe (138) ladite ou desdites autres répliques par un algorithme d'effacement d'interférence, lorsqu'elle ou elles sont affectées par des collisions destructives avec des répliques d'autres paquets ; et
.- identifier (140) d'autres paquets qui, après ladite sous-étape d'effacement (138), ne sont plus affectés par des collisions destructives et extraire de l'information qui y est contenue.

8. Procédé de transmission selon l'une quelconque des revendications 1 à 7, dans lequel
la fonction F, désignée par $F_{PSR}$ suivant un premier mode de réalisation, est une fonction d'attribution et de distribution déterministe pseudo-aléatoire des vecteurs de positions des $N_R$ répliques des paquets au sein de la trame temporelle et des séquences d'acquisition associées aux paquets et chacune de leurs répliques qui dépendent des terminaux utilisateurs de la pluralité (8) via une graine d'entrée de la fonction $F_{PSR}$ qui dépend de manière représentative de l'identifiant de chaque terminal, la distribution des vecteurs des positions des $N_R$ répliques et des séquences d'acquisition de la fonction de distribution $F_{PSR}$ ayant un profil de distribution sensiblement uniforme sur l'ensemble de tous les vecteurs possibles de positions de $N_R$ répliques et de toutes les séquences d'acquisition possibles lorsque le nombre de terminaux utilisateur est suffisamment grand.

9. Procédé de transmission selon la revendication 8, dans lequel

.- pour chaque terminal utilisateur u, la graine x(u) associée au terminal utilisateur u est fixe temporellement et représente l'identifiant HID(u) du terminal u ; ou

.- pour chaque terminal u, la graine x(u) associée au terminal utilisateur u est dynamique et varie à chaque trame, en utilisant notamment un algorithme représentatif des variations du produit de l'identifiant HID du terminal u et un identifiant FID de la trame représentatif de son rang temporel dans un ordre séquentiel de défilement de trames.

**10.** Procédé de transmission selon l'une quelconque des revendications 8 à 9, dans lequel la fonction $F_{PSR}$ de distribution déterministe pseudo-aléatoire est paramétré par le nombre total $N_S$ de tranches temporelles par trame et le nombre total $N_P$ de séquences d'acquisition.

**11.** Procédé de transmission selon l'une quelconque des revendications 8 à 10, dans lequel la sixième étape (226) comprend un troisième ensemble (240) de sous-étapes consistant à :

.- sélectionner (242) de manière arbitraire ou suivant un critère prédéterminé une tranche temporelle de référence dans la trame en cours de traitement parmi les tranches temporelles pour lesquelles un conflit non résolu de paquets a été détecté ; puis

.- choisir (244) de manière arbitraire ou suivant un critère prédéterminé dans la tranche temporelle de référence sélectionnée une séquence d'acquisition détectée et choisie parmi une ou plusieurs séquences d'acquisition détectées dans ladite tranche temporelle de référence ; puis

.- déterminer (246) les positions dans la trame en cours de traitement des répliques possibles d'un même paquet associée à la séquence d'acquisition détectée et choisie à partir de toutes les positions des tranches temporelles de la trame dans lesquelles la séquence d'acquisition détectée et choisie a été détecté par corrélation courte et à partir du graphe {u ; $F_{PSR}$ (u)} ; puis

.- calculer (248) les corrélations de localisation de répliques possibles entre le signal bande base reçu dans la tranche temporelle de référence et les signaux bande des tranches temporelles ayant les positions déterminées dans la sous-étape (246) ; puis

.- déterminer (250) les tranches temporelles des répliques du paquet de la tranche temporelle associée à la séquence d'acquisition détectée et choisie comme les tranches temporelles ayant une valeur de corrélation de localisation supérieur à une valeur de corrélation de localisation prédéterminée puis

.- dans une sous-étape de combinaison (252), calculer la somme des signaux en bande de base des répliques localisées du paquet de la tranche temporelle associée à la séquence d'acquisition détectée et choisie ; puis

.- démoduler et décoder (254) la somme calculée lorsque la somme comprend un niveau de bruit situé au-dessous d'un seuil de bruit déterminé ; puis

.- soustraire en bande de base (256) du signal en cours de traitement le signal démodulé et décodé des répliques localisées du paquet de la tranche temporelle associée à la séquence d'acquisition détectée et choisie.

**12.** Procédé de transmission selon la revendication 11, dans lequel

la ou les séquences d'acquisition détectées sont déterminées en calculant des valeurs de pics de corrélations courtes en bande base entre les motifs de référence des séquences d'acquisition possibles attendues et le signal contenu dans la tranche temporelle de référence sélectionnée, et en sélectionnant comme séquences d'acquisition détectées les séquences d'acquisitions pour chacune desquelles un pic de corrélation présente une valeur, supérieure ou égale à un premier seuil de corrélation courte prédéterminé, ou

la ou les séquences d'acquisition détectées sont déterminées en calculant une pluralité de valeurs de corrélations courtes en bande de base entre les motifs de référence des séquences d'acquisition possibles attendues dans la tranche temporelle de référence et les signaux contenus dans les tranches temporelles pour lesquelles l'utilisation des motifs de référence, attendus dans la tranche temporelle de référence, est possible en vertu du graphe {u ; $F_{PSR}$ (u)}, et en sélectionnant comme séquences d'acquisition détectées les séquences d'acquisition pour chacune desquelles la somme des carrés des modules des valeurs de corrélation correspondant à un même motif de référence présente une valeur, supérieure ou égale à un deuxième seuil de corrélation courte prédéterminé.

**13.** Procédé de transmission selon la revendication 11 ou la revendication 12, dans lequel

.- la détection par corrélation courte de la ou des séquences d'acquisition dans la tranche temporelle de référence est effectuée au cours du processus de décodage classique du protocole CRDSA peu avant son blocage et sa suspension ou dans une sous-étape intermédiaire de détection par corrélation courte, interposée entre les sous-étapes (242) et (244) de la sixième étape (226) ; et

.- la détection par corrélation courte de la séquence détectée et choisie dans les tranches temporelles restantes de la trame temporelle en cours de traitement est effectuée au cours du processus de décodage classique du protocole CRDSA peu avant son blocage et sa suspension ou dans une sous-étape intermédiaire de détection par corrélation courte, interposée entre les sous-étapes (244) et (246) de la sixième étape (226).

**14.** Procédé de transmission selon l'une quelconque des revendications 11 à 13, comprenant en outre une sous-étape d'estimation (258) des paramètres de fréquence, de temporisation, de phase et d'amplitude de chaque réplique localisée servant à calculer le signal somme en bande de base, la sous-étape d'estimation (258) étant exécutée après la sous-étape (250) de localisation des répliques.

**15.** Procédé de transmission selon l'une quelconque des revendications 1 à 7, dans lequel

la fonction F d'attribution et de distribution de ressources, désignée par $F_{SMART}$ suivant un deuxième mode de réalisation, est une fonction d'attribution et de distribution déterministe « intelligente » des vecteurs de positions des $N_R$ répliques au sein de chaque trame parmi l'ensemble de tous les vecteurs possibles de positions de $N_R$ répliques dans l'ensemble des tranches temporelles de la trame et des séquences d'acquisition associées aux différentes répliques émises parmi toutes les séquences d'acquisition possibles, déterminée de sorte à minimiser, voire annuler, le nombre de boucles de données possibles dans lesquelles les terminaux utilisateurs connectés de la pluralité utilisent les mêmes positions de répliques.

**16.** Procédé de transmission selon la revendication 15, dans lequel

le graphe {(u, $F_{SMART}$(u)} étant déterminé de sorte à faire correspondre à chaque séquence d'acquisition gj utilisée de l'ensemble des séquences d'acquisition {gj}, un ensemble Tj de terminaux utilisateurs Ujk et une pluralité de vecteurs Vjk(Pgj(1),...,Pgj($N_R$)) de positions de $N_R$ répliques différents entre eux par au moins une position.

**17.** Procédé de transmission selon la revendication 16, dans lequel

le nombre de répliques $N_R$ transmises par paquet est égal à deux, et

le nombre de tranches temporelles par trame est un nombre pair, et

le nombre $N_P$ de séquences d'acquisition gj de l'ensemble des séquences d'acquisitions {gj} est égal à la moitié du nombre $N_S$ de tranches temporelles par trame, j désignant un indice d'identification de la séquence d'acquisition variant de 0 à $N_P$ - 1 ; et

le cardinal $N_U$ de la pluralité (8) des terminaux utilisateurs est égal au nombre maximum de terminaux utilisateurs n'utilisant que des détections basés wsur les séquences d'acquisition suivant la relation :

$$N_U = N_S * N_S/4$$

**18.** Procédé de transmission selon la revendication 16, dans lequel

le nombre de répliques $N_R$ transmises par paquet est égal à deux, et

le nombre de tranches temporelle $N_S$ pour chaque trame est une puissance de 2 qui s'écrit : $N_S = 2^{N_L}$ , $N_L$ désignant le nombre de niveaux pour des décalages circulaires, et

le nombre $N_P$ de séquences d'acquisition gj de l'ensemble des séquences d'acquisitions {gj] est égal à la moitié du nombre $N_S$ de tranches temporelles par trame, j désignant un indice d'identification de la séquence d'acquisition variant de 0 à $N_P$ - 1 ; et

le cardinal $N_U$ de la pluralité (8) des terminaux utilisateurs est égal au nombre maximum de terminaux utilisateurs n'utilisant que des détections basés sur les séquences d'acquisition suivant la relation :

$$N_U = N_S * (N_S - 1)/2$$

**19.** Procédé de transmission selon l'une quelconque des revendications 15 à 18, dans lequel

la sixième étape (326) comprend un quatrième ensemble (340) de sous-étapes consistant à :

.- sélectionner (342) de manière arbitraire ou suivant un critère prédéterminé une tranche temporelle de référence dans la trame en cours de traitement parmi les tranches temporelles pour lesquelles un conflit non résolu de paquets a été détecté ; puis

.- choisir (344) de manière arbitraire ou suivant un critère prédéterminé dans la tranche temporelle de référence sélectionnée une séquence d'acquisition détectée et choisie parmi une ou plusieurs séquences d'acquisition détectées dans ladite tranche temporelle de référence ; puis

.- déterminer (346) les positions dans la trame en cours de traitement des répliques possibles d'un même paquet associée à la séquence d'acquisition détectée et choisie à partir de toutes les positions des tranches temporelles de la trame dans lesquelles la séquence d'acquisition détectée et choisie a été détecté par corrélation courte et à partir du graphe {u ; $F_{SMART}(u)$} ; puis

.- parmi les tranches temporelles des répliques possibles d'un même paquet ayant la même séquence d'acquisition détectée et choisie, identifier (348) une tranche temporelle n'ayant qu'une seule réplique associée à la séquence d'acquisition choisie, le terminal associé et les autres répliques associé correspondant au même paquet à l'aide du graphe{u ; $F_{SMART}(u)$} ; puis

.- dans une sous-étape de combinaison (352), calculer la somme des signaux en bande de base des répliques du terminal utilisateur identifié dont le paquet à décoder utilise la séquence d'acquisition détectée et choisie ; puis

.- démoduler et décoder (354) la somme calculée lorsque la somme comprend un niveau de bruit situé au-dessous d'un seuil de bruit déterminé ; puis

.- soustraire en bande de base (356) le signal démodulé et décodé des répliques de la somme du signal en cours de traitement dans les tranches temporelles associées respectivement aux répliques de la somme.

**20.** Procédé de transmission selon la revendication 19, dans lequel

la ou les séquences d'acquisition détectées sont déterminées en calculant des valeurs de pics de corrélations courtes en bande base entre les motifs de référence des séquences d'acquisition possibles attendues et le signal contenu dans la tranche temporelle de référence sélectionnée, et en sélectionnant comme séquences d'acquisition détectées les séquences d'acquisitions pour chacune desquelles un pic de corrélation présente une valeur, supérieure ou égale à un premier seuil de corrélation courte prédéterminé, ou

la ou les séquences d'acquisition détectées sont déterminées en calculant une pluralité de valeurs de pics de corrélations courtes en bande de base entre les motifs de référence des séquences d'acquisition possibles attendues dans la tranche temporelle de référence et les signaux contenus dans les tranches temporelles pour lesquelles l'utilisation des motifs de référence, attendus dans la tranche temporelle de référence, est possible en vertu du graphe {u ; $F_{SMART}(u)$}, et en sélectionnant comme séquences d'acquisition détectées les séquences d'acquisition pour chacune desquelles la somme des carrés des modules des valeurs de corrélation correspondant à un même motif de référence présente une valeur, supérieure ou égale à un deuxième seuil de corrélation courte prédéterminé.

**21.** Procédé de transmission selon la revendication 19 ou la revendication 20, dans lequel

.- la détection par corrélation courte de la ou des séquences d'acquisition dans la tranche temporelle de référence est effectuée au cours du processus de décodage classique du protocole CRDSA peu avant son blocage et sa suspension ou dans une sous-étape intermédiaire de détection par corrélation courte, interposée entre les sous-étapes (342) et (344) de la sixième étape (326) ; et

.- la détection par corrélation courte de la séquence détectée et choisie dans les tranches temporelles restantes de la trame temporelle en cours de traitement est effectuée au cours du processus de décodage classique du protocole CRDSA peu avant son blocage et sa suspension ou dans une sous-étape intermédiaire de détection par corrélation courte, interposée entre les sous-étapes (344) et (346) de la sixième étape (326).

**22.** Procédé de transmission selon l'une quelconque des revendications 19 à 21, dans lequel la sixième étape (326) comprend en outre une sous-étape d'estimation (358) des paramètres de fréquence, de temporisation, de phase et d'amplitude de chaque réplique localisée servant à calculer le signal somme en bande de base, la sous-étape d'estimation (358) étant exécutée après la sous-étape (348) d'identifier d'une tranche temporelle n'ayant qu'une seule réplique associée à la séquence d'acquisition choisie.

**23.** Système de communications pour transmettre des paquets de données à travers un canal de transmission à accès aléatoire, partagé par une pluralité de terminaux, comprenant :

.- une station de réception (6); et

.- une pluralité (8) d'au moins deux terminaux utilisateurs (10, 12, 14) activement connectés à la station de réception (6), et

.- un canal de transmission (4) à accès aléatoire depuis la pluralité (8) des terminaux utilisateurs (10, 12, 14)

jusqu'à la station de réception (6), utilisant un protocole d'accès aléatoire à diversité temporelle avec résolution de conflit inter-paquets;

le système de communication étant **caractérisé en ce que** :

.- la station de réception est configurée pour déterminer et/ou enregistrer, dans une première étape préalable, une fonction F d'attribution et de distribution de ressources de transmission F(u) partagées par la pluralité de terminaux utilisateurs u , connectés à la station de réception (6), définie par un graphe {(u, F(u)} dans lequel u délsigne un indice d'identification et de parcours des terminaux utilisateurs de la pluralité (8) et la ressource de transmission F(u) associé à un terminal utilisateur u inclut des positions temporelles d'un nombre entier $N_R$, supérieur ou égal à 2, de répliques d'un paquet à émettre par le terminal u, prise parmi des rangs de tranches temporelles d'une trame temporelle d'émission, et une séquence d'acquisition à insérer dans chacune des $N_R$ répliques, prise dans une famille de séquences pseudo-aléatoires quasi-orthogonales ; et

.- chaque terminal utilisateur u connecté est configuré pour, dans la première étape préalable, puis recevoir ou générer, la composante associée du graphe {(u, F(u)} ; puis dans une deuxième étape, générer de manière aléatoire $N_R$ répliques d'un paquet à transmettre dans les tranches temporelles de la trame émission ayant les positions temporelles attribuées par la composante de graphe dudit terminal et dans lesquelles est insérée la séquence binaire d'acquisition attribuée par la composante de graphe dudit terminal ; et

.- la station de réception (6) est configurée pour, dans une troisième étape de décodage des paquets reçus, exploiter le graphe {(u, F(u)} de la fonction d'attribution et de distribution pour combiner les signaux ayant un même signal d'acquisition dans les $N_R$ positions possibles de répliques d'un même paquet.

24. Système de communications selon la revendication 23, dans lequel la fonction F, désignée par $F_{PSR}$ suivant un premier mode de réalisation, est une fonction d'attribution et de distribution déterministe pseudo-aléatoire des vecteurs de positions des $N_R$ répliques des paquets au sein de la trame temporelle et des séquences d'acquisition associées aux paquets et chacune de leurs répliques qui dépendent des terminaux utilisateurs de la pluralité (8) via une graine d'entrée de la fonction $F_{PSR}$ qui dépend de manière représentative de l'identifiant de chaque terminal, la distribution des vecteurs des positions des $N_R$ répliques et des séquences d'acquisition de la fonction de distribution $F_{PSR}$ ayant un profil de distribution sensiblement uniforme sur l'ensemble de tous les vecteurs possibles de positions de $N_R$ répliques et de toutes les séquences d'acquisition possibles lorsque le nombre de terminaux utilisateur est suffisamment grand.

25. Système de communications selon la revendication 23, dans lequel la fonction F d'attribution et de distribution de ressources, désignée par $F_{SMART}$ suivant un deuxième mode de réalisation, est une fonction d'attribution et de distribution déterministe « intelligente » des vecteurs de positions des $N_R$ répliques au sein de chaque trame parmi l'ensemble de tous les vecteurs possibles de positions de $N_R$ répliques dans l'ensemble des tranches temporelles de la trame et des séquences d'acquisition associées aux différentes répliques émises parmi toutes les séquences d'acquisition possibles, déterminée de sorte à minimiser, voire annuler, le nombre de boucles de données possibles dans lesquelles les terminaux utilisateurs connectés de la pluralité utilisent les mêmes positions de répliques.

## Patentansprüche

1. Verfahren zur Übertragung von Datenpaketen über einen Übertragungskanal mit wahlfreiem Zugriff, der von einer Vielzahl von Endgeräten gemeinsam genutzt wird,

wobei das Übertragungsverfahren von einem Kommunikationssystem implementiert wird, das Folgendes umfasst:

- eine Empfangsstation (6); und
- eine Vielzahl (8) von mindestens zwei Benutzerendgeräten (10, 12, 14), die aktiv mit der Empfangsstation (6) verbunden ist, und
- einen Übertragungskanal (4) mit wahlfreiem Zugriff von der Vielzahl (8) der Benutzerendgeräte zur Empfangsstation (6), der ein Zeitdiversitäts-Zufallszugriffsprotokoll mit Konfliktlösung zwischen Paketen verwendet;

wobei das Übertragungsverfahren **dadurch gekennzeichnet ist, dass** es die folgenden Schritte umfasst, darin bestehend, dass:

- in einem ersten Schritt (106, 206; 306) vorab,

* eine Funktion F zur Zuweisung und Verteilung von Übertragungsressourcen F(u), die von der Vielzahl (8) der mit der Empfangsstation (6) verbundenen Benutzerendgeräte u gemeinsam genutzt werden, definiert durch einen Graphen{(u, F(u)}, in dem u einen Identifikations- und Pfadindex der Benutzerendgeräte der Vielzahl (8) bezeichnet und die einem Benutzerendgerät u zugeordnete Übertragungsressource F(u) Positionen einer Ganzzahl $N_R$, größer oder gleich 2, von Repliken eines von dem Endgerät u zu sendenden Pakets, die aus Reihen von Zeitschlitzen eines Sendezeitrahmens ausgewählt werden, und eine in jede der $N_R$ Repliken einzufügende Erfassungssequenz, die aus einer Familie von quasi-orthogonalen pseudozufälligen Binärsequenzen gewählt wird, einschließt, bestimmt wird; gefolgt von
* jedem verbundenen Benutzerendgerät u aus der Vielzahl die zugeordnete Komponente des Graphen {(u, F(u)} bereitgestellt wird, während der gesamte Graph an Bord der Empfangsstation (6) verfügbar gemacht wird; gefolgt von

- in einem zweiten Schritt (108; 208; 308), jedes Benutzerendgerät u der Vielzahl zufällig $N_R$ Repliken eines zu übertragenden Pakets in den Zeitschlitzen des Senderahmens erzeugt, welche die von der Graph-Komponente des Endgeräts zugewiesenen Zeitpositionen aufweisen und in welche die von der Graph-Komponente des Endgeräts zugewiesene binäre Erfassungssequenz eingefügt ist; und
- in einem dritten Schritt (122; 222; 322) des Decodierens der empfangenen Pakete der Graph {(u, F(u)} der Zuweisungs- und Verteilungsfunktion von der Empfangsstation (6) ausgewertet wird, um die Signale mit einem gleichen Erfassungssignal an den $N_R$ möglichen Positionen von Repliken eines gleichen Pakets zu kombinieren.

2. Übertragungsverfahren nach Anspruch 1, wobei

- die Familie der quasi-orthogonalen binären Pseudozufallssequenzen aus den Codes ausgewählt wird, die durch die Systeme mit Mehrfachzugriff durch Codeverteilung verwendet werden, wie z. B. Gold-Codes und längenerweiterte Gold-Codes; und/oder
- die binäre Erfassungssequenz sich am Anfang als Präambel oder innerhalb oder am Ende jeder Replik befindet; und/oder
- jede übertragene Replik ein oder mehrere Guard-Symbole aufweist, die ein Guard-Intervall definieren.

3. Übertragungsverfahren nach einem der Ansprüche 1 bis 2, wobei der zweite Schritt (108; 208; 308) einen Unterschritt der Codierung der Replik durch eine Redundanzprüfung und/oder eine FEC-Fehlerkorrekturcodierung aufweist, wobei der Codierungsunterschritt vor dem Einfügen einer binären Erfassungssequenz durchgeführt wird.

4. Übertragungsverfahren nach einem der Ansprüche 1 bis 3, wobei der zweite Schritt (108; 208; 308) einen Unterschritt des Einfügens von Signalisierungsinformationen aufweist, der vor dem Unterschritt des Codierens der Replik ausgeführt wird.

5. Übertragungsverfahren nach einem der Ansprüche 1 bis 4, wobei der zufällige Übertragungskanal (4), der von den Benutzerendgeräten gemeinsam genutzt wird, ein drahtloser Rückkanal-Übertragungskanal ist und die Empfangsstation (6) ein Satellit oder ein Gateway für die Verbindung mit einem terrestrischen Kommunikationsnetz (28) oder eine Station eines terrestrischen Kommunikationsnetzes ist.

6. Übertragungsverfahren nach einem der Ansprüche 1 bis 5, wobei der dritte Schritt des Decodierens (122) Folgendes umfasst:

- einen vierten Schritt (124; 224; 324) des Abrufens und Dekodierens von Paketen unter Verwendung eines klassischen CRDSA-Dekodierungsprotokolls oder einen fünften Schritt des Abrufens und Dekodierens von Paketen unter Verwendung eines ACRDA-Protokolls, wobei der vierte oder fünfte Schritt nach dem ersten und zweiten Schritt (106, 108; 206; 208; 306, 308) jeweils über einen aktuellen physikalischen Empfangsrahmen oder über ein gleitendes Fenster ausgeführt wird, das eine Anzahl von virtuellen Rahmen umfasst, die für die Benutzerendgeräte typisch sind; und
- einen sechsten Schritt (126; 226; 326) einer ergänzenden Analyse und Verarbeitung zum Decodieren von gestörten Paketen, die durch den vierten (124; 224; 324) oder fünften Schritt nicht aufgelöst wurden, wobei der sechste Schritt (126; 226; 326) ausgelöst wird, wenn mindestens ein gestörtes Paket des Rahmens vorhanden ist, das bei der Ausführung des vierten oder fünften Schritts nicht aufgelöst wurde.

**7.** Übertragungsverfahren nach Anspruch 6, wobei der vierte Schritt 124; 224, 324) des Abrufens und Dekodierens unter Verwendung eines klassischen CRDSA-Dekodierungsprotokolls eine zweite Menge von Unterschritten umfasst, bestehend in:

- Identifizieren (132) von Repliken innerhalb eines empfangenen Signals, die nicht durch destruktive Kollisionen mit Repliken anderer Pakete beeinträchtigt werden; gefolgt von
- Extrahieren (134) der Information, die in den identifizierten Repliken enthalten ist;
- zeitlichem Lokalisieren (136) der anderen Replik(en) desselben Pakets unter Verwendung der Informationen der zeitlichen Positionen der Repliken, die von den Komponenten des {(u, R(u)}-Graphen bereitgestellt werden, und/oder einer Signalisierungsinformation, die aus den dekodierten und identifizierten Repliken extrahiert wird;
- Löschen im komplexen Basisband (138) der einen oder mehreren anderen Repliken durch einen Interferenzlöschungsalgorithmus, wenn sie durch destruktive Kollisionen mit Repliken anderer Pakete beeinflusst wird oder werden; und
- Identifizieren (140) weiterer Pakete, die nach dem Löschungs-Unterschritt (138) nicht mehr von destruktiven Kollisionen beeinflusst werden, und Extrahieren der darin enthaltenen Information.

**8.** Übertragungsverfahren nach einem der Ansprüche 1 bis 7, wobei
die Funktion F, gemäß einer ersten Ausführungsform als $F_{PSR}$ bezeichnet, eine Funktion zur deterministischen, pseudozufälligen Zuweisung und Verteilung der Positionsvektoren der $N_R$ Repliken der Pakete innerhalb des Zeitrahmens und der den Paketen und jeder ihrer Repliken zugeordneten Erfassungssequenzen ist, die von den Benutzerendgeräten der Vielzahl (8) über einen Eingangs-Seed der Funktion $F_{PSR}$ abhängen, der repräsentativ von der Kennung jedes Endgeräts abhängt, wobei die Verteilung der Vektoren der Positionen der $N_R$ Repliken und der Erfassungssequenzen der Verteilungsfunktion $F_{PSR}$ ein im Wesentlichen gleichmäßiges Verteilungsprofil über alle möglichen Vektoren der Positionen der $N_R$ Repliken und alle möglichen Erfassungssequenzen aufweist, wenn die Anzahl der Benutzerendgeräte ausreichend groß ist.

**9.** Übertragungsverfahren nach Anspruch 8, wobei

- für jedes Benutzerendgerät u der dem Benutzerendgerät u zugeordnete Seed x(u) zeitlich fixiert ist und die Kennung HID(u) des Endgeräts u darstellt; oder
- für jedes Benutzerendgerät u der dem Benutzerendgerät u zugeordnete Seed x(u) dynamisch ist und sich bei jedem Rahmen ändert, wobei insbesondere ein Algorithmus verwendet wird, der die Änderungen des Produkts der HID-Kennung des Benutzerendgeräts u und einer FID-Kennung des Rahmens darstellt, die seinen zeitlichen Rang in einer sequenziellen Reihenfolge des Durchlaufens von Rahmen darstellt.

**10.** Übertragungsverfahren nach einem der Ansprüche 8 bis 9, wobei
die Funktion $F_{PSR}$ der deterministischen Pseudozufallsverteilung durch die Gesamtanzahl $N_S$ der Zeitschlitze pro Rahmen und die Gesamtanzahl $N_P$ der Erfassungssequenzen parametrisiert wird.

**11.** Übertragungsverfahren nach einem der Ansprüche 8 bis 10, wobei
der sechste Schritt (226) eine dritte Menge (240) von Unterschritten umfasst, bestehend in:

- Auswählen (242), willkürlich oder nach einem vorbestimmten Kriterium, eines Referenzzeitschlitzes in dem in Verarbeitung befindlichen Rahmen unter den Zeitschlitzen, in denen ein ungelöster Paketkonflikt detektiert wurde; gefolgt von
- Auswählen (244), willkürlich oder nach einem vorbestimmten Kriterium, in dem ausgewählten Referenzzeitschlitz, einer detektierten und aus einer oder mehreren Erfassungssequenzen ausgewählten Erfassungssequenz, die in dem Referenzzeitschlitz detektiert wurden; gefolgt von
- Bestimmen (246) der Positionen in dem in Verarbeitung befindlichen Rahmen der möglichen Repliken eines gleichen Pakets, das der detektierten und ausgewählten Erfassungssequenz zugeordnet ist, aus allen Positionen der Zeitschlitze des Rahmens, in denen die detektierte und ausgewählte Erfassungssequenz durch Kurzkorrelation und anhand des Graphen {u ; $F_{PSR}$ (u)}detektiert wurde; gefolgt von
- Berechnen (248) der Korrelationen zur Lokalisierung möglicher Repliken zwischen dem im Referenzzeitschlitz empfangenen Basisbandsignal und den Bandsignalen der Zeitschlitze mit den im Unterschritt (246) bestimmten Positionen; gefolgt von
- Bestimmen (250) der Zeitschlitze der Repliken des Pakets des Zeitschlitzes, welcher der detektierten und ausgewählten Erfassungssequenz zugeordnet ist, als diejenigen Zeitschlitze, die einen Lokalisierungskorrelationswert haben, der größer als ein vorbestimmter Lokalisierungskorrelationswert ist, gefolgt von

- in einem Kombinations-Unterschritt (252), Berechnen der Summe der Basisbandsignale der lokalisierten Repliken des Pakets des Zeitschlitzes, welcher der detektierten und ausgewählten Erfassungssequenz zugeordnet ist; gefolgt von

- Demodulieren und Decodieren (254) der berechneten Summe, wenn die Summe einen Rauschpegel unterhalb einer bestimmten Rauschschwelle umfasst; gefolgt von

- Subtrahieren, im Basisband (256), von dem in Verarbeitung befindlichen Signal, des demodulierten und decodierten Signals der lokalisierten Repliken des Pakets des Zeitschlitzes, welcher der detektierten und ausgewählten Erfassungssequenz zugeordnet ist.

12. Übertragungsverfahren nach Anspruch 11, wobei

die detektierte(n) Erfassungssequenz(en) durch Berechnen von Spitzenwerten kurzer Basisbandkorrelationen zwischen den Referenzmustern der erwarteten möglichen Erfassungssequenzen und dem in dem ausgewählten Referenzzeitschlitz enthaltenen Signal bestimmt werden, und durch Auswählen der Erfassungssequenzen, für die jeweils eine Korrelationsspitze einen Wert aufweist, der größer als ein oder gleich einem ersten vorbestimmten Kurzkorrelationsschwellenwert ist, als detektierte Erfassungssequenzen, oder

die detektierte(n) Erfassungssequenz(en) durch Berechnen einer Vielzahl von Basisband-Kurzkorrelationswerten zwischen den Referenzmustern der möglichen Erfassungssequenzen, die in dem Referenzzeitschlitz erwartet werden, und den Signalen, die in den Zeitschlitzen enthalten sind, für welche die Verwendung der Referenzmuster, die in dem Referenzzeitschlitz erwartet werden, gemäß dem Graphen {u ; $F_{PSR}$ (u)} möglich ist, und durch Auswählen derjenigen Erfassungssequenzen als detektierte Erfassungssequenzen, für die jeweils die Summe der Quadrate der Module der Korrelationswerte, die einem gleichen Referenzmuster entsprechen, einen Wert aufweist, der größer als ein oder gleich einem zweiten vorbestimmten Kurzkorrelationsschwellenwert ist.

13. Übertragungsverfahren nach Anspruch 11 oder Anspruch 12, wobei

- die kurzkorrelierte Detektion der Erfassungssequenz(en) im Referenzzeitschlitz während des herkömmlichen Decodierungsprozesses des CRDSA-Protokolls kurz vor dessen Blockierung und Aussetzung oder in einem zwischen den Unterschritten (242) und (244) des sechsten Schritts (226) eingefügten Zwischenunterschritt der kurzkorrelierten Detektion durchgeführt wird; und

- die kurzkorrelierte Detektion der detektierten und ausgewählten Sequenz aus den verbleibenden Zeitschlitzen des in Verarbeitung befindlichen Zeitrahmens während des herkömmlichen CRDSA-Protokoll-Dekodierungsprozesses kurz vor dessen Blockierung und Aussetzung oder in einem zwischen den Unterschritten (244) und (246) des sechsten Schritts (226) eingefügten Zwischenunterschritt der kurzkorrelierten Detektion durchgeführt wird.

14. Übertragungsverfahren nach einem der Ansprüche 11 bis 13, ferner umfassend einen Unterschritt der Schätzung (258) der Frequenz-, Zeit-, Phasen- und Amplitudenparameter jeder lokalisierten Replik, die zur Berechnung des Basisbandsummensignals dient, wobei der Unterschritt der Schätzung (258) nach dem Unterschritt (250) der Lokalisierung der Repliken ausgeführt wird.

15. Übertragungsverfahren nach einem der Ansprüche 1 bis 7, wobei
die Funktion F zur Zuweisung und Verteilung von Ressourcen, die gemäß einer zweiten Ausführungsform als $F_{SMART}$ bezeichnet wird, eine "intelligente" deterministische Zuweisungs- und Verteilungsfunktion der Positionsvektoren der $N_R$ Repliken innerhalb jedes Rahmens aus der Gesamtheit aller möglichen Positionsvektoren der $N_R$ Repliken in allen Zeitschlitzen des Rahmens und der Erfassungssequenzen, die den verschiedenen gesendeten Repliken zugeordnet sind, aus allen möglichen Erfassungssequenzen ist, die dergestalt bestimmt ist, dass die Anzahl der möglichen Datenschleifen, in denen die verbundenen Benutzerendgeräte der Vielzahl die gleichen Replikenpositionen verwenden, minimiert oder sogar auf null reduziert wird.

16. Übertragungsverfahren nach Anspruch 15, wobei
der Graph {(u, $F_{SMART}$(u)} dergestalt bestimmt ist, dass er die Zuordnung jeder verwendeten Erfassungssequenz gj aus der Menge der Erfassungssequenzen {gj} zu einer Menge Tj von Benutzerendgeräten Ujk und einer Vielzahl von Vektoren Vjk(Pgj(1),...,Pgj($N_R$)) von Positionen von $N_R$ Repliken, die sich untereinander durch mindestens eine Position unterscheiden, bewerkstelligt.

**17.** Übertragungsverfahren nach Anspruch 16, wobei

die Anzahl der pro Paket übertragenen $N_R$ Repliken gleich zwei ist, und
die Anzahl der Zeitschlitze pro Rahmen eine gerade Zahl ist, und
die Anzahl $N_P$ der Erfassungssequenzen gj der Menge der Erfassungssequenzen {gj} gleich der Hälfte der Anzahl $N_S$ der Zeitschlitze pro Rahmen ist, wobei j einen Identifikationsindex der Erfassungssequenz bezeichnet, der zwischen 0 und $N_P$ - 1 variiert; und
die Kardinalzahl $N_U$ der Vielzahl (8) von Benutzerendgeräten gleich der maximalen Anzahl von Benutzerendgeräten ist, die nur Detektionen verwenden, die auf den Erfassungssequenzen basieren, gemäß der Beziehung:

$$N_U = N_S * N_S / 4$$

**18.** Übertragungsverfahren nach Anspruch 16, wobei

die Anzahl der pro Paket übertragenen $N_R$ Repliken gleich zwei ist, und
die Anzahl der Zeitschlitze $N_S$ für jeden Rahmen eine Potenz von 2 ist, die $N_S$ = $2^{NL}$ geschrieben wird, wobei $N_L$ die Anzahl der Stufen für zirkuläre Verschiebungen bezeichnet, und
die Anzahl $N_P$ der Erfassungssequenzen gj der Menge der Erfassungssequenzen {gj} gleich der Hälfte der Anzahl Ns der Zeitschlitze pro Rahmen ist, wobei j einen Identifikationsindex der Erfassungssequenz bezeichnet, der zwischen 0 und $N_P$ - 1 variiert; und
die Kardinalzahl $N_U$ der Vielzahl (8) von Benutzerendgeräten gleich der maximalen Anzahl von Benutzerendgeräten ist, die nur Detektionen verwenden, die auf den Erfassungssequenzen basieren, gemäß der Beziehung:

$$N_U = N_S * (N_S - 1) / 2$$

**19.** Übertragungsverfahren nach einem der Ansprüche 15 bis 18, wobei
der sechste Schritt (326) eine vierte Menge (340) von Unterschritten umfasst, bestehend in:

- Auswählen (342), willkürlich oder nach einem vorbestimmten Kriterium, eines Referenzzeitschlitzes in dem in Verarbeitung befindlichen Rahmen unter den Zeitschlitzen, in denen ein ungelöster Paketkonflikt detektiert wurde; gefolgt von
- Auswählen (344), willkürlich oder nach einem vorbestimmten Kriterium, in dem ausgewählten Referenzzeitschlitz, einer detektierten und aus einer oder mehreren Erfassungssequenzen ausgewählten Erfassungssequenz, die in dem Referenzzeitschlitz detektiert wurden; gefolgt von
- Bestimmen (346) der Positionen in dem in Verarbeitung befindlichen Rahmen der möglichen Repliken eines gleichen Pakets, das der detektierten und ausgewählten Erfassungssequenz unter allen Positionen der Zeitschlitze des Rahmens, in denen die detektierte und ausgewählte Erfassungssequenz durch Kurzkorrelation und anhand des Graphen {u ; $F_{SMART}$ (u)} detektiert wurde, zugeordnet ist; gefolgt von
- unter den Zeitschlitzen der möglichen Repliken eines gleichen Pakets mit der gleichen detektierten und ausgewählten Erfassungssequenz, Identifizieren (348) eines Zeitschlitzes mit nur einer Replik, die der ausgewählten Erfassungssequenz, dem zugeordneten Endgerät und den anderen zugeordneten Repliken zugeordnet ist, die dem gleichen Paket entsprechen, unter Verwendung des Graphen {u ; $F_{SMART}$ (u)}; gefolgt von
- in einem Kombinations-Unterschritt (352), Berechnen der Summe der Basisbandsignale der Repliken des identifizierten Benutzerendgeräts, dessen zu dekodierendes Paket die detektierte und ausgewählte Erfassungssequenz verwendet; gefolgt von
- Demodulieren und Decodieren (354) der berechneten Summe, wenn die Summe einen Rauschpegel unterhalb einer bestimmten Rauschschwelle umfasst; gefolgt von
- Subtrahieren, im Basisband (356), des demodulierten und decodierten Signals der Repliken von der Summe des Signals, das in den Zeitschlitzen in Verarbeitung befindlich ist, die jeweils den Repliken der Summe zugeordnet sind.

**20.** Übertragungsverfahren nach Anspruch 19, wobei

die detektierte(n) Erfassungssequenz(en) durch Berechnen von Spitzenwerten kurzer Basisbandkorrelationen zwischen den Referenzmustern der erwarteten möglichen Erfassungssequenzen und dem in dem ausgewählten Referenzzeitschlitz enthaltenen Signal bestimmt werden, und durch Auswählen der Erfassungssequenzen, für die jeweils eine Korrelationsspitze einen Wert aufweist, der größer als ein oder gleich einem ersten vorbestimmten Kurzkorrelationsschwellenwert ist, als detektierte Erfassungssequenzen, oder

die detektierte(n) Erfassungssequenz(en) durch Berechnen einer Vielzahl von Basisband-Kurzkorrelations-Spitzenwerten zwischen den Referenzmustern der möglichen Erfassungssequenzen, die in dem Referenzzeitschlitz erwartet werden, und den Signalen, die in den Zeitschlitzen enthalten sind, für welche die Verwendung der Referenzmuster, die in dem Referenzzeitschlitz erwartet werden, gemäß dem Graphen {u ; $F_{SMART}$ (u)} möglich ist, und durch Auswählen derjenigen Erfassungssequenzen als detektierte Erfassungssequenzen, für die jeweils die Summe der Quadrate der Module der Korrelationswerte, die einem gleichen Referenzmuster entsprechen, einen Wert aufweist, der größer als ein oder gleich einem zweiten vorbestimmten Kurzkorrelationsschwellenwert ist.

21. Übertragungsverfahren nach Anspruch 19 oder Anspruch 20, wobei

- die kurzkorrelierte Detektion der Erfassungssequenz(en) im Referenzzeitschlitz während des herkömmlichen Decodierungsprozesses des CRDSA-Protokolls kurz vor dessen Blockierung und Aussetzung oder in einem zwischen den Unterschritten (342) und (344) des sechsten Schritts (326) eingefügten Zwischenunterschritt der kurzkorrelierten Detektion durchgeführt wird; und
- die kurzkorrelierte Detektion der detektierten und ausgewählten Sequenz aus den verbleibenden Zeitschlitzen des in Verarbeitung befindlichen Zeitrahmens während des herkömmlichen CRDSA-Protokoll-Dekodierungsprozesses kurz vor dessen Blockierung und Aussetzung oder in einem zwischen den Unterschritten (344) und (346) des sechsten Schritts (326) eingefügten Zwischenunterschritt der kurzkorrelierten Detektion durchgeführt wird.

22. Übertragungsverfahren nach einem der Ansprüche 19 bis 21, wobei der sechste Schritt (326) ferner einen Unterschritt des Schätzens (358) der Frequenz-, Zeit-, Phasen- und Amplitudenparameter jeder lokalisierten Replik umfasst, die zur Berechnung des Basisbandsummensignals dienen, wobei der Unterschritt des Schätzens (358) nach dem Unterschritt (348) des Identifizierens eines Zeitschlitzes mit nur einer einzigen Replik, die der gewählten Erfassungssequenz zugeordnet ist, ausgeführt wird.

23. Kommunikationssystem zum Übertragen von Datenpaketen über einen Übertragungskanal mit wahlfreiem Zugriff, der von einer Vielzahl von Endgeräten gemeinsam genutzt wird, Folgendes umfassend:

- eine Empfangsstation (6); und
- eine Vielzahl (8) von mindestens zwei Benutzerendgeräten (10, 12,14), die aktiv mit der Empfangsstation (6) verbunden ist, und
- einen Übertragungskanal (4) mit wahlfreiem Zugriff von der Vielzahl (8) der Benutzerendgeräte (10, 12, 14) zur Empfangsstation (6), der ein Zeitdiversitäts-Zufallszugriffsprotokoll mit Konfliktlösung zwischen Paketen verwendet;

wobei das Kommunikationssystem **dadurch gekennzeichnet ist, dass**:

- die Empfangsstation so konfiguriert ist, dass sie in einem ersten vorherigen Schritt eine Funktion F zur Zuweisung und Verteilung von Übertragungsressourcen F(u) bestimmt und/oder speichert, die von der Vielzahl von mit der Empfangsstation (6) verbundenen Benutzerendgeräten u gemeinsam genutzt werden, definiert durch einen Graphen {u, F(u)}, in dem u einen Identifikations- und Pfadindex der Benutzerendgeräte der Vielzahl (8) bezeichnet und die mit einem Benutzerendgerät u verbundene Übertragungsressource F(u) zeitliche Positionen einer Ganzzahl $N_R$, größer oder gleich 2, von Repliken eines von dem Endgerät u zu sendenden Pakets einschließt, die aus Reihen von Zeitschlitzen eines Sendezeitrahmens ausgewählt werden, und eine in jede der $N_R$ Repliken einzufügende Erfassungssequenz, die aus einer Familie von quasi-orthogonalen pseudozufälligen Sequenzen gewählt wird; und
- jedes verbundene Benutzerendgerät u konfiguriert ist, um in dem ersten vorhergehenden Schritt die zugeordnete Graph-Komponente {u, F(u)} zu empfangen oder zu erzeugen; und anschließend in einem zweiten Schritt $N_R$ Repliken eines zu übertragenden Pakets in den Zeitschlitzen des Senderahmens mit den durch die Graph-Komponente des Endgeräts zugewiesenen Zeitpositionen, in welche die durch die Graph-Komponente des Endgeräts zugewiesene binäre Erfassungssequenz eingefügt wird, zufällig zu erzeugen; und
- die Empfangsstation (6) konfiguriert ist, um in einem dritten Schritt des Decodierens der empfangenen Pakete den Graphen {u, F(u)} der Zuordnungs- und Verteilungsfunktion auszuwerten, um Signale mit einem gleichen Erfassungssignal in den $N_R$ möglichen Positionen von Repliken eines gleichen Pakets zu kombinieren.

**24.** Kommunikationssystem nach Anspruch 23, wobei die Funktion F, gemäß einer ersten Ausführungsform als $F_{PSR}$ bezeichnet, eine Funktion zur deterministischen, pseudozufälligen Zuweisung und Verteilung der Positionsvektoren der $N_R$ Repliken der Pakete innerhalb des Zeitrahmens und der den Paketen und jeder ihrer Repliken zugeordneten Erfassungssequenzen ist, die von den Benutzerendgeräten der Vielzahl (8) über einen Eingangs-Seed der Funktion $F_{PSR}$ abhängen, der repräsentativ von der Kennung jedes Endgeräts abhängt, wobei die Verteilung der Vektoren der Positionen der $N_R$ Repliken und der Erfassungssequenzen der Verteilungsfunktion $F_{PSR}$ ein im Wesentlichen gleichmäßiges Verteilungsprofil über alle möglichen Vektoren der Positionen der $N_R$ Repliken und alle möglichen Erfassungssequenzen aufweist, wenn die Anzahl der Benutzerendgeräte ausreichend groß ist.

**25.** Kommunikationssystem nach Anspruch 23, wobei die Funktion F zur Zuweisung und Verteilung von Ressourcen, die gemäß einer zweiten Ausführungsform als $F_{SMART}$ bezeichnet wird, eine "intelligente" deterministische Zuweisungs- und Verteilungsfunktion der Positionsvektoren der $N_R$ Repliken innerhalb jedes Rahmens unter der Gesamtheit aller möglichen Positionsvektoren von $N_R$ Repliken in allen Zeitschlitzen des Rahmens und der Erfassungssequenzen, die den verschiedenen gesendeten Repliken zugeordnet sind, unter allen möglichen Erfassungssequenzen ist, die dergestalt bestimmt ist, dass die Anzahl der möglichen Datenschleifen, in denen die verbundenen Benutzerendgeräte der Vielzahl die gleichen Replikenpositionen verwenden, minimiert oder sogar auf null reduziert wird.

**Claims**

**1.** A method for transmitting data packets through a random-access transmission channel shared by a plurality of terminals,

the transmitting method being implemented by a communication system comprising

- a receiving station (6); and
- a plurality (8) of at least two user terminals (10, 12, 14) that are actively connected to the receiving station (6), and
- a random-access transmission channel (4) for transmission from the plurality (8) of user terminals to the receiving station (6), using a time-diverse random-access protocol with resolution of inter-packet conflict;

the transmitting method being **characterised in that** it comprises steps consisting **in that**

- in a preliminary first step (106, 206; 306),

* a function F for assigning and distributing transmission resources F(u) shared by the plurality (8) of user terminals u connected to the receiving station (6), which function is defined by a graph {(u, F(u)}, in which u designates an identification and travel index of the user terminals of the plurality (8) and the transmission resource F(u) associated with a user terminal u includes positions of an integer number $N_R$, higher than or equal to 2, of replicas of a packet to be sent by the terminal u, selected from the ranks of time slots of a send time frame, and an acquisition sequence to be inserted in each of the $N_R$ replicas, selected from a family of quasi-orthogonal pseudo-random binary sequences, is determined; then
* to each connected user terminal u of the plurality is provided the associated component of the graph {(u, F(u)} whereas the entirety of the graph is made available to the receiving station (6); then

- in a second step (108; 208; 308), each user terminal u of the plurality randomly generates $N_R$ replicas of a packet to be transmitted in the time slots of the send frame having the temporal positions assigned by the graph component of said terminal and in which is inserted the acquisition binary sequence assigned by the graph component of said terminal; and
- in a third step (122; 222; 322) of decoding received packets, the graph {(u, F(u)} of the assigning and distributing function is exploited by the receiving station (6) to combine the signals having one and the same acquisition signal in the $N_R$ possible positions of replicas of a given packet.

**2.** The transmitting method according to claim 1, wherein

- the family of quasi-orthogonal pseudo-random binary sequences is chosen from the codes used by the code-

EP 3 788 832 B1

division multiple-access systems, such as Gold codes and extended-length Gold codes; and/or
- the acquisition binary sequence is located in the header as a preamble or inside or in the tail of each replica; and/or
- each transmitted replica has one or more guard symbols defining a guard interval.

3. The transmitting method according to either one of claims 1 to 2, wherein the second step (108; 208; 308) contains a substep of coding the replica by a redundancy check and/or an FEC error correction coding, said coding substep being performed before the insertion of an acquisition binary sequence.

4. The transmitting method according to any one of claims 1 to 3, wherein the second step (108; 208; 308) contains a substep of inserting signalling information, executed before the substep of coding the replica.

5. The transmitting method according to any one of claims 1 to 4, wherein the random transmission channel (4) shared by the user terminals is a wireless return transmission channel and the receiving station (6) is a satellite or a gateway for connection to a terrestrial communication network (28) or a station of a terrestrial communication network.

6. The transmitting method according to any one of claims 1 to 5, wherein the decoding third step (122) comprises:

- a fourth step (124; 224; 324) of retrieving and decoding packets using a conventional CRDSA decoding protocol or a fifth step of retrieving and decoding packets using an ACRDA protocol, the fourth or fifth step being executed after the first and second steps (106, 108; 206, 208; 306, 308) respectively on a current reception physical frame or in a moving window encompassing a certain number of virtual frames specific to the user terminals; and
- a sixth step (126; 226; 326) of complementary analysing and processing to decode packets affected by interference that are not resolved by the fourth step (124; 224; 324) or the fifth step, the sixth step (126; 226; 326) being triggered when there is at least one packet affected by interference of the frame that is not resolved during the execution of the fourth or fifth step.

7. The transmitting method according to claim 6, wherein the fourth step (124; 224; 324) of retrieving and decoding using a conventional CRDSA decoding protocol comprises a second set of substeps consisting in

- identifying (132), inside a received signal, replicas that are not affected by destructive collisions with replicas of other packets; then
- extracting (134) the piece of information contained in the identified replicas;
- temporally locating (136) the one or more other replicas of the same packet using the information on the temporal positions of the replicas provided by the components of the graph {(u, R(u)} and/or a piece of signalling information extracted from the decoded and identified replicas;
- erasing (138), in complex baseband, said one or more other replicas using an interference erasing algorithm, when it or they are affected by destructive collisions with replicas of other packets; and
- identifying (140) other packets that, after said erasing substep (138), are no longer affected by destructive collisions and extracting the information that is contained therein.

8. The transmitting method according to any one of claims 1 to 7, wherein the function F, designated by $F_{PSR}$ according to a first embodiment, is a pseudo-random deterministic function for assigning and distributing the position vectors of the $N_R$ replicas of the packets within the time frame and of the acquisition sequences associated with the packets and each of the replicas thereof that depend on the user terminals of the plurality (8) via an input seed of the function $F_{PSR}$ which depends, in a representative way, on the identifier of each terminal, the distribution of the vectors of the positions of the $N_R$ replicas and of the acquisition sequences of the distributing function $F_{PSR}$ having a distribution profile that is substantially uniform over the set of all the possible vectors of positions of $N_R$ replicas and of all the possible acquisition sequences when the number of user terminals is sufficiently high.

9. The transmitting method according to claim 8, wherein

- for each user terminal u, the seed x(u) associated with the user terminal u is set temporally and represents the identifier HID(u) of the terminal u; or
- for each terminal u, the seed x(u) associated with the user terminal u is dynamic and varies between each frame, this especially being achieved using an algorithm representative of the variations in the product of the identifier HID of the terminal u and an identifier FID of the frame, which is representative of the temporal rank of the frame in a sequential order of frame advance.

10. The transmitting method according to any one of claims 8 to 9, wherein
the pseudo-random deterministic distributing function $F_{PSR}$ is parameterised by the total number $N_S$ of time slots per frame and the total number $N_P$ of acquisition sequences.

11. The transmitting method according to any one of claims 8 to 10, wherein
the sixth step (226) comprises a third set (240) of substeps consisting in:

- selecting (242) arbitrarily or according to a preset criterion a reference time slot in the frame being processed from time slots for which an unresolved packet conflict has been detected; then
- choosing (244) arbitrarily or according to a preset criterion, in the selected reference time slot, a detected acquisition sequence chosen from one or more acquisition sequences detected in said reference time slot; then
- determining (246) the positions in the frame being processed of the possible replicas of one and the same packet associated with the detected and chosen acquisition sequence on the basis of all the positions of the times slots of the frame in which the detected and chosen acquisition sequence has been detected by short correlation and on the basis of the graph $\{u; F_{PSR}(u)\}$; then
- computing (248) the possible replica-location correlations between the baseband signal received in the reference time slot and the band signals of the time slots having the positions determined in substep (246); then
- determining (250) the time slots of the replicas of the packet of the time slot associated with the detected and chosen acquisition sequence to be the time slots having a location-correlation value higher than a preset location-correlation value; then
- in a combining substep (252), computing the sum of the baseband signals of the located replicas of the packet of the time slot associated with the detected and chosen acquisition sequence; then
- demodulating and decoding (254) the computed sum when the sum comprises a noise level located below a set noise threshold; then
- subtracting (256) in baseband from the signal being processed the demodulated and decoded signal of the located replicas of the packet of the time slot associated with the detected and chosen acquisition sequence.

12. The transmitting method according to claim 11, wherein

the one or more detected acquisition sequences are determined by computing values of peaks of short correlations in baseband between the reference patterns of the expected possible acquisition sequences and the signal contained in the selected reference time slot, and by selecting, as detected acquisition sequences, the acquisition sequences for each of which a correlation peak has a value higher than or equal to a preset first short-correlation threshold, or
the one or more detected acquisition sequences are determined by computing a plurality of values of short correlations in baseband between the reference patterns of the possible acquisition sequences expected in the reference time slot and the signals contained in time slots for which the use of the reference patterns expected in the reference time slot is possible by virtue of the graph $\{u; F_{PSR}(u)\}$, and by selecting, as detected acquisition sequences, the acquisition sequences for each of which the sum of the squares of the moduli of the correlation values corresponding to a given reference pattern has a value higher than or equal to a preset second short-correlation threshold.

13. The transmitting method according to claim 11 or claim 12, wherein

- the detection by short correlation of the one or more acquisition sequences in the reference time slot is performed during the conventional decoding process of the CRDSA protocol, shortly before it fails and is suspended, or in an intermediate substep of detection by short correlation, interposed between substeps (242) and (244) of the sixth step (226); and
- the detection by short correlation of the detected and chosen sequence in the remaining time slots of the time frame being processed is performed during the conventional decoding process of the CRDSA protocol, shortly before it fails and is suspended, or in an intermediate substep of detection by short correlation, interposed between substeps (244) and (246) of the sixth step (226).

14. The transmitting method according to any one of claims 11 to 13, further comprising a substep of estimating (258) frequency, delay, phase and amplitude parameters of each located replica, used to compute the sum signal in baseband, the estimating substep (258) being executed after the replica-locating substep (250).

**15.** The transmitting method according to any one of claims 1 to 7, wherein
the function F for assigning and distributing resources, which is designated by $F_{SMART}$ according to a second embodiment, is a "smart" deterministic function for assigning and distributing the position vectors of the $N_R$ replicas within each frame among the set of all the possible vectors of positions of $N_R$ replicas in all of the time slots of the frame and of the acquisition sequences associated with the various sent replicas among all the possible acquisition sequences, determined so as to minimise, or even decrease to zero, the number of possible data loops in which the connected user terminals of the plurality use the same replica positions.

**16.** The transmitting method according to claim 15, wherein
the graph $\{(u, F_{SMART}(u)\}$ is determined so as to correlate, with each used acquisition sequence gj of the set {gj} of acquisition sequences, a set Tj of user terminals Ujk and a plurality of vectors Vjk(Pgj(1),...,Pgj($N_R$)) of positions of $N_R$ replicas, which differ from one another in at least one position.

**17.** The transmitting method according to claim 16, wherein

the number $N_R$ of replicas transmitted per packet is equal to two, and
the number of time slots per frame is an even number, and
the number $N_P$ of acquisition sequences gj of the set {gj} of acquisition sequences is equal to half the number $N_S$ of time slots per frame, j designating an identification index of the acquisition sequence varying from 0 to $N_P$ - 1; and
the cardinal $N_U$ of the plurality (8) of user terminals is equal to the maximum number of user terminals using only detections based on the acquisition sequences, according to the relationship:

$$N_U = N_S * N_S/4$$

**18.** The transmitting method according to claim 16, wherein

the number $N_R$ of replicas transmitted per packet is equal to two, and
the number $N_S$ of time slots for each frame is a power of 2 that is written: $N_S = 2^{NL}$, $N_L$ designating the number of circular-shift levels, and
the number $N_P$ of acquisition sequences gj of the set {gj} of acquisition sequences is equal to half the number $N_S$ of time slots per frame, j designating an identification index of the acquisition sequence varying from 0 to $N_P$ - 1; and
the cardinal $N_U$ of the plurality (8) of user terminals is equal to the maximum number of user terminals using only detections based on the acquisition sequences, according to the relationship:

$$N_U = N_S * (N_S - 1)/2$$

**19.** The transmitting method according to any one of claims 15 to 18, wherein
the sixth step (326) comprises a fourth set (340) of substeps consisting in:

- selecting (342) arbitrarily or according to a preset criterion a reference time slot in the frame being processed from the time slots for which an unresolved packet conflict has been detected; then
- choosing (344) arbitrarily or according to a preset criterion in the selected reference time slot a detected acquisition sequence chosen from one or more acquisition sequences detected in said reference time slot; then
- determining (346) the positions in the frame being processed of the possible replicas of one and the same packet associated with the detected and chosen acquisition sequence on the basis of all the positions of the times slots of the frame in which the detected and chosen acquisition sequence has been detected by short correlation and on the basis of the graph {u; $F_{SMART}(u)$}; then
- among the time slots of the possible replicas of one and the same packet having the same detected and chosen acquisition sequence, identifying (348) a time slot having only a single replica associated with the chosen acquisition sequence, the associated terminal and the other associated replicas corresponding to the same packet using the graph {u; $F_{SMART}(u)$}; then
- in a combining substep (352), computing the sum of the baseband signals of the replicas of the identified user terminal, the packet to be decoded of which uses the detected and chosen acquisition sequence; then
- demodulating and decoding (354) the computed sum when the sum comprises a noise level located below a set noise threshold; then
- subtracting (356) in baseband the demodulated and decoded signal of the replicas from the sum of the signal being processed in the time slots respectively associated with the replicas of the sum.

**20.** The transmitting method according to claim 19, wherein

the one or more detected acquisition sequences are determined by computing values of peaks of short correlations in baseband between the reference patterns of the expected possible acquisition sequences and the signal contained in the selected reference time slot, and by selecting, as detected acquisition sequences, the acquisition sequences for each of which a correlation peak has a value higher than or equal to a preset first short-correlation threshold, or
the one or more detected acquisition sequences are determined by computing a plurality of values of peaks of short correlations in baseband between the reference patterns of the possible acquisition sequences expected in the reference time slot and the signals contained in time slots for which the use of the reference patterns expected in the reference time slot is possible by virtue of the graph $\{u; F_{SMART}(u)\}$, and by selecting, as detected acquisition sequences, the acquisition sequences for each of which the sum of the squares of the moduli of the correlation values corresponding to one and the same reference pattern has a value higher than or equal to a preset second short-correlation threshold.

**21.** The transmitting method according to claim 19 or claim 20, wherein

- the detection by short correlation of the one or more acquisition sequences in the reference time slot is performed during the conventional decoding process of the CRDSA protocol, shortly before it fails and is suspended, or in an intermediate substep of detection by short correlation, interposed between substeps (342) and (344) of the sixth step (326); and
- the detection by short correlation of the detected and chosen sequence in the remaining time slots of the time frame being processed is performed during the conventional decoding process of the CRDSA protocol, shortly before it fails and is suspended, or in an intermediate substep of detection by short correlation, interposed between substeps (344) and (346) of the sixth step (326).

**22.** The transmitting method according to any one of claims 19 to 21, wherein the sixth step (326) further comprises a substep (358) of estimating frequency, delay, phase and amplitude parameters of each located replica, used to compute the sum signal in baseband, the estimating substep (358) being executed after the substep (348) of identifying a time slot having only a single replica associated with the chosen acquisition sequence.

**23.** A communication system for transmitting data packets through a random-access transmission channel shared by a plurality of terminals, comprising:

- a receiving station (6); and
- a plurality (8) of at least two user terminals (10, 12, 14) that are actively connected to the receiving station (6), and
- a random-access transmission channel (4) for transmission from the plurality (8) of user terminals (10, 12, 14) to the receiving station (6), using a time-diverse random-access protocol with resolution of inter-packet conflict;

the communication system being **characterised in that**:

- the receiving station is configured to determine and/or store, in a preliminary first step, a function F for assigning and distributing transmission resources F(u) shared by the plurality of user terminals u connected to the receiving station (6), which function is defined by a graph $\{(u, F(u)\}$, in which u designates an identification and travel index of the user terminals of the plurality (8) and the transmission resource F(u) associated with a user terminal u includes temporal positions of an integer number $N_R$, higher than or equal to 2, of replicas of a packet to be sent by the terminal u, selected from the ranks of time slots of a send time frame, and an acquisition sequence to be inserted in each of the $N_R$ replicas, selected from a family of quasi-orthogonal pseudo-random sequences; and
- each connected user terminal u is configured, in a first preliminary step, to receive or generate the associated component of the graph $\{(u, F(u)\}$; then, in a second step, to randomly generate $N_R$ replicas of a packet to be transmitted in the time slots of the send frame having the temporal positions assigned by the graph component of said terminal and in which is inserted the acquisition binary sequence assigned by the graph component of said terminal; and

- the receiving station (6) is configured, in a third step of decoding received packets, to exploit the graph {(u, F(u)} of the assigning and distributing function to combine the signals having one and the same acquisition signal in the $N_R$ possible positions of replicas of a given packet.

24. The communication system according to claim 23, wherein the function F, designated by $F_{PSR}$ according to a first embodiment, is a pseudo-random deterministic function for assigning and distributing the position vectors of the $N_R$ replicas of the packets within the time frame and of the acquisition sequences associated with the packets and each of the replicas thereof that depend on the user terminals of the plurality (8) via an input seed of the function $F_{PSR}$ which depends, in a representative way, on the identifier of each terminal, the distribution of the vectors of the positions of the $N_R$ replicas and of the acquisition sequences of the distributing function $F_{PSR}$ having a distribution profile that is substantially uniform over the set of all the possible vectors of positions of $N_R$ replicas and of all the possible acquisition sequences when the number of user terminals is sufficiently high.

25. The communication system according to claim 23, wherein the function F for assigning and distributing resources, which is designated by $F_{SMART}$ according to a second embodiment, is a "smart" deterministic function for assigning and distributing position vectors of the $N_R$ replicas within each frame among the set of all the possible vectors of positions of $N_R$ replicas in all of the time slots of the frame and of the acquisition sequences associated with the various sent replicas among all the possible acquisition sequences, determined so as to minimise, or even decrease to zero, the number of possible data loops in which the connected user terminals of the plurality use the same replica positions.

FIG.1

EP 3 788 832 B1

32

$N_{seq\text{-}acquisition}$

$S_0$ $S_1$ $S_2$ $S_3$ $S_4$ $S_{N_s\text{-}5}$ $S_{N_s\text{-}4}$ $S_{N_s\text{-}3}$ $S_{N_s\text{-}2}$ $S_{N_s\text{-}1}$

$T_S$

$N_{guard}$ $N_{pay}$ 42

42

$T_F = N_S\, T_S$

FIG.2

102

106

108

110

116    118

114

112

104

122

132

130    134    124

136

138

140

126

FIG.3

FIG.4

EP 3 788 832 B1

u $\longrightarrow$ Graine $\xrightarrow{Gr(u)}$

Nombre de tranches temporelles $\xrightarrow{N_S}$

Nombre de préambules $\xrightarrow{N_u}$

154

$F_{PSR}$

$\longrightarrow$ Position de la 1$^{ère}$ réplique: $P_{s1}(u)$

$\longrightarrow$ Position de la 2$^{ème}$ réplique: $P_{s2}(u)$

$\longrightarrow$ Le préambule à utiliser: $P(u)$

## FIG.5A

u = 1 à $N_u$ $\rightarrow$ l'ensemble des graines $\xrightarrow{\{Gr(u)\}_u}$

$N_s$: Nombre de tranches temporelles $\xrightarrow{N_S}$

Nombre de préambules $\xrightarrow{N_P}$

156

$F_{PSR}$

| Graines Gr(u) | 1$^{ère}$ réplique | 2ème réplique | Préambule | μ |
|---|---|---|---|---|
| Gr(1) | $P_{s1}(1)$ | $P_{s2}(1)$ | Pr(1) | 1 |
| Gr(2) | $P_{s1}(2)$ | $P_{s2}(2)$ | Pr(2) | 2 |
| Gr(3) | $P_{s1}(3)$ | $P_{s2}(3)$ | Pr(3) | 3 |
| ... | ... | ... | ... | ... |
| ... | ... | ... | ... | ... |
| Gr($N_u$) | $P_{s1}(N_u)$ | $P_{s2}(N_u)$ | Pr($N_u$) | $N_u$ |

## FIG.5B

202

206

208

222

240

224

226

242

244

246

248

250

258

252

254

256

FIG.6

FIG.7A

FIG.7B

FIG.7C

Nombre de corrélations de localisation – 10 tranches temporelles – 2 répliques

FIG.8

$E_{1,1}$

|  | $g_0$ | $g_1$ | $g_2$ | $g_3$ |
|---|---|---|---|---|
|  | $U_1$ 0 4 | $U_5$ 0 5 | $U_9$ 0 6 | $U_{13}$ 0 7 |
| Niveau | $U_2$ 1 5 | $U_6$ 1 6 | $U_{10}$ 1 7 | $U_{14}$ 1 4 |
| i = 1 | $U_3$ 2 6 | $U_7$ 2 7 | $U_{11}$ 2 4 | $U_{15}$ 2 5 |
|  | $U_4$ 3 7 | $U_8$ 3 4 | $U_{12}$ 3 5 | $U_{16}$ 3 6 |
|  | $G_{1,0}$ | $G_{1,1}$ | $G_{1,2}$ | $G_{1,3}$ |

## FIG.9A

$E_{2,1}$                    $E_{2,2}$

| Niveau | $g_0$ | $g_1$ | $g_2$ | $g_3$ |
|---|---|---|---|---|
| i = 2 | $U_{17}$ 0 2 | $U_{19}$ 0 3 | $U_{21}$ 4 6 | $U_{23}$ 4 7 |
|  | $U_{18}$ 1 3 | $U_{20}$ 1 2 | $U_{22}$ 5 7 | $U_{24}$ 5 6 |
|  | $G_{2,0}$ | $G_{2,1}$ | $G_{2,2}$ | $G_{2,3}$ |

## FIG.9B

$E_{3,1}$        $E_{3,2}$        $E_{3,3}$        $E_{3,4}$

| Niveau | | | | |
|---|---|---|---|---|
| i = 3 | $U_{25}$ 0 1 | $U_{26}$ 2 3 | $U_{27}$ 4 5 | $U_{28}$ 6 7 |
|  | $g_0$ | $g_1$ | $g_2$ | $g_3$ |
|  | $G_{3,0}$ | $G_{3,1}$ | $G_{3,2}$ | $G_{3,3}$ |

## FIG.9C

EP 3 788 832 B1

| | S0 | S1 | S2 | S3 | S4 | S5 | S6 | S7 |
|---|---|---|---|---|---|---|---|---|
| Niveau 1 { | $U_1$ | $U_2$ | $U_3$ | $U_4$ | $U_1$ | $U_2$ | $U_3$ | $U_4$ |
| Niveau 2 { | $U_{17}$ | $U_{18}$ | $U_{17}$ | $U_{18}$ | | | | |
| Niveau 3 { | $U_{25}$ | $U_{25}$ | | | | | | |

▨ : $g_0$

**FIG.10A**

| Trame | S0 | S1 | S2 | S3 | S4 | S5 | S6 | S7 |
|---|---|---|---|---|---|---|---|---|
| Niveau i = 1 { | $U_1$ | $U_2$ | $U_3$ | $U_4$ | $U_1$ | $U_2$ | $U_3$ | $U_4$ |
| $N_E = 1$ | $U_5$ | $U_6$ | $U_7$ | $U_8$ | $U_8$ | $U_5$ | $U_6$ | $U_7$ |
| | $U_9$ | $U_{10}$ | $U_{11}$ | $U_{12}$ | $U_{11}$ | $U_{12}$ | $U_9$ | $U_{10}$ |
| | $U_{13}$ | $U_{14}$ | $U_{15}$ | $U_{16}$ | $U_{14}$ | $U_{15}$ | $U_{16}$ | $U_{13}$ |
| Niveau i = 2 { | $U_{17}$ | $U_{18}$ | $U_{17}$ | $U_{18}$ | $U_{21}$ | $U_{22}$ | $U_{21}$ | $U_{22}$ |
| $N_E = 2$ | $U_{19}$ | $U_{20}$ | $U_{20}$ | $U_{19}$ | $U_{23}$ | $U_{24}$ | $U_{24}$ | $U_{23}$ |
| Niveau i = 3 { | $U_{25}$ | $U_{25}$ | $U_{26}$ | $U_{26}$ | $U_{26}$ | $U_{27}$ | $U_{28}$ | $U_{28}$ |
| $N_E = 4$ | $E_{3,1}$ | | $E_{3,2}$ | | $E_{3,3}$ | | $E_{3,4}$ | |
| | $E_{2,1}$ | | | | $E_{2,2}$ | | | |
| | $E_{1,1}$ | | | | | | | |

▨ : $g_0$     ▧ : $g_1$     ▦ : $g_2$     ▥ : $g_3$

**FIG.10B**

$E_{2,1}$        $E_{2,2}$

| $U_{17}$ | $U_{18}$ | $U_{17}$ | $U_{18}$ | $U_{21}$ | $U_{22}$ | $U_{21}$ | $U_{22}$ |
|---|---|---|---|---|---|---|---|
| $U_{19}$ | $U_{20}$ | $U_{20v}$ | $U_{19}$ | $U_{23}$ | $U_{24}$ | $U_{24}$ | $U_{23}$ |
| $U_{25}$ | $U_{25}$ | $U_{26}$ | $U_{27}$ | $U_{27}$ | $U_{27}$ | $U_{28}$ | $U_{28}$ |

**FIG.10C**

$E_{3,1}$     $E_{3,2}$     $E_{3,3}$     $E_{3,4}$

| $U_{25}$ | $U_{25}$ | $U_{26}$ | $U_{26}$ | $U_{27}$ | $U_{27}$ | $U_{28}$ | $U_{28}$ |
|---|---|---|---|---|---|---|---|

**FIG.10D**

302

306

308

322

340

324

326

342

344

346

348

358

352

354

356

**FIG.11**

FIG.12

Charge du réseau G (bits/symbole)

FIG.13

**EP 3 788 832 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1686746 B1

- EP 3028396 B1

**Littérature non-brevet citée dans la description**

- **BUI HUYEN-CHI et al.** A Multi-Replica Decoding Technique for Contention Resolution Diversity Slotted Aloha. *82ème Vehicular Technology Conférence de l'IEEE,* 2015